# EUROPEAN PATENT APPLICATION

(11) **EP 4 556 154 A1**
(43) Date of publication of application: **21.05.2025**
(21) Application number: 22951145.6
(22) Date of filing: 14.07.2022
(51) Int. Cl.: B23K 26/342, B23K 26/082, B23K 26/34

(54) **MODELING SYSTEM**

(71) Applicant: NIKON CORPORATION, Tokyo 140-8601 (JP)
(72) Inventor: FUNATSU, Takayuki, Tokyo 140-8601 (JP); MOMOSE, Atsumi, Tokyo 140-8601 (JP); MURATA, Hiromichi, Tokyo 140-8601 (JP); NAKATA, Kei, Tokyo 140-8601 (JP)
(74) Representative: Hoffmann Eitle
(86) International application number: PCT/JP2022/027701
(87) International publication number: WO 2024/013931

(57) **Abstract**

A build system includes: a build apparatus for building a build object on an object by irradiating a surface of the object with a build beam and supplying a build material to a melt pool that is formed by the build beam; and a control apparatus for controlling the build apparatus, the control apparatus controls the build apparatus so that an irradiation position of the build beam on the surface of the object periodically moves in a build unit area that is set on the surface of the object and the build unit area moves on the surface of the object based on path information that indicates a movement trajectory of the build unit area, and the control apparatus changes, based on the path information, a rotational amount of the build unit area around a rotational axis that intersects the surface of the object.

## Description

### Technical Field

The present invention relates to a technical field of a build system that is configured to build a build object, for example.

### Background Art

A Patent literature 1 discloses one example of a build system that build a build object. One technical problem of this build system is to appropriately build the build object.

### Citation List

### Patent Literature

Patent Literature 1: US2016/0311059A1

### Summary of Invention

A first aspect provides a build system including: a build apparatus that is configured to build a build object on an object by irradiating a surface of the object with a build beam and supplying a build material to a melt pool that is formed on the object by the build beam; and a control apparatus that is configured to control the build apparatus, wherein the control apparatus controls the build apparatus so that an irradiation position of the build beam on the surface of the object periodically moves in a build unit area that is set on the surface of the object and the build unit area moves on the surface of the object based on path information that indicates a movement trajectory of the build unit area, and the control apparatus changes, based on the path information, a rotational amount of the build unit area around a rotational axis that intersects the surface of the object.

A second aspect provides a build system including: a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and a control apparatus that is configured to control the build apparatus, wherein the irradiation optical system includes a deflection optical system that is configured to move, on the surface of the object, an irradiation position of the build beam on the surface of the object by deflecting the build beam, the position change apparatus is configured to move the irradiation position on the surface of the object by changing the positional relationship between the object and the irradiation optical system, the control apparatus controls the position change apparatus so that the build object is formed on the object along a movement trajectory and controls the deflection optical system so that the irradiation position periodically moves on the surface of the object along a scanning direction that intersects the movement trajectory based on path information, and the control apparatus controls the deflection optical system based on the path information to change the scanning direction around an rotational axis that intersects the surface of the object.

A third aspect provides a build system including: a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and a control apparatus that is configured to control the build apparatus, wherein the irradiation optical system includes: a terminal optical system including an emitting surface; and a deflection optical system that is configured to move at least one of an emitting position and an emitting angle from / at which the terminal optical element emits the build beam by deflecting the build beam, the position change apparatus is configured to move the irradiation position on the surface of the object by changing the positional relationship between the object and the irradiation optical system, the control apparatus controls the position change apparatus based on path information so that the build object is formed on the object along a movement trajectory and controls the deflection optical system to change a movement direction, along which the emitting position periodically moves on the emitting surface, based on the path information.

A fourth aspect provides a build system including: a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and a control apparatus that is configured to control the build apparatus, wherein the irradiation optical system includes a deflection optical system that is configured to move an irradiation position of the build beam by deflecting the build beam, the position change apparatus is configured to move the irradiation position by changing the positional relationship between the object and the irradiation optical system, the control apparatus controls the position change apparatus so that the build object is formed on the object along a movement trajectory and controls the deflection optical system so that the irradiation position periodically moves on the surface of the object along a scanning direction that intersects the movement trajectory based on path information, and the control apparatus controls the position change apparatus so that the irradiation position moves along the movement trajectory based on the path information and controls a change of a movement of a direction along which the irradiation position intersects the movement trajectory based on the path information.

A fifth aspect provides a build system including: a build apparatus that includes: an irradiation optical system that is configured to irradiate a surface of an object with a build beam; and a position change apparatus that is configured to change an emitting position from which a terminal optical element of the irradiation optical system emits the build beam, and that is configured to build a build object on the object by supplying a build material to a melt pool formed on the object by the build beam; and a control apparatus that is configured to control the build apparatus, wherein the irradiation optical system includes a deflection optical system, the deflection optical system is configured to change an emitting angle of the build beam, the position change apparatus is configured to move the irradiation position by changing the positional relationship between the object and the irradiation optical system, the control apparatus controls the position change apparatus based on the path information so that the build object is formed on the object along a movement trajectory and controls a periodic change of the emitting angle based on the path information.

A sixth aspect provides a build method for building a build object by using a build apparatus that is configured to build the build object on an object by irradiating a surface of the object with a build beam and supplying a build material to a melt pool that is formed on the object by the build beam, wherein the build method includes: controlling the build apparatus so that an irradiation position of the build beam on the surface of the object periodically moves in a build unit area that is set on the surface of the object and the build unit area moves on the surface of the object based on path information that indicates a movement trajectory of the build unit area; and changing, based on the path information, a rotational amount of the build unit area around a rotational axis that intersects the surface of the object.

A seventh aspect provides a build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam, wherein the irradiation optical system includes a deflection optical system that is configured to move, on the surface of the object, an irradiation position of the build beam on the surface of the object by deflecting the build beam, the position change apparatus is configured to move the irradiation position on the surface of the object by changing the positional relationship between the object and the irradiation optical system, the build method includes: controlling the position change apparatus so that the build object is formed on the object along a movement trajectory and controlling the deflection optical system so that the irradiation position periodically moves on the surface of the object along a scanning direction that intersects the movement trajectory based on path information; and controlling the deflection optical system based on the path information to change the scanning direction around an rotational axis that intersects the surface of the object.

An eighth aspect provides a build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam, wherein the irradiation optical system includes: a terminal optical system including an emitting surface; and a deflection optical system that is configured to move at least one of an emitting position and an emitting angle from / at which the terminal optical element emits the build beam by deflecting the build beam, the position change apparatus is configured to move the irradiation position on the surface of the object by changing the positional relationship between the object and the irradiation optical system, the build method includes: controls the position change apparatus based on path information so that the build object is formed on the object along a movement trajectory; and controlling the deflection optical system to change a movement direction, along which the emitting position periodically moves on the emitting surface, based on the path information.

A ninth aspect provides a build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam, wherein the irradiation optical system includes a deflection optical system that is configured to move an irradiation position of the build beam by deflecting the build beam, the position change apparatus is configured to move the irradiation position by changing the positional relationship between the object and the irradiation optical system, the build method includes: controlling the position change apparatus so that the build object is formed on the object along a movement trajectory and controlling the deflection optical system so that the irradiation position periodically moves on the surface of the object along a scanning direction that intersects the movement trajectory based on path information; and controlling the position change apparatus so that the irradiation position moves along the movement trajectory based on the path information and controlling a change of a movement of a direction along which the irradiation position intersects the movement trajectory based on the path information.

A tenth aspect provides a build method for building a build object by using a build apparatus that includes: an irradiation optical system that is configured to irradiate a surface of an object with a build beam; and a position change apparatus that is configured to change an emitting position from which a terminal optical element of the irradiation optical system emits the build beam, and that is configured to build the build object on the object by supplying a build material to a melt pool formed on the object by the build beam, wherein the irradiation optical system includes a deflection optical system, the deflection optical system is configured to change an emitting angle of the build beam, the position change apparatus is configured to move the irradiation position by changing the positional relationship between the object and the irradiation optical system, the build method includes: controlling the position change apparatus based on the path information so that the build object is formed on the object along a movement trajectory; and controlling a periodic change of the emitting angle based on the path information.

An operation and another advantage of the present invention will be apparent from an example embodiment described below.

### Brief Description of Drawings

[FIG. 1] FIG. 1 is a cross-sectional view that illustrates a configuration of a build system in a present example embodiment.
[FIG. 2] FIG. 2 is a block diagram that illustrates a configuration of the build system in the present example embodiment.
[FIG. 3] FIG. 3 is a cross-sectional view that illustrates a configuration of an irradiation optical system.
[FIG. 4] FIG. 4 is a cross-sectional view that illustrates a build light emitted from a Galvano mirror.
[FIG. 5] FIG. 5(a) is a plan view that illustrates a scanning trajectory of a target irradiation area in a build unit area, and FIG. 5(b) is a plan view that illustrates a movement trajectory of the target irradiation area on a build surface.
[FIG. 6] Each of FIG. 6(a) and FIG. 6(b) is a plan view that illustrates a scanning trajectory of the target irradiation area in the build unit area, and FIG. 6(c) is a plan view that illustrates a movement trajectory of the target irradiation area on the build surface.
[FIG. 7] Each of FIG. 7(a) to FIG. 7(e) is a cross-sectional view that illustrates an aspect in which a certain area on a workpiece is irradiated with the build light and a build material is supplied thereto.
[FIG. 8] FIG. 8 schematically illustrates a target movement trajectory (a processing path) that is divided into a plurality of partial paths.
[FIG. 9] FIG. 9 illustrates a data structure of path information including partial path information.
[FIG. 10] FIG. 10 schematically illustrates the partial path.
[FIG. 11] FIG. 11(a) is a plan view that illustrate the target movement trajectory of the build unit area, and FIG. 11(b) is a plan view that illustrates a liner build object that is built on the build surface in a case where the build unit area moves along the target movement trajectory illustrated in FIG. 11(a).
[FIG. 12] FIG. 12 schematically illustrates the partial path.
[FIG. 13] Each of FIG. 13(a) to FIG. 13(c) is a cross-sectional view that illustrates a process for building a three-dimensional structural object.
[FIG. 14] Each of FIG. 14(a) and FIG. 14(b) is a plan view that illustrates one example of the build unit area rotating by a rotation control operation.

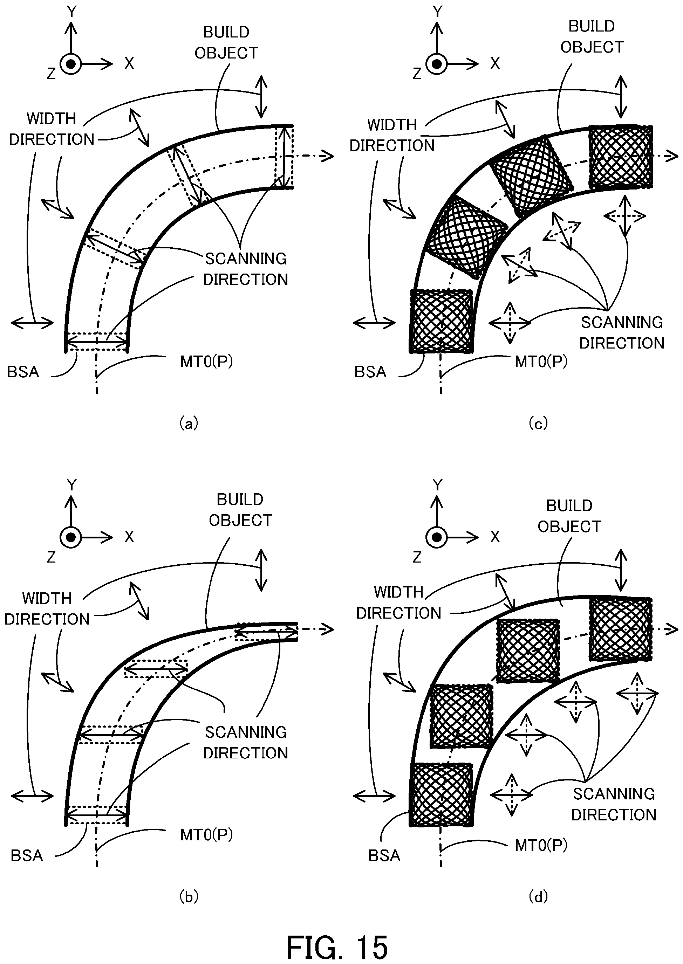

[FIG. 15] FIG. 15(a) illustrates the build unit area and the build object in a case where the rotation control operation for rotating the build unit area, in which the target irradiation area periodically moves along a single scanning direction, is performed, FIG. 15(b) illustrates the build unit area and the build object in a case where the rotation control operation for rotating the build unit area, in which the target irradiation area periodically moves along the single scanning direction, is not performed, FIG. 15(c) illustrates the build unit area and the build object in a case where the rotation control operation for rotating the build unit area, in which the target irradiation area periodically moves along a plurality of scanning directions, is performed, and FIG. 15(d) illustrates the build unit area and the build object in a case where the rotation control operation for rotating the build unit area, in which the target irradiation area periodically moves along the plurality of scanning directions, is not performed.
[FIG. 16] FIG. 16 is a flowchart that illustrates a flow of a first operation control operation.
[FIG. 17] FIG. 17 illustrates the build unit area rotated by the rotation control operation in a situation where the build unit area moves along the partial path whose path angle is 0 degree, and then moves along the partial path whose path angle is 30 degree.
[FIG. 18] FIG. 18 is a flowchart that illustrates a flow of a second operation control operation.
[FIG. 19] FIG. 19 is a flowchart that illustrates a flow of a third operation control operation.
[FIG. 20] FIG. 20 illustrates the build unit area rotated by the third rotation control operation in a situation where the build unit area moves along the plurality of partial paths.
[FIG. 21] FIG. 21 is a flowchart that illustrates a flow of a irradiation condition change operation.
[FIG. 22] FIG. 22 illustrates one example of a registration GUI (Graphical User Interface)
[FIG. 23] FIG. 23 illustrates one example of a condition input GUI (Graphical User Interface)
[FIG. 24] FIG. 24 illustrates a plurality of build condition patterns into which a build condition is classified.
[FIG. 25] Each of FIG. 25(a) and FIG. 25(b) illustrates the build unit area rotated by the first rotation control operation.

### Description of Example embodiments

Next, with reference to drawings, an example embodiment of a build system will be described. In the below-described description, the example embodiment of the build system will be described by using a build system SYS that is configured to build a build object on a workpiece W that is one example of an object. Especially, in the below-described description, the example embodiment of the build system will be described by using the build system SYS that is configured to build the build object on the workpiece W by performing an additive manufacturing based on a Laser Metal Deposition (LMD). The additive manufacturing based on the Laser Metal Deposition is an additive manufacturing for building the build object that is integrated with the workpiece W or separatable from the workpiece W by melting a build material M supplied to the workpiece W with build light EL (namely, an energy beam in a form of light).

Moreover, in the below-described description, a positional relationship of various components included in the build system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Build System SYS

### (1-1) Entire Configuration of Build System SYS

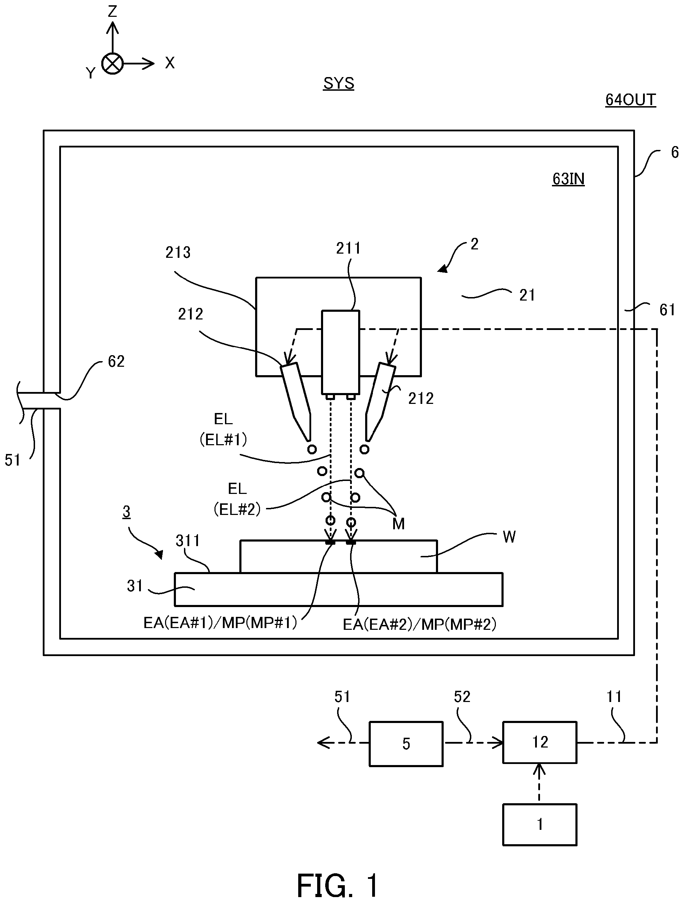

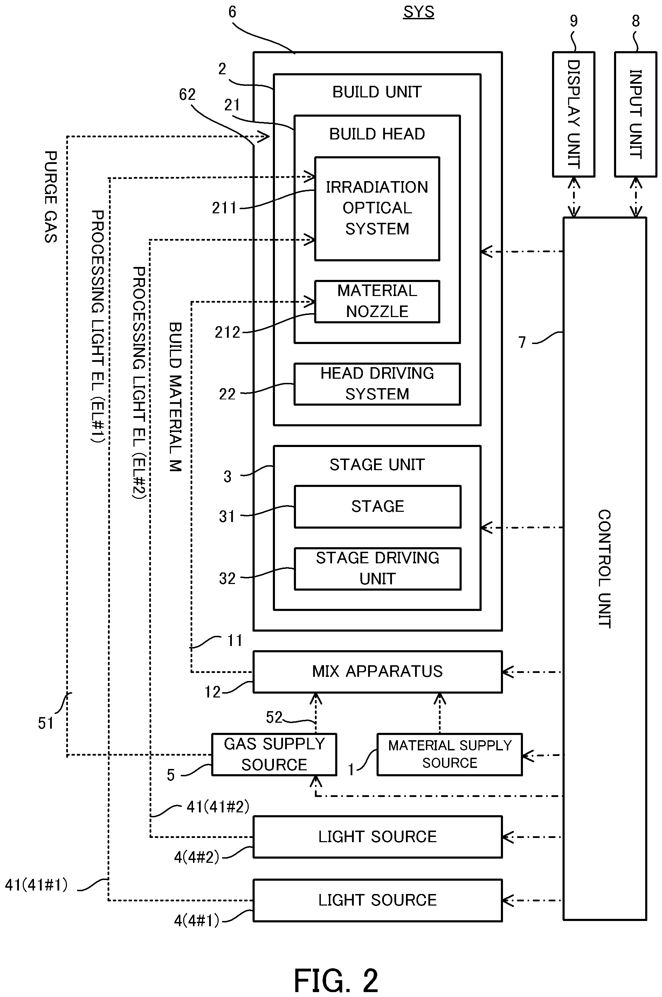

First, with reference to FIG. 1 to FIG. 2, a configuration of the build system SYS in the present example embodiment will be described. FIG. 1 is a cross-sectional view that schematically illustrates the configuration of the build system SYS in the present example embodiment. FIG. 2 is a system configuration diagram that illustrates a system configuration of the build system SYS in the present example embodiment.

The build system SYS is configured to perform the additive manufacturing on the workpiece W. The build system SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the build system SYS. For example, the build system SYS is configured to build a three-dimensional structural object ST (namely, a three-dimensional object having a size in each of three-dimensional directions, a solid object, in other words, an object having a size in the X-axis direction, the Y-axis direction, and the Z-axis direction) as one example of the build object.

In a case where the workpiece W is a below-described stage 31, the build system SYS is configured to perform the additive manufacturing on the stage 31. In a case where the workpiece W is a placed object that is an object placed on the stage 31, the build system SYS is configured to perform the additive manufacturing on the placed object. The placed object placed on the stage 31 may be another three-dimensional structural object ST built by the build system SYS (namely, an existing structural object). Note that FIG. 1 illustrates an example in which the workpiece W is the existing structural object placed on the stage 31. Moreover, in the below-described description, the example in which the workpiece W is the existing structural object placed on the stage 31 will be described.

The workpiece W may be an item that needs to be repaired having a missing part. In this case, the build system SYS may perform a repair processing for repairing the item that needs to be repaired by performing the additive manufacturing for building the build object for filling in the missing part. Namely, the additive manufacturing performed by the build system SYS may include the additive manufacturing for adding, to the workpiece W, the build object for filling in the missing part.

As described above, the build system SYS is configured to perform the additive manufacturing based on the Laser Metal Deposition. Namely, it can be said that the build system SYS is a 3D printer that builds an object by using an Additive Layer Manufacturing technique. Note that the Additive Layer Manufacturing technique may be referred to as a Rapid Prototyping, a Rapid Manufacturing, or an Additive Manufacturing. Note that the Laser Metal Deposition (LMD) may be referred to as a DED (Directed Energy Deposition).

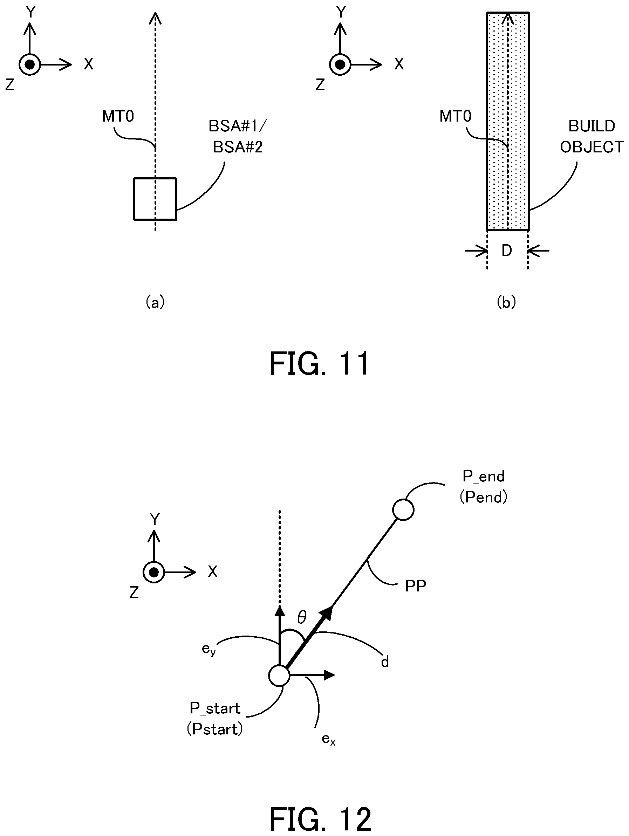

A build system SYS that uses the Additive Layer Manufacturing technique builds the three-dimensional structural object ST in which a plurality of structural layers SL (see FIG. 12 below) are stacked by forming the plurality of structural layers SL in sequence. In this case, the build system SYS first sets a surface of the workpiece W to be a build surface MS on which the build object is actually built, and builds a first structural layer SL on the build surface MS. Then, the build system SYS sets a surface of the first structural layer SL to be a new build surface MS, and builds a second structural layer SL on the build surface MS. Then, the build system SYS repeats the same operation to build the three-dimensional structural object ST in which the plurality of structural layers SL are stacked.

The build system SYS performs the additive manufacturing by processing the build material M with the build light EL that is an energy beam. The build material M is a material that is molten by an irradiation with the build light EL having a predetermined intensity or more intensity. At least one of a metal material and a resin material is usable as the build material M, for example. At least one of a material including copper, a material including tungsten, and a material including stainless steel is one example of the metal material. However, another material that is different from the metal material and the resin material may be used as the build material M. The build material M is a powder-like material. Namely, the build material M is a powdery material. However, the build material M may not be the powdery material. For example, at least one of a wired-like build material and a gas-like build material may be used as the build material M.

The workpiece W may be also an object including a material that is molten by an irradiation with the build light EL having a predetermined intensity or more intensity. The material of the workpiece W may be the same as or may be different from the build material M. At least one of a metal material and a resin material is usable as the material of the workpiece W, for example. At least one of a material including copper, a material including tungsten, and a material including stainless steel is one example of the metal material. However, another material that is different from the metal material and the resin material may be used as the material of the workpiece W.

In order to perform the additive manufacturing, the build system SYS includes a material supply source 1, a build unit 2, a stage unit 3, a light source 4, a gas supply source 5, and a control unit 7 as illustrated in FIG. 1 to FIG. 2. The build unit 2 and the stage unit 3 may be contained in a chamber space 63IN in a housing 6. In this case, the build system SYS may perform the additive manufacturing in the chamber space 63IN. Incidentally, the build unit 2 may be referred to as a build apparatus. An apparatus including the build unit 2 and the stage unit 3 may be referred to as a build apparatus. Moreover, the build system SYS may not include at least one of the stage unit 3 and the housing 6.

The material supply source 1 is configured to supply the build material M to the build unit 2. The material supply source 1 supplies, to the build unit 2, the build material M the amount of which is necessary for performing the additive manufacturing per unit time by supplying the build material M the amount of which is based on the necessary amount.

The build unit 2 builds the build object by processing the build material M supplied from the material supply source 1. In order to build the build object, the build unit 2 includes a build head 21, and a head driving system 22. Furthermore, the build head 21 includes an irradiation optical system 211, and a plurality of material nozzles 212. However, the build head 21 may include a plurality of irradiation optical systems 211. The build head 21 may include a single material nozzle 212.

The irradiation optical system 211 is an optical system for emitting the build light EL. Specifically, the irradiation optical system 211 is optically connected to the light source 4 that emits (generates) the build light EL through a light transmitting member 41. At least one of an optical fiber and a light pipe is one example of the light transmitting member 41.

In the example illustrated in FIG. 1 to FIG. 2, the build system SYS includes two light sources 4 (specifically, light sources 4#1 and 4#2), and the irradiation optical system 211 is optically connected to the light sources 4#1 and 4#2 through the light transmitting members 41#1 and 41#2, respectively. The irradiation optical systems 211 emits both of the build light EL transmitted from the light source 4#1 through the light transmitting member 41#1 and the build light EL transmitted from the light source 4#2 through the light transmitting member 41#2. Incidentally, in the below-described description, in a case where it is necessary to distinguish the two build lights EL emitted from the two irradiation optical systems 211, the build light EL generated by the light source 4#1 is referred to as "build light EL#1", and the build light EL generated by the light source 4#2 is referred to as "build light EL#2", as necessary. On the other hand, in a case where there is no specific notation, the "build light EL" may mean at least one of the build lights EL#1 and EL#2.

However, the build system SYS may include a single light source 4 instead of the plurality of light sources 4. The irradiation optical system 211 may emit single build light EL instead of emitting the plurality of build lights EL.

The irradiation optical system 211 emits the build lights EL in a downward direction (namely, toward a -Z side) from the irradiation optical system 211. The stage 31 is positioned below the irradiation optical system 211. In a case where the workpiece W is placed on the stage 31, the irradiation optical system 211 irradiates the build surface MS with the emitted build lights EL. Specifically, the irradiation optical system 211 is configured to irradiate a target irradiation area (a target irradiation position) EA, which is set on the build surface MS as an area that is irradiated with the build lights EL (typically, in which the lights are condensed), with the build lights EL. Incidentally, in the below-described description, in a case where it is necessary to distinguish two target irradiation areas EA that are irradiated with the two build lights EL by the irradiation optical system 211, respectively, the target irradiation area EA that is irradiated with the build light EL#1 by the irradiation optical system 211 is referred to as a "target irradiation area EA#1" and the target irradiation area EA that is irradiated with the build light EL#2 by the irradiation optical system 211 is referred to as a "target irradiation area EA#2", as necessary. Furthermore, a state of the irradiation optical system 211 is switchable between a state where the target irradiation areas EA are irradiated with the build lights EL and a state where the target irradiation areas EA are not irradiated with the build lights EL under the control of the control unit 7. Note that a direction of the build lights EL emitted from the irradiation optical system 211 is not limited to a direct downward direction (namely, coincident with the -Z-axis direction), and may be a direction that is inclined with respect to the Z-axis by a predetermined angle, for example. Namely, a third optical system 216 described below (alternatively, a fθ lens 2162 described below) is not limited to an optical system that is telecentric on the object side, but may be an optical system that is non-telecentric on the object side.

The irradiation optical system 211 may form a melt pool MP on the build surface MS by irradiating the build surface MS with the build light EL. For example, the irradiation optical system 211 may form a melt pool MP#1 on the build surface MS by irradiating the build surface MS with the build light EL#1. For example, the irradiation optical system 211 may form a melt pool MP#2 on the build surface MS by irradiating the build surface MS with the build light EL#2. The melt pool MP#1 and the melt pool MP#2 may be integrated. In a case where the melt pool MP#1 and the melt pool MP#2 are integrated, it may be considered that a single melt pool MP is formed on the build surface MS by the irradiation with the build lights EL#1 and EL#2. Alternatively, the melt pool MP#1 and the melt pool MP#2 may be separated from each other. However, the melt pool MP#1 may not be formed on the build surface MS by the irradiation with the build light EL#1. The melt pool MP#2 may not be formed on the build surface MS by the irradiation with the build light EL#2.

The material nozzle 212 supplies (for example, injects, jets, blows out or sprays) the build material M. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 5 is used as the gas for feeding, for example. However, gas supplied from a gas supply source that is different from the gas supply source 5 may be used as the gas for feeding. Note that the material nozzle 212 is illustrated to have a tube-like shape in FIG. 1, however, a shape of the material nozzle 212 is not limited to this shape. The material nozzle 212 supplies the build material M in a downward direction (namely, toward the -Z side) from the material nozzle 212. The stage 31 is positioned below the material nozzle 212. In a case where the workpiece W is placed on the stage 31, the material nozzle 212 supplies the build material M toward the build surface MS. Note that a supply direction of the build material M supplied from the material nozzle 212 is a direction that is inclined with respect to the Z-axis by a predetermined angle (as one example, an acute angle), however, it may be the -Z-axis direction (namely, a direct downward direction).

In the present example embodiment, the material nozzle 212 supplies the build material M to a position that is irradiated with at least one of the build lights EL#1 and EL#2 (namely, at least one of the target irradiation areas EA#1 and EA#2). Therefore, the material nozzle 212 and the irradiation optical system 211#1 and 211#2 are aligned so that a target supply area MA, which is set on the build surface MS as an area to which the material nozzle 212 supplies the build material M, overlaps with at least one of the target irradiation areas EA#1 and EA#2 at least partially. A size of the target supply area MA may be larger than, may be smaller than, or may be the same as a size of at least one of the target irradiation areas EA#1 and EA#2.

The material nozzle 212 may supply the build material M to the melt pool MP. Specifically, the material nozzle 212 may supply the build material M to at least one of the melt pool MP#1 and the melt pool MP#2. However, the material nozzle 212 may not supply the build material M to the melt pool MP. For example, the build system SYS may melt the build material M by the build light EL emitted from the irradiation optical system 211 before the build material M from the material nozzle 212 reaches the workpiece W, and make the molten build material M adhere to the workpiece W.

The irradiation optical system 211 and the material nozzle 212 may be contained in a head housing 213 of the build head 21. The head housing 213 is a housing in which a containing space for containing the irradiation optical system 211 and the material nozzle 212 is formed. In this case, the irradiation optical system 211 and the material nozzles 212 may be contained in the housing space in the head housing 213.

The head driving system 22 moves the build head 21 under the control of the control unit 7. Namely, the head driving system 22 moves the irradiation optical system 211 and the material nozzle 212 under the control of the control unit 7. The head driving system 22 moves the build head 21 along at least one of the X-axis direction, the Y-axis direction, the Z-axis direction, the θX direction, the θY direction, and the θZ direction, for example. Incidentally, an operation for moving the build head 21 along at least one of the θX direction, the θY direction, and the θZ direction may be considered to be equivalent to an operation for rotating the build head 21 around at least one of a rotational axis along the X-axis, a rotational axis along the Y-axis, and a rotational axis along the Z-axis.

When the head driving system 22 moves the build head 21, a relative positional relationship between the build head 21 and each of the stage 31 and the workpiece W placed on the stage 31 changes. As a result, a positional relationship between the irradiation optical system 211 of the build head 21 and each of the stage 31 and the workpiece W changes. Therefore, the head driving system 22 may be considered to serve as a position change apparatus that is configured to change the positional relationship between the irradiation optical system 211 and each of the stage 31 and the workpiece W. The head driving system 22 may be considered to serve as a movement apparatus that is configured to relatively move the irradiation optical system 211 and each of the stage 31 and the workpiece W. The head driving system 22 may be considered to serve as a movement apparatus that is configured to move the irradiation optical system 211 relative to each of the stage 31 and the workpiece W. Furthermore, when the positional relationship between the build head 21 and each of the stage 31 and the workpiece W changes, a relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS on which the additive manufacturing is performed). In this case, the head driving system 22 may be considered to move the build head 21 so that each of the target irradiation areas EA#1 and EA#2 and the target supply area MA moves on the build surface MS.

The stage unit 3 includes the stage 31, and a stage driving system 32.

The workpiece W is placed on the stage 31. Specifically, the workpiece W is placed on a workpiece placement surface 311 that is one surface (for example, a surface facing toward the +Z side) of the stage 31. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. Moreover, the workpiece W may be attached to a holding member, and the holding member to which the workpiece W is attached may be placed on the stage 31. The above-described irradiation optical system 211 emits each of the build lights EL#1 and EL#2 in at least a part of a period during which the workpiece W is placed on the stage 31. Furthermore, the above-described material nozzle 212 supplies the build material M in at least a part of the period during which the workpiece W is placed on the stage 31.

The stage driving system 32 moves the stage 31. For example, the stage driving system 32 moves the stage 31 along at least one of the X-axis direction, the Y-axis direction, the Z-axis direction, the θX direction, the θY direction, and the θZ direction. Incidentally, an operation for moving the stage 31 along at least one of the θX direction, the θY direction, and the θZ direction may be considered to be equivalent to an operation for rotating the stage 31 around at least one of a rotational axis along the X-axis (namely, an A-axis), a rotational axis along the Y-axis (namely, a B-axis), and a rotational axis along the Z-axis (namely, a C-axis).

When the stage driving system 32 moves the stage 31, the relative positional relationship between the build head 21 and each of the stage 31 and the workpieces W changes. As a result, the positional relationship between the irradiation optical system 211 of the build head 21 and each of the stage 31 and the workpiece W changes. Therefore, the stage driving system 32 may be considered to serve as a position change apparatus that is configured to change the positional relationship between the irradiation optical system 211 and each of the stage 31 and the workpiece W, as with the head driving system 22. The stage driving system 32 may be considered to serve as a movement apparatus that is configured to relatively move the irradiation optical system 211 and each of the stage 31 and the workpiece W. The stage driving system 32 may be considered to serve as a movement apparatus that is configured to move each of the stage 31 and the workpiece W relative to the irradiation optical system 211. Furthermore, when the positional relationship between the build head 21 and each of the stage 31 and the workpiece W changes, the relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the stage driving system 32 may be considered to move the stage 31 so that each of the target irradiation areas EA#1 and EA#2 and the target supply area MA moves on the build surface MS.

The light source 4 emits at least one of infrared light, visible light, and ultraviolet light as the build light EL, for example. However, other type of light may be used as the build light EL. The build light EL may include a plurality of pulsed lights (namely, a plurality of pulsed beams). The build light EL may be a laser light. In this case, the light source 4 may include a semiconductor laser such as a laser light source (for example, a Laser Diode (LD)). At least one of a fiber laser, a CO₂ laser, a YAG laser, an Excimer laser and the like may be used as the laser light source. However, the build light EL may not be the laser light. The light source 4 may include any light source (for example, at least one of a LED (Light Emitting Diode), a discharge lamp and the like).

As described above, the build system SYS includes the plurality of light sources 4 (specifically, the light sources 4#1 and 4#2). In this case, a characteristic of the build light EL#1 emitted by the light source 4#1 may be the same as a characteristic of the build light EL#2 emitted by the light source 4#2. For example, a wavelength of the build light EL#1 (typically, a peak wavelength that is a wavelength at which an intensity is maximum in a wavelength band of the build light EL#1) may be the same as the wavelength (typically, a peak wavelength) of the build light EL#2. For example, the wavelength band (typically, a range of wavelengths at which the intensity is equal to or higher than a certain value) of the build light EL#1 may be the same as the wavelength band of the build light EL#2. For example, the intensity of the build light EL#1 may be the same as the intensity of the build light EL#2. For example, an absorption rate of the workpiece W (alternatively, an object whose surface is the build surface MS, the same is applied in the below-described description) to the build light EL#1 may be the same as an absorption rate of the workpiece W to the build light EL#2. Especially, the absorption rate of the workpiece W to the peak wavelength of the build light EL#1 may be the same as the absorption rate of the workpiece W to the peak wavelength of the build light EL#2. Alternatively, the characteristic of the build light EL#1 emitted by the light source 4#1 may be different from the characteristic of the build light EL#2 emitted by the light source 4#2. For example, the wavelength (typically, the peak wavelength) of the build light EL#1 may be different from the wavelength (typically, the peak wavelength) of the build light EL#2. For example, the wavelength band of the build light EL#1 may be different from the wavelength band of the build light EL#2. For example, the intensity of the build light EL#1 may be different from the intensity of the build light EL#2. For example, the absorption rate of the workpiece W to the build light EL#1 may be different from the absorption rate of the workpiece W to the build light EL#2. Especially, the absorption rate of the workpiece W to the peak wavelength of the build light EL#1 may be different from the absorption rate of the workpiece W to the peak wavelength of the build light EL#2.

Incidentally, in the present example embodiment, an example in which the build system SYS includes the plurality of light sources 4 is described. However, the build system SYS may not include the plurality of light sources 4. The build system SYS may not include a single light source 4. As one example, the build system may include, as the single light source 4, a light source that emits (supplies) a wide wavelength band or a plurality of wavelengths of light. In this case, the build system SYS may generate the build light EL#1 and the build light EL#2 whose wavelengths are different from each other by performing a wavelength division on the light emitted from this light source.

The gas supply source 5 is a source of the purge gas for purging the chamber space 63IN in the housing 6. The purge gas includes inert gas. At least one of Nitrogen gas and Argon gas is one example of the inert gas. The gas supply source 5 is connected to the chamber space 63IN through a supply port 62 formed in a wall member 61 of the housing 6 and a supply pipe 51 connecting the gas supply source 5 to the supply port 62. The gas supply source 5 supplies the purge gas to the chamber space 63IN through the supply pipe 51 and the supply port 62. As a result, the chamber space 63IN becomes a space purged by the purge gas. The purge gas supplied to the chamber space 63IN may be discharged from a non-illustrated outlet port formed in the wall member 61. Note that the gas supply source 5 may be a tank that stores the inert gas. In a case where the purge gas is the Nitrogen gas, the gas supply source 5 may be a Nitrogen gas generation apparatus that generates the Nitrogen gas by using air as material.

In a case where the build system SYS performs the additive manufacturing not in a sealed space (the chamber space 63IN) but in an open space, the gas supply source 5 may locally purge a space between the irradiation optical system 211 and the workpiece W by supplying the purge gas to this space. Incidentally, even in a case where the build system SYS performs an additive building in the chamber space 63IN, the gas supply source 5 may locally purge a space between the irradiation optical system 211 and the workpiece W by supplying the purge gas to this space.

In a case where the material nozzle 212 supplies the build material M together with the purge gas as described above, the gas supply source 5 may supply the purge gas to the mix apparatus 12 to which the build material M is supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build material M from the material supply source 1 may be supplied (specifically, pressure-fed) to the material nozzle 212 through the supply pipe 11 by the purge gas supplied from the gas supply source 5 through the supply pipe 52. Namely, the gas supply source 5 may be connected to the material nozzle 212 through the supply pipe 52, the mix apparatus 12 and the supply pipe 11. In this case, the material nozzle 212 supplies the build material M together with the purge gas for pressure-feeding the build material M.

The control unit 7 is configured to control an operation of the build system SYS. For example, the control unit 7 may control the build unit 2 (for example, at least one of the build head 21 and the head driving system 22) of the build system SYS to perform the additive manufacturing on the workpiece W. For example, the control unit 7 may control the stage unit 3 (for example, stage driving system 32) of the build system SYS to perform the additive manufacturing on the workpiece W. For example, the control unit 7 may control the material supply source 1 of the build system SYS to perform the additive manufacturing on the workpiece W. For example, the control unit 7 may control the light source 4 of the build system SYS to perform the additive manufacturing on the workpiece W. For example, the control unit 7 may control the gas supply source 5 of the build system SYS to perform the additive manufacturing on the workpiece W. Incidentally, the control unit 7 may be referred to as a control apparatus.

The control unit 7 may include a processor and a storage apparatus. The processor may include at least one of a CPU (Central Processing unit) and a GPU (Graphic Processing unit), for example. The storage apparatus may include a memory. The control unit 7 serves as an apparatus for controlling the operation of the build system SYS by means of the processor executing a computer program. The computer program is a computer program that allows the processor to execute (namely, to perform) a below-described operation that should be executed by the control unit 7. Namely, the computer program is a computer program that allows the control unit 7 to function so as to make the build system SYS execute the below-described operation. The computer program executed by the processor may be recorded in the storage apparatus (namely, a recording medium) of the control unit 7, or may be recorded in any recording medium (for example, a hard disk or a semiconductor memory) that is built in the control unit 7 or that is attachable to the control unit 7. Alternatively, the processor may download the computer program that should be executed from an apparatus positioned at an outside of the control unit 7 through a network interface.

The control unit 7 may control an emitting aspect of the build light EL by the irradiation optical system 211. The emitting aspect may include at least one of the intensity of the build light EL and emitting timing of the build light EL, for example. In a case where the build light EL includes the plurality of pulsed lights, the emitting aspect may include at least one of an ON time of the pulsed light, an emission cycle of the pulsed light, and a ratio (what we call a duty ratio) of a length of the ON time of the pulsed light and a length of the emission cycle of the pulsed light, for example. Furthermore, the control unit 7 may control a movement aspect of the build head 21 by the head driving system 22. The control unit 7 may control a movement aspect of the stage 31 by the stage driving system 32. The movement aspect may include at least one of a movement distance, a movement speed, a movement direction, and a movement timing (a movement period), for example. Moreover, the control unit 7 may control a supply aspect of the build material M by the material nozzle 212. The supply aspect may include at least one of a supplied amount (especially, the supplied amount per unit time) and a supply timing (a supply period).

The control unit 7 may not be positioned in the build system SYS. For example, the control unit 7 may be positioned at the outside of the build system SYS as a server or the like. In this case, the control unit 7 may be connected to the build system SYS through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 7 and the build system SYS may be configured to transmit and receive various information through the network. Moreover, the control unit 7 may be configured to transmit information such as a command and a control parameter to the build system SYS through the network. The build system SYS may include a reception apparatus that is configured to receive the information such as the command and the control parameter from the control unit 7 through the network. The build system SYS may include a transmission apparatus that is configured to transmit the information such as the command and the control parameter to the control unit 7 through the network (namely, an output apparatus that is configured to output information to the control unit 7). Alternatively, a first control apparatus that is configured to perform a part of the arithmetic processing performed by the control unit 7 may be positioned in the build system SYS and a second control apparatus that is configured to perform another part of the arithmetic processing performed by the control unit 7 may be positioned at the outside of the build system SYS.

An arithmetic model that is buildable by machine learning may be implemented in the control unit 7 by the processor executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 7 may control the operation of the build system SYS by using the arithmetic model. Namely, the operation for controlling the operation of the build system SYS may include an operation for controlling the operation of the build system SYS by using the arithmetic model. Note that the arithmetic model that has been built by off-line machine learning using training data may be implemented in the control unit 7. Moreover, the arithmetic model implemented in the control unit 7 may be updated by online machine learning on the control unit 7. Alternatively, the control unit 7 may control the operation of the build system SYS by using the arithmetic model implemented in an apparatus positioned at an outside of the control unit 7 (namely, an apparatus positioned at an outside of the build system SYS), in addition to or instead of the arithmetic model implemented on the control unit 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control unit 7. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control unit 7 by means of the control unit 7 (namely, a computer) executing the computer program, may be realized by a hardware such as a predetermined gate array (a FPGA, an ASIC) of the control unit 7, or may be realized in a form in which the logical process block and a partial hardware module that realizes a partial element of the hardware are combined.

The build system SYS may include an input unit 8 and a display unit 9. However, the build system SYS may not include at least one of the input unit 8 and the display unit 9.

The input unit 8 is an apparatus that is configured to receive an input of information from an outside of the build system SYS. For example, the input unit 8 may include an operating apparatus (for example, at least one of a keyboard, a mouse, and a touch panel) that is operable by a user of the build system SYS. For example, the input unit 8 may include a reading apparatus that is configured to read information recorded as data on a recording medium that is attachable to the build system SYS. For example, the input unit 8 may include a communication apparatus that is configured to communicate with an apparatus that is positioned at an outside of the build system SYS through a communication line. Incidentally, the input unit 8 may be referred to as an input apparatus.

The display unit 9 is an apparatus that is configured to output information as an image. Namely, the display unit 9 is an apparatus that is configured to display the image indicating the information that should be output. Incidentally, the display unit 9 may be referred to as a display apparatus. Note that the build system SYS may include an apparatus in which the input unit 8 and the display unit 9 are integrated. One example of the apparatus in which the input unit 8 and the display unit 9 are integrated is a touch screen in which a display apparatus and a position input apparatus are integrated.

### (1-2) Configuration of Irradiation Optical System 211

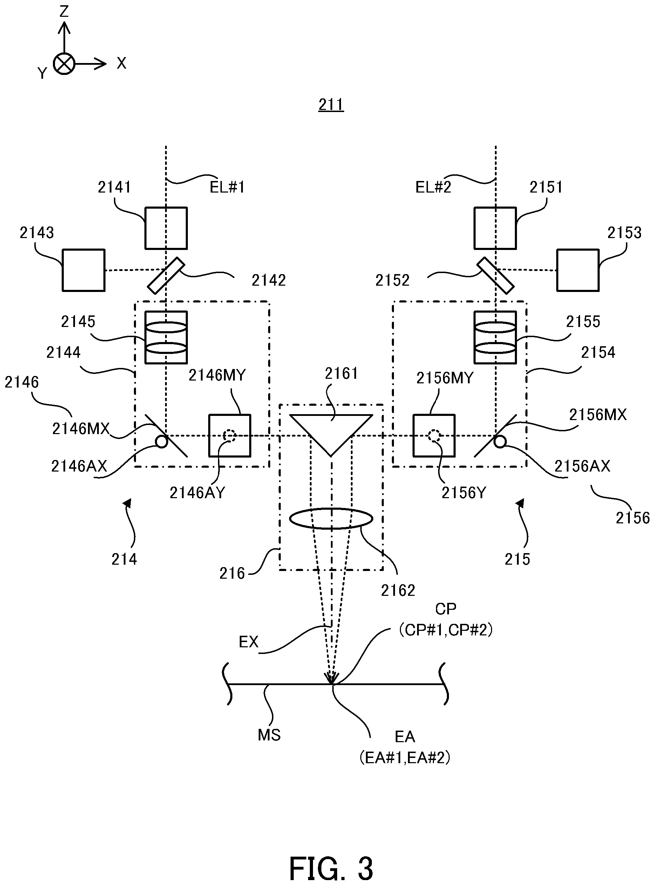

Next, with reference to FIG. 3, a configuration of the irradiation optical system 211 will be described. FIG. 3 is a cross-sectional view that illustrates the configuration of the irradiation optical system 211.

As illustrated in FIG. 3, the irradiation optical system 211 includes a first optical system 214, a second optical system 215, and the third optical system 216. The first optical system 214 is an optical system into which the build light EL#1 emitted from the light source 4#1 enters. The first optical system 214 is an optical system that emits the build light EL#1 emitted from the light source 4#1 toward the third optical system 216. The second optical system 215 is an optical system into which the build light EL#2 emitted from the light source 4#2 enters. The second optical system 215 is an optical system that emits the build light EL#2 emitted from the light source 4#2 toward the third optical system 216. The third optical system 216 is an optical system into which the build light EL#1 emitted from the first optical system 214 and the build light EL#2 emitted from the second optical system 215 enter. The third optical system 216 is an optical system that emits the build light EL#1 emitted from the first optical system 214 and the build light EL#2 emitted from the second optical system 215 toward the build surface MS. Next, the first optical system 214, the second optical system 215, and the third optical system 216 will be described in sequence.

The first optical system 214 includes a collimator lens 2141, a parallel plate 2142, a power meter 2143, and a Galvano scanner 2144. The Galvano scanner 2144 includes a focus control optical system 2145 and a Galvano mirror 2146. However, the first optical system 214 may not include at least one of the collimator lens 2141, the parallel plate 2142, the power meter 2143, and the Galvano scanner 2144. The Galvano scanner 2144 may not include at least one of the focus control optical system 2145 and the Galvano mirror 2146.

The build light EL#1 emitted from the light source 4#1 enters the collimator lens 2141. The collimator lens 2141 converts the build light EL#1 that has entered the collimator lens 2141 into collimated light. Incidentally, in a case where the build light EL#1 emitted from the light source 4#1 is collimated light (namely, the build light EL#1 that is the collimated light enters the first optical system 214), the first optical system 214 may not include the collimator lens 2141. The build light EL#1 that has been converted to the collimated light by the collimator lens 2141 enters the parallel plate 2142. A part of the build light EL#1 that has entered the parallel plate 2142 passes through the parallel plate 2142. Another part of the build light EL#1 that has entered the parallel plate 2142 is reflected by the parallel plate 2142.

The build light EL#1 that has passed through the parallel plate 2142 enters the Galvano scanner 2144. Specifically, the build light EL#1 that has passed through the parallel plate 2142 enters the focus control optical system 2145 of the Galvano scanner 2144.

The focus control optical system 2145 is an optical member that is configured to change a condensed position CP of the build light EL#1 (in the below-described description, it is referred to as a "condensed position CP#1"). Specifically, the focus control optical system 2145 is configured to change the condensed position CP#1 of the build light EL#1 along an irradiation direction of the build light EL#1 with which the build surface MS is irradiated. In the example illustrated in FIG. 3, the irradiation direction of the build light EL#1 with which the build surface MS is irradiated is a direction whose main component is the Z-axis direction. In this case, the focus control optical system 2145 is configured to change the condensed position CP#1 of the build light EL#1 along the Z-axis direction. Moreover, since the irradiation optical system 211 irradiates the build surface MS with the build light EL from a position above the workpiece W, the irradiation direction of the build light EL#1 is a direction that intersects the build surface MS (for example, the surface of the workpiece W or the structural layer SL). Therefore, the focus control optical system 2145 may be considered to be configured to change the condensed position CP#1 of the build light EL#1 along the direction that intersects the build surface MS (for example, the surface of the workpiece W or the structural layer SL). The focus control optical system 2145 may be considered to be configured to change the condensed position CP#1 of the build light EL#1 along a direction of an optical axis EX of the irradiation optical system 211 (typically, the third optical system 216).

Incidentally, the irradiation direction of the build light EL#1 may mean an irradiation direction of the build light EL#1 emitted from the third optical system 216. In this case, the irradiation direction of the build light EL#1 may be the same as a direction along an optical axis of the third optical system 216. The irradiation direction of the build light EL#1 may be the same as a direction along an optical axis of a terminal optical member (a terminal optical element), which is positioned at a position closest to the build surface MS, among optical members of the third optical system 216. The terminal optical member may be the fθ lens 2162 described below. Moreover, in a case where the below-described fθ lens 2162 includes a plurality of optical members, the terminal optical member may be an optical member, which is positioned at a position closest to the build surface MS, among the plurality of optical members of the fθ lens 2162.

The focus control optical system 2145 may include a plurality of lenses that are aligned along the irradiation direction of the build light EL#1, for example. In this case, the focus control optical system 2145 may change the condensed position CP#1 of the build light EL#1 by moving at least one of the plurality of lenses along its optical axis direction.

When the focus control optical system 2145 changes the condensed position CP#1 of the build light EL#1, a positional relationship between the condensed position CP#1 of the build light EL#1 and the build surface MS changes. Especially, a positional relationship between the condensed position CP#1 of the build light EL#1 and the build surface MS in the irradiation direction of the build light EL#1 changes. Therefore, the focus control optical system 2145 may be considered to change the positional relationship between the condensed position CP#1 of the build light EL#1 and the build surface MS by changing the condensed position CP#1 of the build light EL#1 by the focus control optical system 2145.

Incidentally, as described above, the Galvano scanner 2144 may not include the focus control optical system 2145. Even in this case, when the positional relationship between the irradiation optical system 211 and the build surface MS in the irradiation direction of the build light EL#1 changes, the positional relationship between the condensed position CP#1 of the build light EL#1 and the build surface MS in the irradiation direction of the build light EL#1 changes. Therefore, even in a case where the Galvano scanner 2144 does not include the focus control optical system 2145, the build system SYS may change the positional relationship between the condensed position CP#1 of the build light EL#1 and the build surface MS in the irradiation direction of the build light EL#1. For example, the build system SYS may change the positional relationship between the condensed position CP#1 of the build light EL#1 and the build surface MS in the irradiation direction of the build light EL#1 by using the head driving system 22 to move the build head 21 along the irradiation direction of the build light EL#1. For example, the build system SYS may change the positional relationship between the condensed position CP#1 of the build light EL#1 and the build surface MS in the irradiation direction of the build light EL#1 by using the stage driving system 32 to move the stage 31 along the irradiation direction of the build light EL#1.

The build light EL#1 that has been emitted from the focus control optical system 2145 enters the Galvano mirror 2146. The Galvano mirror 2146 changes an emitting direction of the build light EL#1 emitted from the Galvano mirror 2146 by deflecting the build light EL#1. Therefore, the Galvano mirror 2146 may be referred to as a deflection optical system.

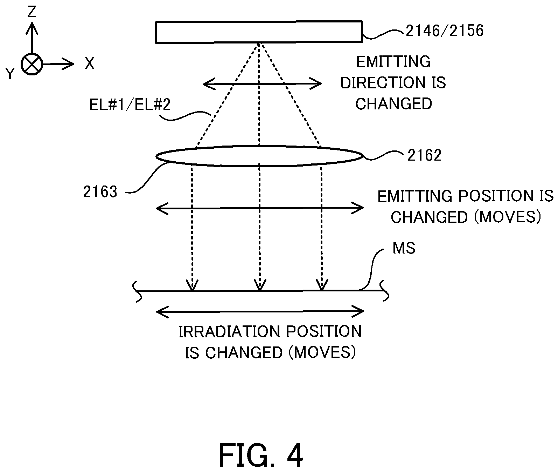

When the emitting direction of the build light EL#1 emitted from the Galvano mirror 2146 is changed, an emitting position from which the fθ lens 2162 (especially, its emitting surface 2163) emits the build light EL#1 is changed, as illustrated in FIG. 4 illustrating the build light EL#1 emitted from the fθ lens 2162 that is the terminal optical member of the irradiation optical system 211. In this case, the Galvano mirror 2146 may be considered to change (in other words, move) the emitting position, from which the fθ lens 2162 emits the build light EL#1, by deflecting the build light EL#1. The Galvano mirror 2146 may be considered to serve as a position change apparatus that is configured to change the emitting position from which the fθ lens 2162 emits the build light EL#1. Alternatively, when the emitting direction of the build light EL#1 emitted from the Galvano mirror 2146 is changed, an emitting angle at which the fθ lens 2162 (especially, its emitting surface 2163) emits the build light EL#1 is changed, in addition to or instead of the emitting position from which the fθ lens 2162 emits the build light EL#1 being changed. In this case, the Galvano mirror 2146 may be considered to change (in other words, move) the emitting angle, at which the fθ lens 2162 emits the build light EL#1, by deflecting the build light EL#1. The Galvano mirror 2146 may be considered to serve as a position change apparatus that is configured to change the emitting angle at which the fθ lens 2162 emits the build light EL#1.

When at least one of the emitting position and the emitting angle from / at which the fθ lens 2162 emits the build light EL#1 is changed, the target irradiation area EA#1 that is irradiated with the build light EL#1 on the build surface MS moves, as illustrated in FIG. 4. Namely, as illustrated in FIG. 4, the irradiation position that is irradiated with the build light EL#1 on the build surface MS moves.

Again in FIG. 3, the Galvano mirror 2146 includes an X scanning mirror 2146MX, an X scanning motor 2146AX, a Y scanning mirror 2146MY, and a Y scanning motor 2146AY, for example. The build light EL#1 that has been emitted from the focus control optical system 2145 enters the X scanning mirror 2146MX. The X scanning mirror 2146MX reflects the build light EL#1 that has entered the X scanning mirror 2146MX toward the Y scanning mirror 2146MY. The Y scanning mirror 2146MY reflects the build light EL#1 that has entered the Y scanning mirror 2146MY toward the third optical system 216. Incidentally, each of the X scanning mirror 2146MX and the Y scanning mirror 2146MY may be referred to as a Galvano mirror.

The X scanning motor 2146AX swings or rotates the X scanning mirror 2146MX around a rotational axis along the Y-axis. As a result, an angle of the X scanning mirror 2146MX relative to an optical path of the build light EL#1 entering the X scanning mirror 2146MX is changed. In this case, the build light EL#1 moves along the X-axis direction, which intersects the optical axis EX of the irradiation optical system 211, due to the swing or the rotation of the X scanning mirror 2146MX. As a result, the build surface MS is scanned with the build light EL#1 along the X-axis direction. Namely, the irradiation position of the build light EL#1 on the build surface MS is changed along the X-axis direction. In other words, the target irradiation area EA#1 (namely, the irradiation position of the build light EL#1) moves along the X-axis direction on the build surface MS.

The Y scanning motor 2146AY swings or rotates the Y scanning mirror 2146MY around a rotational axis along the X-axis. As a result, an angle of the Y scanning mirror 2146MY relative to an optical path of the build light EL#1 entering the Y scanning mirror 2146MY is changed. In this case, the build light EL#1 moves along the Y-axis direction, which intersects the optical axis EX of the irradiation optical system 211, due to the swing or the rotation of the Y scanning mirror 2146MY. As a result, the build surface MS is scanned with the build light EL#1 along the Y-axis direction. Namely, the irradiation position of the build light EL#1 on the build surface MS is changed along the Y-axis direction. In other words, the target irradiation area EA#1 (namely, the irradiation position of the build light EL#1) moves along the Y-axis direction on the build surface MS.

In the present example embodiment, a virtual area in which the Galvano mirror 2146 moves the target irradiation area EA#1 on the build surface MS is referred to as a build unit area BSA (especially, the build unit area BSA#1). In this case, the target irradiation area EA#1 may be considered to move on a surface (a first surface) of the build surface MS that overlaps with the build unit area BSA#1. Specifically, the virtual area in which the Galvano mirror 2146 moves the target irradiation area EA#1 on the build surface MS in a state where a positional relationship between the irradiation optical system 211 and the build surface MS is fixed (namely, is not changed) is referred to as the build unit area BSA (especially, the build unit area BSA#1). The build unit area BSA#1 indicates a virtual area (in other words, a range) in which the build head 21 actually performs the additive manufacturing by using the build light EL#1 in a state where the positional relationship between the irradiation optical system 211 and the build surface MS is fixed. The build unit area BSA#1 indicates a virtual area (in other words, a range) that is actually scanned by the build head 21 with the build light EL#1 in a state where the positional relationship between the irradiation optical system 211 and the build surface MS is fixed. The build unit area BSA#1 indicates an area (in other words, a range) in which the target irradiation area EA#1 actually moves in a state where the positional relationship between the irradiation optical system 211 and the build surface MS is fixed. Therefore, the build unit area BSA#1 may be regarded as a virtual area that is determined with respect to the build head 21 (especially, the irradiation optical system 211). Namely, the build unit area BSA#1 may be regarded as a virtual area positioned at a position that is determined with respect to the build head 21 (especially, the irradiation optical system 211) on the build surface MS. Incidentally, a maximum area in which the Galvano mirror 2146 is allowed to move the target irradiation area EA#1 on the build surface MS in a state where the positional relationship between the irradiation optical system 211 and the build surface MS is fixed may be referred to as the build unit area BSA#1. Moreover, the build unit area BSA#1 may be regarded as a virtual area (typically, a two-dimensional area) that is set with respect to the build head 21 (especially, the irradiation optical system 211) on a side toward which the build light EL1 emitted from the irradiation optical system 211 propagates.

In this case, the build system SYS may move the target irradiation area EA#1 in the build unit area BSA#1 by using the Galvano mirror 2146. Therefore, an operation for deflecting the build light EL#1 by using the Galvano mirror 2146 may be considered to be equivalent to an operation for moving the target irradiation area EA#1 in the build unit area BSA#1. Furthermore, as described above, the melt pool MP#1 is formed by irradiating the target irradiation area EA#1 with the build light EL#1. In this case, the build system SYS may be considered to move the melt pool MP#1 in the build unit area BSA#1 by using the Galvano mirror 2146. Therefore, the operation for deflecting the build light EL#1 by using the Galvano mirror 2146 may be considered to be equivalent to an operation for moving the melt pool MP#1 in the build unit area BSA#1. Namely, the operation for moving the target irradiation area EA#1 in the build unit area BSA#1 may be considered to be equivalent to the operation for moving the melt pool MP#1 in the build unit area BSA#1.

Incidentally, as described above, even when at least one of the build head 21 and the stage 31 moves, the target irradiation area EA#1 moves on the build surface MS. However, when at least one of the build head 21 and the stage 31 moves, the relative positional relationship between the Galvano mirror 2146 and the build surface MS changes. As a result, the build unit area BSA#1 that is determined with respect to the build head 21 (namely, the build unit area BSA#1 in which the Galvano mirror 2146 moves the target irradiation area EA#1 on the build surface MS) moves on the build surface MS. Therefore, in the present example embodiment, an operation for moving at least one of the build head 21 and the stage 31 may be considered to be equivalent to an operation for moving the build unit area BSA#1 relative to the build surface MS.

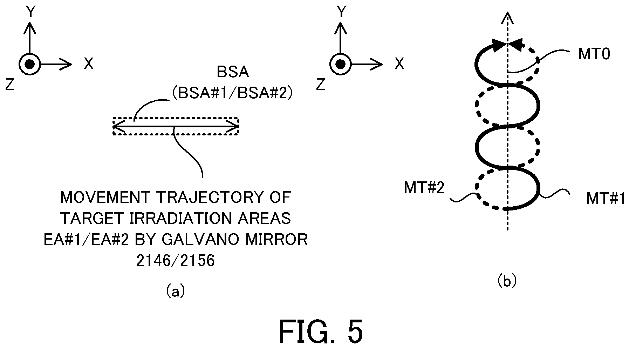

As one example of the operation for moving the target irradiation area EA#1 in the build unit area BSA#1, as illustrated in FIG. 5(a), the Galvano mirror 2146 may deflect the build light EL#1 so that the target irradiation area EA#1 moves along a single direction, which is along the build surface MS, in the build unit area BSA#1 under the assumption that the build unit area BSA#1 is stationary (namely, does not move) on the build surface MS. Namely, the Galvano mirror 2146 may deflect the build light EL#1 so that the target irradiation area EA#1 moves along a single scanning direction in a coordinate system that is determined with respect to the build unit area BSA#1. Especially, the Galvano mirror 2146 may deflect the build light EL#1 so that the target irradiation area EA#1 periodically moves back and forth along the single scanning direction in the build unit area BSA#1. Namely, the Galvano mirror 2146 may deflect the build light EL#1 so that the target irradiation area EA#1 periodically moves back and forth along an axis, which is along the single scanning direction, in the build unit area BSA#1. In this case, a shape of the build unit area BSA#1 in which the target irradiation area EA#1 moves may be a rectangular shape whose longitudinal direction is a movement direction of the target irradiation area EA#1.

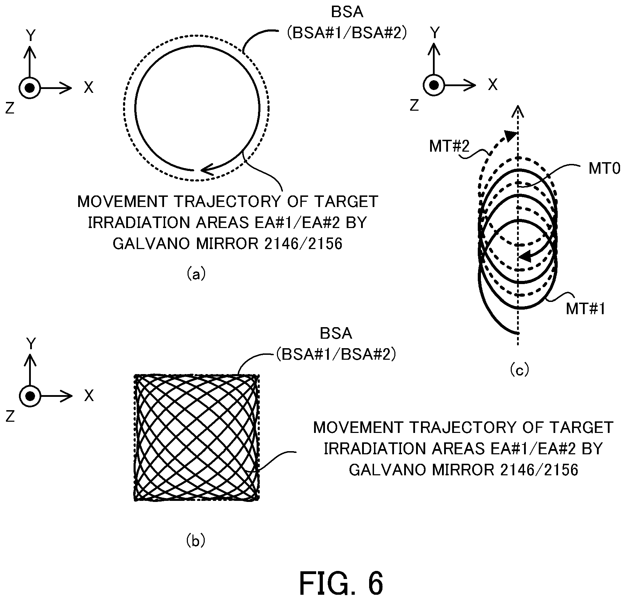

As another example of the operation for moving the target irradiation area EA#1 in the build unit area BSA#1, as illustrated in FIG. 6(a) and FIG. 6(b), the Galvano mirror 2146 may deflect the build light EL#1 so that the target irradiation area EA#1 moves along a plurality of scanning directions, each of which is along the build surface MS, in the build unit area BSA#1 under the assumption that the build unit area BSA#1 is stationary (namely, does not move) on the build surface MS. Namely, the Galvano mirror 2146 may deflect the build light EL#1 so that the target irradiation area EA#1 moves along a plurality of scanning directions in the coordinate system that is determined with respect to the build unit area BSA#1. Especially, the Galvano mirror 2146 may deflect the build light EL#1 so that the target irradiation area EA#1 periodically moves back and forth along each of a plurality of scanning directions in the build unit area BSA#1. Namely, the Galvano mirror 2146 may deflect the build light EL#1 so that the target irradiation area EA#1 periodically moves back and forth along an axis, which is along each of the plurality of scanning directions, in the build unit area BSA#1. FIG. 6(a) illustrates an example in which the target irradiation area EA#1 moves back and forth along each of the X-axis direction and the Y-axis direction in the build unit area BSA#1 so that a scanning trajectory (a movement trajectory) of the target irradiation area EA#1 in the build unit area BSA#1 is a circular shape. In this case, the shape of the build unit area BSA#1 in which the target irradiation area EA#1 moves may be a circular shape. FIG. 6(b) illustrates an example in which the target irradiation area EA#1 moves back and forth along each of the X-axis direction and the Y-axis direction in the build unit area BSA#1 so that the scanning trajectory (the movement trajectory) of the target irradiation area EA#1 in the build unit area BSA#1 is a net-like shape. In this case, the shape of the build unit area BSA#1 in which the target irradiation area EA#1 moves may be a rectangular shape.

The periodic movement of the target irradiation area EA#1 in the build unit area BSA#1 may include a spatially periodic movement. Namely, the Galvano mirror 2146 may periodically move the target irradiation area EA#1 by periodically moving the target irradiation area EA#1 in a certain space. Alternatively, the periodic movement of the target irradiation area EA#1 in the build unit area BSA#1 may include a periodic movement along a time axis in addition to or instead of the spatially periodic movement. Namely, the Galvano mirror 2146 may periodically move the target irradiation area EA#1 by periodically moving the target irradiation area EA#1 at regular time intervals.

Incidentally, as described above, when the emitting direction of the build light EL#1 emitted from the Galvano mirror 2146 is changed, the emitting position from which the fθ lens 2162 (especially, its emitting surface 2163) emits the build light EL#1 is changed, and as a result, the target irradiation area EA#1 moves on the build surface MS. In this case, the periodic movement of the target irradiation area EA#1 in the build unit area BSA#1 may be considered to be equivalent to a periodic movement of the emitting position of the build light EL#1 on the emitting surface 2163 of the fθ lens 2162. In this case, a scanning direction along which the target irradiation area EA#1 periodically moves in the build unit area BSA#1 may be considered to be equivalent to a movement direction along which the emitting position of the build light EL#1 periodically moves on the emitting surface 2163 of the fθ lens 2162.

However, the Galvano mirror 2146 may not deflect the build light EL#1 so that the target irradiation area EA#1 periodically moves back and forth in the build unit area BSA#1. For example, the Galvano mirror 2146 may deflect the build light EL#1 so that the target irradiation area EA#1 moves non-periodically along the single scanning direction in the build unit area BSA#1. For example, the Galvano mirror 2146 may deflect the build light EL#1 so that the target irradiation area EA#1 moves non-periodically along at least one of the plurality of scanning directions in the build unit area BSA#1. For example, the Galvano mirror 2146 may deflect the build light EL#1 so that the target irradiation area EA#1 periodically moves along at least one of the plurality of scanning directions in the build unit area BSA#1 and the target irradiation area EA#1 moves non-periodically along at least other one of the plurality of scanning directions.

Incidentally, an operation for periodically moving the target irradiation area EA#1 on the build surface MS as illustrated in each of FIG. 5(a), FIG. 6(a) and FIG. 6(b) may be referred to as a wobbling operation. In other words, an operation for periodically moving (in other words, deflecting) the build light EL#1 so that the target irradiation area EA#1 periodically moves on the build surface MS may be referred to as the wobbling operation.

The control unit 7 may control the Galvano mirror 2146 based on scanning control information indicating the scanning trajectory that is the movement trajectory of the target irradiation area EA#1 in the build unit area BSA#1. Namely, the control unit 7 may control the Galvano mirror 2146 based on the scanning control information so that the target irradiation area EA#1 moves in the build unit area BSA#1 along the scanning trajectory indicated by the scanning control information. Incidentally, since the operation for periodically moving the build light EL#1 may be referred to as the wobbling operation, the scanning trajectory may be referred to as a wobble shape or a trajectory of the wobble shape.

In a case where the target irradiation area EA#1 periodically moves back and forth, the scanning trajectory of the target irradiation area EA#1 in the build unit area BSA#1 may be expressed by using a trigonometric function. For example, in a case where the target irradiation area EA#1 periodically moves back and forth along the single scanning direction (for example, the X-axis direction) as illustrated in FIG. 5(a), the scanning trajectory of the target irradiation area EA#1 may be expressed by an equation 1 "X = Ax × sin (2π × fx × t + αx)" and an equation 2 "Y = C". Incidentally, "X" in the equation 1 represents a position of the target irradiation area EA#1 along the X-axis direction in the build unit area BSA#1 at a time t, "Ax" in the equation 1 represents an amplitude that corresponds to half of a back-and-forth movement distance (namely, a stroke width) of the target irradiation area EA#1 along the X-axis direction, "fx" in the equation 1 represents the number of times the target irradiation area EA#1 moves back and forth along the X-axis direction (namely, a frequency), "αx" in the equation 1 represents a phase amount that indicates an initial position of the target irradiation area EA#1 along the X-axis direction, "Y" in the equation 2 represents a position of the target irradiation area EA#1 along the XY-axis direction in the build unit area BSA#1 at the time t, and "C" in the equation 2 indicates a constant value. For example, for example, in a case where the target irradiation area EA#1 periodically moves back and forth along the plurality of scanning directions (for example, two scanning directions including the X-axis direction and the Y-axis direction) as illustrated in FIG. 6(a) and FIG. 6(b), the scanning trajectory of the target irradiation area EA#1 may be expressed by the equation 1 "X = Ax × sin (2π × fx × t + αx)" and an equation 3 "Y = Ay × sin (2π × fy × t + αy)". Incidentally, "Ay" in the equation 3 represents an amplitude that corresponds to half of a back-and-forth movement distance (namely, a stroke width) of the target irradiation area EA#1 along the Y-axis direction, "fy" in the equation 3 represents the number of times the target irradiation area EA#1 moves back and forth along the Y-axis direction (namely, a frequency), "αy" in the equation 3 represents a phase amount that indicates an initial position of the target irradiation area EA#1 along the Y-axis direction. Incidentally, the scanning trajectory expressed by the equation 1 and the equation 3 may be considered to be equivalent to a trajectory represented by a Lissajous curve (in other words, a Lissajous figure).

Incidentally, in a case where the amplitude Ay in the equation 3 is equal to the constant C in the equation 2 and each of the frequency fy and the phase αy in the equation 3 is zero, the equation 3 is the same as the equation 1. Therefore, even in a case where the target irradiation area EA#1 moves along the single scanning direction (for example, the X-axis direction) as illustrated in FIG. 5(a), the scanning trajectory of the target irradiation area EA#1 may be considered to be expressed by the equation 1 "X = Ax × sin (2π × fx × t + αx)" and the equation 3 "Y = Ay × cos (2π × fy × t + αy)".

In a case where the scanning trajectory of the irradiation area EA#1 is expressed by using the trigonometric function, the periodic movement of the target irradiation area EA#1 may be regarded as a movement that includes a simple harmonic motion. For example, the periodic movement of the target irradiation area EA#1 illustrated in FIG. 5(a) may be regarded as a movement that includes a single simple harmonic motion. On the other hand, for example, the periodic movement of the target irradiation area EA#1 illustrated in FIG. 6(a) and FIG. 6(b) may be regarded as a movement that includes two simple harmonic motions. In this case, the scanning trajectory of the target irradiation area EA#1 illustrated in each of FIG. 6(a) and FIG. 6(b) may be regarded as a scanning trajectory that includes two simple harmonic motions (namely, a scanning trajectory obtained by combining two simple harmonic motions). In any case, the scanning direction along which the target irradiation area EA#1 periodically moves may be regarded as a direction of the simple harmonic motion.

The control unit 7 may move at least one of the build head 21 and the stage 31 so that the build unit area BSA#1 moves on the build surface MS in a period during which the target irradiation area EA#1 is moved in the build unit area BSA#1 by using the Galvano mirror 2146. Namely, the control unit 7 may control at least one of the head driving system 22 and the stage driving system 32 so that the build unit area BSA#1 moves on the build surface MS in the period during which the target irradiation area EA#1 is moved in the build unit area BSA#1 by using the Galvano mirror 2146.

For example, in the example illustrated in FIG. 5(a), the control unit 7 may control at least one of the head driving system 22 and the stage driving system 32 so that the build unit area BSA#1 moves along a target movement trajectory MT0 that intersects (is orthogonal to, in some cases) the movement direction (namely, the scanning direction) of the target irradiation area EA#1 in the build unit area BSA#1. Conversely, the control unit 7 may control the Galvano mirror 2146 so that the target irradiation area EA#1 periodically moves along a scanning direction that intersects (is orthogonal to, in some cases) the target movement trajectory MT0 of the build unit area BSA#1 on the build surface MS. As a result, the target irradiation area EA#1 may move on the build surface MS along a movement trajectory MT#1 illustrated in FIG. 5(b). Specifically, the target irradiation area EA#1 may move along the scanning direction intersecting the target movement trajectory MT0 while moving along target movement trajectory MT0 of the build unit area BSA#1. Namely, the target irradiation area EA#1 may move along the wave-shaped (for example, sinusoidal wave-shaped) movement trajectory MT#1 that oscillates around the target movement trajectory MT0.

For example, in the example illustrated in FIG. 6(a) or FIG. 6(b), the control unit 7 may control at least one of the head driving system 22 and the stage driving system 32 so that the build unit area BSA#1 moves along the target movement trajectory MT0 that extends along at least one of a direction that is along the movement direction (namely, the scanning direction) of the target irradiation area EA#1 in the build unit area BSA#1 and a direction that intersects (is orthogonal to, in some cases) the movement direction of the target irradiation area EA#1 in the build unit area BSA#1. Conversely, the control unit 7 may control the Galvano mirror 2146 so that the target irradiation area EA#1 periodically moves along each of a scanning direction that is along the target movement trajectory MT0 of the build unit area BSA#1 on the build surface MS and a scanning direction that intersects (is orthogonal to, in some cases) the target movement trajectory MT0. Incidentally, FIG. 6(c) illustrates the movement trajectory MT#1 of the target irradiation area EA#1 on the build surface MS in a case where the build unit area BSA#1 illustrated in FIG. 6(a) moves along the target movement trajectory MT0 on the build surface MS.

In a case where the build surface MS is irradiated with the build light EL#1 so that the target irradiation area EA#1 moves in the build unit area BSA#1, the melt pool MP#1 is formed in at least a part of the build unit area BSA#1. As a result, the build object is built in the build unit area BSA#1. Here, as described above, the build unit area BSA#1 is the area that has a width along a direction that intersects the movement direction of the build unit area BSA#1 on the build surface MS (specifically, a direction along which the target movement trajectory MT0 extends). In this case, the build object that has a width along the direction intersecting the target movement trajectory MT0 of the build unit area BSA#1 is built on the build surface MS along the target movement trajectory MT0. For example, in the example illustrated in FIG. 5(a) and FIG. 5(b), the build object that has a width along the X-axis direction and that extends along the Y-axis direction is built. For example, in the example illustrated in FIG. 6(a) and FIG. 6(c), the build object that has a width along the X-axis direction and that extends along the Y-axis direction is built. For example, in a case where the build unit area BSA illustrated in FIG. 6(b) moves along the Y-axis direction, the build object that has a width along the X-axis direction and that extends along the Y-axis direction is built.

In a case where the build surface MS is irradiated with the build light EL#1 so that the target irradiation area EA#1 moves in the build unit area BSA#1, the Galvano mirror 2146 scans the build unit area BSA#1 with the build light EL#1. Therefore, there is a lower possibility that an amount of the energy transferred from the build light EL#1 to the build unit area BSA#1 varies in the build unit area BSA#1, compared to a case where the build surface MS is irradiated with the build light EL#1 without using the Galvano mirror 2146. Namely, it is possible to uniform the amount of the energy transferred from the build light EL#1 to the build unit area BSA#1. As a result, the build system SYS can build the build object on the build surface MS with relatively high build accuracy.

However, the build system SYS may not irradiate the build surface MS with the build light EL#1 so that the target irradiation area EA#1 moves in the build unit area BSA#1. The build system SYS may irradiate the build surface MS with the build light EL#1 without using the Galvano mirror 2146. In this case, the target irradiation area EA#1 may move on the build surface MS due to the movement of at least one of the build head 21 and the stage 31.

Again in FIG. 3, the build light EL#1 that has been reflected by the parallel plate 2142 enters the power meter 2143. The power meter 2143 is configured to detect the intensity of the build light EL#1 that has entered the power meter 2143. Therefore, the power meter 2143 may be referred to as a detection apparatus. For example, the power meter 2143 may include a light receiving element that detects the build light EL#1 as light. Alternatively, the amount of the energy generated by the build light EL#1 is larger as the intensity of the build light EL#1 is higher. As a result, the amount of heat generated by the build light EL#1 is larger. Therefore, the power meter 2143 may detect the intensity of the build light EL#1 by detecting the build light EL#1 as heat. In this case, the power meter 2143 may include a heat detection element that detects the heat of the build light EL#1.

As described above, the build light EL#1 that has been reflected by the parallel plate 2142 enters the power meter 2143. Therefore, the power meter 2143 detects the intensity of the build light EL#1 that has been reflected by the parallel plate 2142. Since the parallel plate 2142 is positioned on the optical path of the build light EL#1 between the light source 4#1 and the Galvano mirror 2146, the power meter 2143 may be considered to detect the intensity of the build light EL#1 propagating in the optical path between the light source 4#1 and the Galvano mirror 2146. In this case, the power meter 2143 can stably detect the intensity of the build light EL#1 without being affected by the deflection of the build light EL#1 by the Galvano mirror 2146. However, the position of the power meter 2143 is not limited to the example illustrated in FIG. 3. For example, the power meter 2143 may detect the intensity of the build light EL#1 propagating in the optical path between the Galvano mirror 2146 and the build surface MS. The power meter 2143 may detect the intensity of the build light EL#1 propagating in the optical path in the Galvano mirror 2146.

A detected result by the power meter 2143 is output to the control unit 7. The control unit 7 may control (in other words, change) the intensity of the build light EL#1 based on the detected result by the power meter 2143 (namely, the detected result of the intensity of the build light EL#1). For example, the control unit 7 may control the intensity of the build light EL#1 so that the intensity of the build light EL#1 on the build surface MS is a desired intensity. In order to control the intensity of the build light EL#1, the control unit 7 may control the light source 4#1 to change the intensity of the build light EL#1 emitted from the light source 4#1 based on the detected result by the power meter 2143, for example. As a result, the build system SYS can appropriately build the build object on the build surface MS by irradiating the build surface MS with the build light EL#1 having an appropriate intensity.

As described above, the build light EL#1 has an intensity that is capable of melting the build material M. Therefore, there is a possibility that the build light EL#1 entering the power meter 2143 has an intensity that is capable of melting the build material M. However, if the build light EL#1 that has an intensity that is capable of melting the build material M enters the power meter 2143, there is a possibility that the power meter 2143 is damaged by the build light EL#1. Therefore, the build light EL#1 having an intensity that is not high enough to damage the power meter 2143 may enter the power meter 2143. In other words, the first optical system 214 may reduce the intensity of the build light EL#1 entering the power meter 2143 so that the build light EL#1 having an intensity that is not high enough to damage the power meter 2143 enters the power meter 2143.

For example, in order to reduce the intensity of the build light EL#1 entering the power meter 2143, a reflectance of the parallel plate 2142 relative to the build light EL#1 may be set to be an appropriate value. Specifically, the intensity of the build light EL#1 entering the power meter 2143 is lower as the reflectance of the parallel plate 2142 relative to the build light EL#1 is lower. Therefore, the reflectance of the parallel plate 2142 may be set to a value that is low enough to realize a state where the build light EL#1 has an intensity that is not high enough to damage the power meter 2143 enters the power meter 2143. For example, the reflectance of the parallel plate 2142 may be lower than 10%. For example, the reflectance of the parallel plate 2142 may be lower than a few percent. As the parallel plate 2142 having such a low reflectance, bare glass may be used.

For example, in order to reduce the intensity of the build light EL#1 entering the power meter 2143, the first optical system 214 may allow the build light EL#1 to enter the power meter 2143 through a plurality of parallel plates 2142. Specifically, the build light EL#1, which has been reflected a plurality of times by the plurality of parallel plates 2142, respectively, may enter the power meter 2143. In this case, the intensity of the build light EL#1 reflected a plurality of times by the plurality of parallel plates 2142, respectively, is lower than the intensity of the build light EL#1 reflected once by a single parallel plate 2142. Therefore, there is a higher possibility that the build light EL#1 having an intensity that is not high enough to damage the power meter 2143 enters the power meter 2143.

A desired coating processing may be performed on a surface of the parallel plate 2142 (especially, at least one of an incident surface which the build light EL#1 enters and a reflective surface that reflects the build light EL#1). For example, an anti-reflection coating processing (AR: Anti Reflection Coating) may be performed on the surface of the parallel plate 2142.

The second optical system 215 includes a collimator lens 2151, a parallel plate 2152, a power meter 2153, and a Galvano scanner 2154. The Galvano scanner 2154 includes a focus control optical system 2155 and a Galvano mirror 2156. However, the second optical system 215 may not include at least one of the collimator lens 2151, the parallel plate 2152, the power meter 2153, and the Galvano scanner 2154. The Galvano scanner 2154 may not include at least one of the focus control optical system 2155 and the Galvano mirror 2156.

The build light EL#2 emitted from the light source 4#2 enters the collimator lens 2151. The collimator lens 2151 converts the build light EL#2 that has entered the collimator lens 2151 into collimated light. Incidentally, in a case where the build light EL#2 emitted from the light source 4#2 is collimated light (namely, the build light EL#2 that is the collimated light enters the second optical system 215), the second optical system 215 may not include the collimator lens 2151. The build light EL#2 that has been converted to the collimated light by the collimator lens 2151 enters the parallel plate 2152. A part of the build light EL#2 that has entered the parallel plate 2152 passes through the parallel plate 2152. Another part of the build light EL#2 that has entered the parallel plate 2152 is reflected by the parallel plate 2152.

The build light EL#2 that has passed through the parallel plate 2152 enters the Galvano scanner 2154. Specifically, the build light EL#2 that has passed through the parallel plate 2152 enters the focus control optical system 2155 of the Galvano scanner 2154.

The focus control optical system 2155 is an optical member that is configured to change a condensed position CP of the build light EL#2 (in the below-described description, it is referred to as a "condensed position CP#2"). Specifically, the focus control optical system 2155 is configured to change the condensed position CP#2 of the build light EL#2 along an irradiation direction of the build light EL#2 with which the build surface MS is irradiated. In the example illustrated in FIG. 3, the irradiation direction of the build light EL#2 with which the build surface MS is irradiated is a direction whose main component is the Z-axis direction. In this case, the focus control optical system 2155 is configured to change the condensed position CP#2 of the build light EL#2 along the Z-axis direction. Moreover, since the irradiation optical system 211 irradiates the build surface MS with the build light EL from a position above the workpiece W, the irradiation direction of the build light EL#2 is a direction that intersects the build surface MS (for example, the surface of the workpiece W or the structural layer SL). Therefore, the focus control optical system 2155 may be considered to be configured to change the condensed position CP#2 of the build light EL#2 along the direction that intersects the build surface MS (for example, the surface of the workpiece W or the structural layer SL). The focus control optical system 2155 may be considered to be configured to change the condensed position CP#2 of the build light EL#2 along a direction of the optical axis EX of the irradiation optical system 211 (typically, the third optical system 216).

Incidentally, the irradiation direction of the build light EL#2 may mean an irradiation direction of the build light EL#2 emitted from the third optical system 216. In this case, the irradiation direction of the build light EL#2 may be the same as a direction along the optical axis of the third optical system 216. The irradiation direction of the build light EL#2 may be the same as a direction along the optical axis of the terminal optical member (the terminal optical element), which is positioned at the position closest to the build surface MS, among the optical members of the third optical system 216. The terminal optical member may be the fθ lens 2162 described below. Moreover, in a case where the below-described fθ lens 2162 includes the plurality of optical members, the terminal optical member may be the optical member, which is positioned at the position closest to the build surface MS, among the plurality of optical members of the fθ lens 2162.

The focus control optical system 2155 may include a plurality of lenses that are aligned along the irradiation direction of the build light EL#2, for example. In this case, the focus control optical system 2155 may change the condensed position CP of the build light EL#2 by moving at least one of the plurality of lenses along its optical axis direction.

When the focus control optical system 2155 changes the condensed position CP#2 of the build light EL#2, a positional relationship between the condensed position CP#2 of the build light EL#2 and the build surface MS changes. Especially, a positional relationship between the condensed position CP#2 of the build light EL#2 and the build surface MS in the irradiation direction of the build light EL#2 changes. Therefore, the focus control optical system 2155 may be considered to change the positional relationship between the condensed position CP#2 of the build light EL#2 and the build surface MS by changing the condensed position CP#2 of the build light EL#2 by the focus control optical system 2155.

The change of the condensed position CP#1 of the build light EL#1 in the Z-axis direction by the focus control optical system 2145 of the Galvano scanner 2144 of the first optical system 214 may be synchronized with the change of the condensed position CP#2 of the build light EL#2 in the Z-axis direction by the focus control optical system 2155 of the Galvano scanner 2154 of the second optical system 215. For example, the condensed positions CP#1 and CP#2 may be changed along the Z-axis direction so that the position in the Z-axis direction of the condensed position CP#1 of the build light EL#1 is the same as the position in the Z-axis direction of the condensed position CP#2 of the build light EL#2. For example, the condensed positions CP#1 and CP#2 may be changed along the Z-axis direction to maintain a state in which the position in the Z-axis direction of the condensed position CP#1 of the build light EL#1 is away from the position in the Z-axis direction of the condensed position CP#2 of the build light EL#2 by a predetermined distance. However, the change of the condensed position CP#1 of the build light EL#1 in the Z-axis direction by the focus control optical system 2145 and the change of the condensed position CP#2 of the build light EL#2 in the Z-axis direction by the focus control optical system 2155 may be performed independently from each other.

Incidentally, as described above, the Galvano scanner 2154 may not include the focus control optical system 2155. Even in this case, when the positional relationship between the irradiation optical system 211 and the build surface MS in the irradiation direction of the build light EL#2 changes, the positional relationship between the condensed position CP#2 of the build light EL#2 and the build surface MS in the irradiation direction of the build light EL#2 changes. Therefore, even in a case where the Galvano scanner 2154 does not include the focus control optical system 2155, the build system SYS may change the positional relationship between the condensed position CP#2 of the build light EL#2 and the build surface MS in the irradiation direction of the build light EL#2. For example, the build system SYS may change the positional relationship between the condensed position CP#2 of the build light EL#2 and the build surface MS in the irradiation direction of the build light EL#2 by using the head driving system 22 to move the build head 21 along the irradiation direction of the build light EL#2. For example, the build system SYS may change the positional relationship between the condensed position CP#2 of the build light EL#2 and the build surface MS in the irradiation direction of the build light EL#2 by using the stage driving system 32 to move the stage 31 along the irradiation direction of the build light EL#2.

The build light EL#2 that has been emitted from the focus control optical system 2155 enters the Galvano mirror 2156. The Galvano mirror 2156 changes an emitting direction of the build light EL#2 emitted from the Galvano mirror 2156 by deflecting the build light EL#2. Therefore, the Galvano mirror 2156 may be referred to as a deflection optical system.

When the emitting direction of the build light EL#2 emitted from the Galvano mirror 2156 is changed, an emitting position from which the fθ lens 2162 (especially, its emitting surface 2163) emits the build light EL#2 is changed, as illustrated in FIG. 4 illustrating the build light EL#2 emitted from the fθ lens 2162 that is the terminal optical member of the irradiation optical system 211. In this case, the Galvano mirror 2156 may be considered to change (in other words, move) the emitting position, from which the fθ lens 2162 emits the build light EL#2, by deflecting the build light EL#2. The Galvano mirror 2156 may be considered to serve as a position change apparatus that is configured to change the emitting position from which the fθ lens 2162 emits the build light EL#2. Alternatively, when the emitting direction of the build light EL#2 emitted from the Galvano mirror 2156 is changed, an emitting angle at which the fθ lens 2162 (especially, its emitting surface 2163) emits the build light EL#2 is changed, in addition to or instead of the emitting position from which the fθ lens 2162 emits the build light EL#2 being changed. In this case, the Galvano mirror 2156 may be considered to change (in other words, move) the emitting angle, at which the fθ lens 2162 emits the build light EL#2, by deflecting the build light EL#2. The Galvano mirror 2156 may be considered to serve as a position change apparatus that is configured to change the emitting angle at which the fθ lens 2162 emits the build light EL#2.

When at least one of the emitting position and the emitting angle from / at which the fθ lens 2162 emits the build light EL#2 is changed, the target irradiation area EA#2 that is irradiated with the build light EL#2 on the build surface MS moves, as illustrated in FIG. 4. Namely, as illustrated in FIG. 4, the irradiation position that is irradiated with the build light EL#2 on the build surface MS moves.

Again in FIG. 3, the Galvano mirror 2156 includes an X scanning mirror 2156MX, an X scanning motor 2156AX, a Y scanning mirror 2156MY, and a Y scanning motor 2156AY, for example. The build light EL#2 that has been emitted from the focus control optical system 2155 enters the X scanning mirror 2156MX. The X scanning mirror 2156MX reflects the build light EL#2 that has entered the X scanning mirror 2156MX toward the Y scanning mirror 2156MY. The Y scanning mirror 2156MY reflects the build light EL#2 that has entered the Y scanning mirror 2156MY toward the third optical system 216. Incidentally, each of the X scanning mirror 2156MX and the Y scanning mirror 2156MY may be referred to as a Galvano mirror.

The X scanning motor 2156AX swings or rotates the X scanning mirror 2156MX around a rotational axis along the Y-axis. As a result, an angle of the X scanning mirror 2156MX relative to an optical path of the build light EL#2 entering the X scanning mirror 2156MX is changed. In this case, the build light EL#2 moves along the X-axis direction, which intersects the optical axis EX of the irradiation optical system 211, due to the swing or the rotation of the X scanning mirror 2156MX. As a result, the build surface MS is scanned with the build light EL#2 along the X-axis direction. Namely, the irradiation position of the build light EL#2 on the build surface MS is changed along the X-axis direction. In other words, the target irradiation area EA#2 (namely, the irradiation position of the build light EL#2) moves along the X-axis direction on the build surface MS.

The Y scanning motor 2156AY swings or rotates the Y scanning mirror 2156MY around a rotational axis along the X-axis. As a result, an angle of the Y scanning mirror 2156MY relative to an optical path of the build light EL#2 entering the Y scanning mirror 2156MY is changed. In this case, the build light EL#2 moves along the Y-axis direction, which intersects the optical axis EX of the irradiation optical system 211, due to the swing or the rotation of the Y scanning mirror 2156MY. As a result, the build surface MS is scanned with the build light EL#2 along the Y-axis direction. Namely, the irradiation position of the build light EL#2 on the build surface MS is changed along the Y-axis direction. In other words, the target irradiation area EA#2 (namely, the irradiation position of the build light EL#2) moves along the Y-axis direction on the build surface MS.

In the present example embodiment, a virtual area in which the Galvano mirror 2156 moves the target irradiation area EA#2 on the build surface MS is referred to as a build unit area BSA (especially, the build unit area BSA#2). In this case, the target irradiation area EA#2 may be considered to move on a surface of the build surface MS that overlaps with the build unit area BSA#2. Specifically, the virtual area in which the Galvano mirror 2156 moves the target irradiation area EA#2 on the build surface MS in a state where the positional relationship between the irradiation optical system 211 and the build surface MS is fixed (namely, is not changed) is referred to as the build unit area BSA (especially, the build unit area BSA#2). The build unit area BSA#2 indicates a virtual area (in other words, a range) in which the build head 21 actually performs the additive manufacturing by using the build light EL#2 in a state where the positional relationship between the irradiation optical system 211 and the build surface MS is fixed. The build unit area BSA#2 indicates a virtual area (in other words, a range) that is actually scanned by the build head 21 with the build light EL#2 in a state where the positional relationship between the irradiation optical system 211 and the build surface MS is fixed. The build unit area BSA#2 indicates an area (in other words, a range) in which the target irradiation area EA#2 actually moves in a state where the positional relationship between the irradiation optical system 211 and the build surface MS is fixed. Therefore, the build unit area BSA#2 may be regarded as a virtual area that is determined with respect to the build head 21 (especially, the irradiation optical system 211). Namely, the build unit area BSA#2 may be regarded as a virtual area positioned at a position that is determined with respect to the build head 21 (especially, the irradiation optical system 211) on the build surface MS. Incidentally, a maximum area in which the Galvano mirror 2156 is allowed to move the target irradiation area EA#2 on the build surface MS in a state where the positional relationship between the irradiation optical system 211 and the build surface MS is fixed may be referred to as the build unit area BSA#2. Moreover, the build unit area BSA#2 may be regarded as a virtual area (typically, a two-dimensional area) that is set with respect to the build head 21 (especially, the irradiation optical system 211) on a side toward which the build light EL1 emitted from the irradiation optical system 211 propagates.

In this case, the build system SYS may move the target irradiation area EA#2 in the build unit area BSA#2 by using the Galvano mirror 2156. Therefore, an operation for deflecting the build light EL#2 by using the Galvano mirror 2156 may be considered to be equivalent to an operation for moving the target irradiation area EA#2 in the build unit area BSA#2. Furthermore, as described above, the melt pool MP#2 is formed by irradiating the target irradiation area EA#2 with the build light EL#2. In this case, the build system SYS may be considered to move the melt pool MP#2 in the build unit area BSA#2 by using the Galvano mirror 2156. Therefore, the operation for deflecting the build light EL#2 by using the Galvano mirror 2156 may be considered to be equivalent to an operation for moving the melt pool MP#2 in the build unit area BSA#2. Namely, the operation for moving the target irradiation area EA#2 in the build unit area BSA#2 may be considered to be equivalent to the operation for moving the melt pool MP#2 in the build unit area BSA#2.

Incidentally, as described above, even when at least one of the build head 21 and the stage 31 moves, the target irradiation area EA#2 moves on the build surface MS. However, when at least one of the build head 21 and the stage 31 moves, the relative positional relationship between the Galvano mirror 2156 and the build surface MS changes. As a result, the build unit area BSA#2 that is determined with respect to the build head 21 (namely, the build unit area BSA#2 in which the Galvano mirror 2156 moves the target irradiation area EA#2 on the build surface MS) moves on the build surface MS. Therefore, in the present example embodiment, the operation for moving at least one of the build head 21 and the stage 31 may be considered to be equivalent to an operation for moving the build unit area BSA#2 relative to the build surface MS.

A characteristic (for example, the shape, a movement aspect, and so on) of the build unit area BSA#2 may be the same as a characteristic of the above-described build unit area BSA#1. The movement aspect (for example, the scanning trajectory and so on) of the target irradiation area EA#2 in the build unit area BSA#2 may be the same as the movement aspect of the target irradiation area EA#1 in the above-described build unit area BSA#1. Therefore, a detailed description of the characteristic of the build unit area BSA#2 and the movement aspect (for example, the scanning trajectory and so on) of the target irradiation area EA#2 in the build unit area BSA#2 is omitted, however, one example thereof will be briefly described below. As illustrated in FIG. 5(a), the Galvano mirror 2156 may deflect the build light EL#2 so that the target irradiation area EA#2 moves along a single scanning direction in the build unit area BSA#2 under the assumption that the build unit area BSA#2 is stationary (namely, does not move) on the build surface MS. The build unit area BSA#2, which is illustrated in FIG. 5(a), may move on the build surface MS along the target movement trajectory MT0, thereby, the target irradiation area EA#2 may move on the build surface MS along a movement trajectory MT#2 illustrated in FIG. 5(b) (for example, a wave-shaped movement trajectory MT#2 that oscillates around the target movement trajectory MT0). As illustrated in FIG. 6(a) and FIG. 6(b), the Galvano mirror 2156 may deflect the build light EL#2 so that the target irradiation area EA#2 moves along a plurality of scanning directions in the build unit area BSA#2 under the assumption that the build unit area BSA#2 is stationary (namely, does not move) on the build surface MS.

Incidentally, an operation for periodically moving the target irradiation area EA#2 on the build surface MS as illustrated in each of FIG. 5(a), FIG. 6(a) and FIG. 6(b) may be referred to as a wobbling operation. In other words, an operation for periodically moving (in other words, deflecting) the build light EL#2 so that the target irradiation area EA#2 periodically moves on the build surface MS may be referred to as the wobbling operation.

Typically, the build unit area BSA#1 coincides with the build unit area BSA#2. Namely, the build unit area BSA#1 is the same as the build unit area BSA#2. Therefore, the Galvano mirror 2156 may be considered to deflect the build light EL#2 so that the target irradiation area EA#2 moves in the build unit area BSA#1. The Galvano mirror 2146 may be considered to deflect the build light EL#1 so that the target irradiation area EA#1 moves in the build unit area BSA#2. However, the build unit area BSA#1 and the build unit area BSA#2 may be partially different from each other.

In a case where the build surface MS is irradiated with the build light EL#2 so that the target irradiation area EA#2 moves in the build unit area BSA#2, the melt pool MP#2 is formed in at least a part of the build unit area BSA#2. As a result, the build object is built in the build unit area BSA#2. Here, as described above, the build unit area BSA#2 is the area that has a width along a direction that intersects the movement direction of the build unit area BSA#2 on the build surface MS (specifically, a direction along which the target movement trajectory MT0 extends). In this case, the build object that has a width along the direction intersecting the target movement trajectory MT0 of the build unit area BSA#2 is built on the build surface MS. For example, in the example illustrated in FIG. 5(a) and FIG. 5(b), the build object that has a width along the X-axis direction and that extends along the Y-axis direction is built. For example, in the example illustrated in FIG. 6(a) and FIG. 6(c), the build object that has a width along the X-axis direction and that extends along the Y-axis direction is built. For example, in a case where the build unit area BSA illustrated in FIG. 6(b) moves along the Y-axis direction, the build object that has a width along the X-axis direction and that extends along the Y-axis direction is built.

In a case where the build surface MS is irradiated with the build light EL#2 so that the target irradiation area EA#2 moves in the build unit area BSA#2, the Galvano mirror 2156 scans the build unit area BSA#2 with the build light EL#2. Therefore, there is a lower possibility that an amount of the energy transferred from the build light EL#2 to the build unit area BSA#2 varies in the build unit area BSA#2, compared to a case where the build surface MS is irradiated with the build light EL#2 without using the Galvano mirror 2156. Namely, it is possible to uniform the amount of the energy transferred from the build light EL#2 to the build unit area BSA#2. As a result, the build system SYS can build the build object on the build surface MS with relatively high build accuracy.

However, the build system SYS may not irradiate the build surface MS with the build light EL#2 so that the target irradiation area EA#2 moves in the build unit area BSA#2. The build system SYS may irradiate the build surface MS with the build light EL#2 without using the Galvano mirror 2156. In this case, the target irradiation area EA#2 may move on the build surface MS due to the movement of at least one of the build head 21 and the stage 31.

Again in FIG. 4, the build light EL#2 that has been reflected by the parallel plate 2152 enters the power meter 2153. The power meter 2153 is one specific example of an electrical component that is used to control the build light EL#2. Specifically, the power meter 2153 is configured to detect the intensity of the build light EL#2 that has entered the power meter 2153. For example, the power meter 2153 may include a light receiving element that detects the build light EL#2 as light. Alternatively, the amount of the energy generated by the build light EL#2 is larger as the intensity of the build light EL#2 is higher. As a result, the amount of heat generated by the build light EL#2 is larger. Therefore, the power meter 2153 may detect the intensity of the build light EL#2 by detecting the build light EL#2 as heat. In this case, the power meter 2153 may include a heat detection element that detects the heat of the build light EL#2.

As described above, the build light EL#2 that has been reflected by the parallel plate 2152 enters the power meter 2153. Therefore, the power meter 2153 detects the intensity of the build light EL#2 that has been reflected by the parallel plate 2152. Since the parallel plate 2152 is positioned on the optical path of the build light EL#2 between the light source 4#2 and the Galvano mirror 2156, the power meter 2153 may be considered to detect the intensity of the build light EL#2 propagating in the optical path between the light source 4#2 and the Galvano mirror 2156. In this case, the power meter 2153 can stably detect the intensity of the build light EL#2 without being affected by the deflection of the build light EL#2 by the Galvano mirror 2156. However, the position of the power meter 2153 is not limited to the example illustrated in FIG. 3. For example, the power meter 2153 may detect the intensity of the build light EL#2 propagating in the optical path between the Galvano mirror 2156 and the build surface MS. The power meter 2153 may detect the intensity of the build light EL#2 propagating in the optical path in the Galvano mirror 2156.

A detected result by the power meter 2153 is output to the control unit 7. The control unit 7 may control (in other words, change) the intensity of the build light EL#2 based on the detected result by the power meter 2153 (namely, the detected result of the intensity of the build light EL#2). For example, the control unit 7 may control the intensity of the build light EL#2 so that the intensity of the build light EL#2 on the build surface MS is a desired intensity. In order to control the intensity of the build light EL#2, the control unit 7 may control the light source 4#2 to change the intensity of the build light EL#2 emitted from the light source 4#2 based on the detected result by the power meter 2153, for example. As a result, the build system SYS can appropriately build the build object on the build surface MS by irradiating the build surface MS with the build light EL#2 having an appropriate intensity.

As described above, the build light EL#2 has an intensity that is capable of melting the build material M. Therefore, there is a possibility that the build light EL#2 entering the power meter 2153 that has an intensity that is capable of melting the build material M. However, if the build light EL#2 that has an intensity that is capable of melting the build material M enters the power meter 2153, there is a possibility that the power meter 2153 is damaged by the build light EL#2. Therefore, the build light EL#2 having an intensity that is not high enough to damage the power meter 2153 may enter the power meter 2153. In other words, the second optical system 215 may reduce the intensity of the build light EL#2 entering the power meter 2153 so that the build light EL#2 having an intensity that is not high enough to damage the power meter 2153 enters the power meter 2153.

For example, in order to reduce the intensity of the build light EL#2 entering the power meter 2153, a reflectance of the parallel plate 2152 relative to the build light EL#2 may be set to be an appropriate value. Specifically, the intensity of the build light EL#2 entering the power meter 2153 is lower as the reflectance of the parallel plate 2152 relative to the build light EL#2 is lower. Therefore, the reflectance of the parallel plate 2152 may be set to a value that is low enough to realize a state where the build light EL#2 has an intensity that is not high enough to damage the power meter 2153 enters the power meter 2153. For example, the reflectance of the parallel plate 2152 may be lower than 10%. For example, the reflectance of the parallel plate 2152 may be lower than a few percent. As the parallel plate 2152 having such a low reflectance, bare glass may be used.

For example, in order to reduce the intensity of the build light EL#2 entering the power meter 2153, the second optical system 215 may allow the build light EL#2 to enter the power meter 2153 through a plurality of parallel plates 2152. Specifically, the build light EL#2, which has been reflected a plurality of times by the plurality of parallel plates 2152, respectively, may enter the power meter 2153. In this case, the intensity of the build light EL#2 reflected a plurality of times by the plurality of parallel plates 2152, respectively, is lower than the intensity of the build light EL#2 reflected once by a single parallel plate 2152. Therefore, there is a higher possibility that the build light EL#2 having an intensity that is not high enough to damage the power meter 2153 enters the power meter 2153.

A desired coating processing may be performed on a surface of the parallel plate 2152 (especially, at least one of an incident surface which the build light EL#2 enters and a reflective surface that reflects the build light EL#2). For example, an anti-reflection coating processing (AR: Anti Reflection Coating) may be performed on the surface of the parallel plate 2152.

The third optical system 216 includes a prism mirror 2161 and the fθ lens 2162.

Each of the build light EL#1 emitted from the first optical system 214 and the build light EL#2 emitted from the second optical system 215 enters the prism mirror 2161. The prism mirror 2161 reflects each of the build lights EL#1 and EL#2 toward the fθ lens 2162. The prism mirror 2161 reflects, toward the same direction (specifically, toward the fθ lens 2162), the build lights EL#1 and EL#2 that enters the prism mirror 2161 from different directions, respectively.

Incidentally, in a case where each of the build light EL#1 emitted from the first optical system 214 and the build light EL#2 emitted from the second optical system 215 can directly enter the fθ lens 2162, the third optical system 216 may not include the prism mirror 2161.

The fθ lens 2162 is an optical system for emitting each of the build lights EL#1 and EL#2, which have been reflected by the prism mirror 2161, toward the build surface MS. Namely, the fθ lens 2162 is an optical system for irradiating the build surface MS with each of the build lights EL#1 and EL#2 that have been reflected by the prism mirror 2161. As a result, the build surface MS is irradiated with the build lights EL#1 and EL#2 that have passed through the fθ lens 2162.

The fθ lens 2162 may be an optical element that is configured to condense each of the build lights EL#1 and EL#2 on a condensed plane. In this case, the fθ lens 2162 may be referred to as a condensing optical system. The condensed plane of the fθ lens 2162 may be set on the build surface MS, for example. In this case, the third optical system 216 may be considered to include a condensing optical system whose projection characteristic is fθ. However, the third optical system 216 may include a condensing optical system whose projection characteristic is different from fθ. For example, the third optical system 216 may include a condensing optical system whose projection characteristic is f×tanθ. For example, the third optical system 216 may include a condensing optical system whose projection characteristic is f×sinθ.

In the present example embodiment, an optical axis of the fθ lens 2162 is used as the optical axis EX of the irradiation optical system 211. Since the optical axis EX of the irradiation optical system 211 is an axis along the Z-axis as described above, the optical axis of the fθ lens 2162 is also an axis along the Z-axis. Therefore, the fθ lens 2162 emits each of the build lights EL#1 and EL#2 along the Z-axis direction. In this case, the irradiation direction of the build light EL#1 and the irradiation direction of the build light EL#2 may be the same direction. Both of the irradiation direction of the build light EL#1 and the irradiation direction of the build light EL#2 may be the Z-axis direction. Both of the irradiation direction of the build light EL#1 and the irradiation direction of the build light EL#2 may be directions along the optical axis EX of the fθ lens 2162. However, the irradiation direction of the build light EL#1 and the irradiation direction of the build light EL#2 may not be the same direction. The irradiation direction of the build light EL#1 and the irradiation direction of the build light EL#2 may be directions that are different from each other.

### (2) Operation of Build System SYS

Next, an operation of the build system SYS will be described.

### (2-1) Additive Manufacturing Operation performed by Build System SYS

First, the additive manufacturing (an additive manufacturing operation) performed by the build system SYS on the workpiece W will be described. The additive manufacturing performed on the workpiece W corresponds to an operation for building the build object so as to add, to the workpiece W, the build object that is integrated with (alternatively, separable from) the workpiece W. In the below-described description, the additive manufacturing for building the three-dimensional structural object ST that is the build object having a desired shape will be described, for convenience of description. As described above, the build system SYS builds the three-dimensional structural object ST by performing the additive manufacturing based on the Laser Metal Deposition. Therefore, the build system SYS may build the three-dimensional structural object ST by performing the existing additive manufacturing based on the Laser Metal Deposition. Next, one example of the operation for building the three-dimensional structural object ST by using the Laser Metal Deposition will be briefly described.

The build system SYS builds the three-dimensional structural object ST on the workpiece W based on three-dimensional model data (in other words, three-dimensional model information) and the like of the three-dimensional structural object ST that should be built. Measured data of the solid object measured by at least one of a non-illustrated measurement apparatus mounted in the build system SYS and a three-dimensional shape measurement device mounted separately from the build system SYS may be used as the three-dimensional model data. The build system SYS successively builds a plurality of layered partial structural objects (it is referred to as the "structural layer" in the below-described description) SL that are arranged along the Z-axis direction in order to build the three-dimensional structural object ST, for example. For example, the build system SYS builds, one by one in sequence, the plurality of structural layers SL based on data related to a plurality of layers that are obtained by slicing the three-dimensional model of the three-dimensional structural object ST along the Z-axis direction. As a result, the three-dimensional structural object ST that is a layered structural body in which the plurality of structural layers SL are stacked is built. Note that the structural layer SL may not be the build object having a layered shape. Next, a flow of an operation for forming the three-dimensional structural object ST by forming the plurality of structural layers SL one by one in sequence will be described.

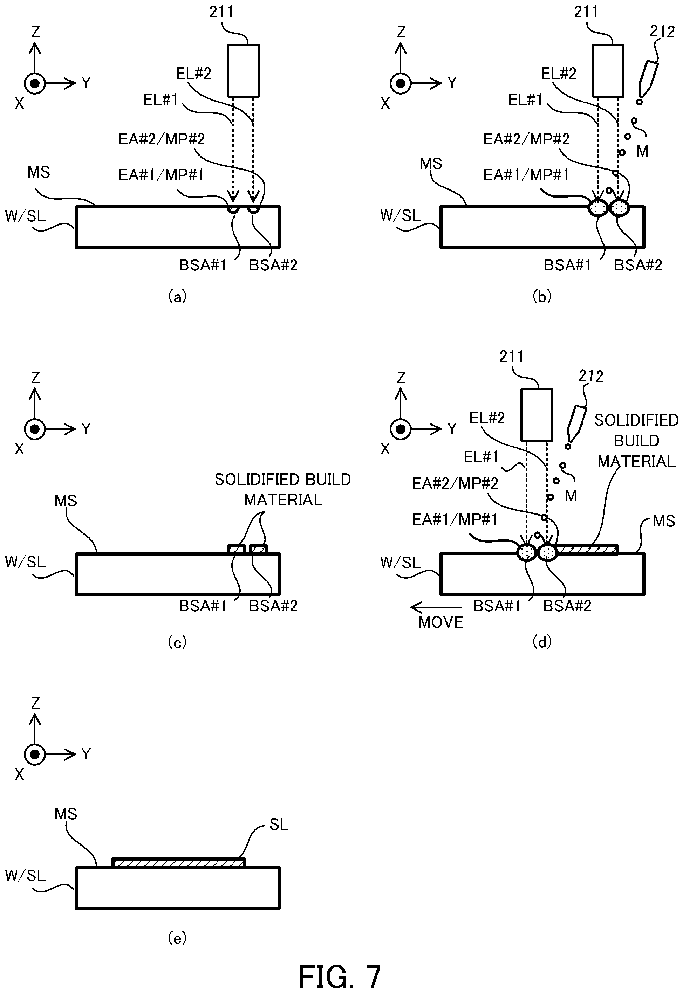

First, with reference to FIG. 7(a) to FIG. 7(e), an operation for building each structural layer SL will be described. The build system SYS moves at least one of the build head 21 and the stage 31 under the control of the control unit 7 so that the build unit areas BSA#1 and BSA#2 are set in a desired area on the build surface MS that corresponds to the surface of the workpiece W or the surface of the already built structural layer SL. Then, the irradiation optical system 211 irradiates the build unit areas BSA#1 and BSA#2 with the build lights EL#1 and EL#2, respectively. In this case, the condensed positions CP#1 and CP#2 on which the build lights EL#1#1 and EL#2 are condensed in the Z-axis direction, respectively, may be positioned on the build surface MS. Alternatively, the condensed positions CP#1 and CP#2 on which the build lights EL#1#1 and EL#2 are condensed in the Z-axis direction, respectively, may be away from the build surface MS. As a result, as illustrated in FIG. 7(a), the melt pools MP#1 and MP#2 are formed on the build surface MS that is irradiated with the build lights EL#1 and EL#2, respectively. Furthermore, as illustrated in FIG. 7(b), the build system SYS supplies the build material M from the material nozzle 212 under the control of the control unit 7. As a result, the build material M is supplied to each of the melt pools MP#1 and MP#2. The build material M supplied to the melt pool MP#1 is molten by the build light EL#1 with which the melt pool MP#1 is irradiated. Similarly, the build material M supplied to the melt pool MP#2 is molten by the build light EL#2 with which the melt pool MP#2 is irradiated.

Furthermore, the irradiation optical system 211 moves the target irradiation areas EA#1 and EA#2 in the build unit areas BSA#1 and BSA#2, respectively, along the scanning trajectory indicated by the above-described scanning control information by using the Galvano mirrors 2146 and 2156. Namely, the irradiation optical system 211 scans the build unit areas BSA#1 and BSA#2 with the build lights EL#1 and EL#2, respectively, along the scanning trajectory indicated by the above-described scanning control information by using the Galvano mirrors 2146 and 2156. After the melt pool MP#1 is no longer irradiated with the build light EL#1 due to the movement of the target irradiation area EA# 1, the build material M molten in the melt pool MP#1 is cooled and solidified (namely, coagulated). Similarly, after the melt pool MP#2 is no longer irradiated with the build light EL#2 due to the movement of the target irradiation area EA#2, the build material M molten in the melt pool MP#2 is cooled and solidified (namely, coagulated). Furthermore, the melt pools MP#1 and MP#2 move due to the movement of the target irradiation areas EA#1 and EA#2. As a result, as illustrated in FIG. 7(c), the build objects including the solidified build material M are deposited on the build surface MS in the build unit areas BSA#1 and BSA#2 in which the melt pools MP#1 and MP#2 move.

Incidentally, in FIG. 7(c), for convenience of description, the build object including the build material M solidified in the build unit area BSA#1 is physically separated from the build object including the build material M solidified in the build unit area BSA#2. However, the build object including the build material M solidified in the build unit area BSA#1 may be integrated with the build object including the build material M solidified in the build unit area BSA#2. Especially in a case where the build unit areas BSA#1 and BSA#2 coincide with each other (alternatively, partially overlap with each other), the build object including the build material M solidified in the build unit area BSA#1 may be integrated with the build object including the build material M solidified in the build unit area BSA#2.

In a period during which the target irradiation areas EA#1 and EA#2 move in the build unit areas BSA#1 and BSA#2, respectively, the build system SYS may move at least one of the build head 21 and the stage 31 so that the build unit areas BSA#1 and BSA#2 move on the build surface MS. The build system SYS may relatively move the irradiation optical system 211 of the build head 21 and the workpiece W so that the build unit areas BSA#1 and BSA#2 move on the build surface MS. Namely, the build system SYS may move each of the target irradiation areas EA#1 and EA#2 in the build unit areas BSA#1 and BSA#2 and move the build unit areas BSA#1 and BSA#2 on the build surface MS in parallel.

Alternatively, in the period during which the target irradiation areas EA#1 and EA#2 move in the build unit areas BSA#1 and BSA#2, respectively, the build system SYS may not move the build head 21 and the stage 31 to prevent the build unit areas BSA#1 and BSA#2 from moving on the build surface MS. In this case, after the additive manufacturing (namely, the building) in the build unit areas BSA#1 and BSA#2 is completed, the build system SYS may move at least one of the build head 21 and the stage 31 so that the build unit areas BSA#1 and BSA#2 are set in another area on the build surface MS . Namely, the build system SYS may move at least one of the build head 21 and the stage 31 so that the build unit areas BSA#1 and BSA#2 move on the build surface MS after the additive manufacturing (namely, the building) in the build unit areas BSA#1 and BSA#2 is completed. In this case, the build system SYS may move at least one of the build head 21 and the stage 31 so that an area on which the build unit areas BSA#1 and BSA#2 have already been set (namely, an area in which the additive manufacturing has already been performed) on the build surface MS is adjacent to an area on which the build unit areas BSA#1 and BSA#2 are newly set (namely, an area in which the additive manufacturing is performed next) on the build surface MS. Especially, the build system SYS may move at least one of the build head 21 and the stage 31 so that the area on which the build unit areas BSA#1 and BSA#2 have already been set on the build surface MS does not overlap with the area on which the build unit areas BSA#1 and BSA#2 are newly set on the build surface MS. However, the build system SYS may move at least one of the build head 21 and the stage 31 so that the area on which the build unit areas BSA#1 and BSA#2 have already been set on the build surface MS partially overlaps with the area on which the build unit areas BSA#1 and BSA#2 are newly set on the build surface MS.

The build system SYS repeats a series of build process including the formation of the melt pool MP#1 by the irradiation with the build light EL#1 in the build unit area BSA#1, the formation of the melt pool MP#2 by the irradiation with the build light EL#2 in the build unit area BSA#2, the supply of the build material M to the melt pools MP#1 and MP#2, the melting of the supplied build material M, and the solidification of the molten build material M while moving the build unit areas BSA#1 and BSA#2 along the target movement trajectory MT0, as illustrated in FIG. 7(d). In this case, the build object that has the width along the direction intersecting the target movement trajectory MT0 is built on the build surface MS due to the movement of each of the build unit areas BSA#1 and BSA#2. For example, in a case where each of the build unit areas BSA#1 and BSA#2 moves as illustrated in FIG. 5(a) and FIG. 5(b), the build object that has a width along the X-axis direction and that extends along the Y-axis direction is built. For example, in a case where each of the build unit areas BSA#1 and BSA#2 moves as illustrated in FIG. 6(a) and FIG. 6(c), the build object that has a width along the X-axis direction and that extends along the Y-axis direction is built.

As a result, as illustrated in FIG. 7(e), the structural layer SL corresponding to the build object that is an aggregation of the build material M, which has been solidified after being molten, is built on the build surface MS. Namely, the structural layer SL, which corresponds to an aggregation of the build object that has been built on the build surface MS in a pattern based on the target movement trajectory MT0 of the build unit areas BSA#1 and BSA#2, is built. Namely, the structural layer SL having a shape based on the target movement trajectory MT0 of the build unit areas BSA#1 and BSA#2 in a planar view is built.

Incidentally, in a case where the target irradiation area EA#1 is set at the area on which the build object should not be built, the build system SYS may not irradiate the target irradiation areas EA#1 with the build light EL#1. Alternatively, the build system SYS may irradiate the target irradiation areas EA#1 with the build light EL#1 and stop the supply of the build material M. Alternatively, the build system SYS may supply the build material M to the target irradiation areas EA#1 and irradiate the target irradiation areas EA#1 with the build light EL#1 having an intensity by which the melt pool MP is not formed. The same may apply to a case where the target irradiation area EA#2 is set at the area on which the build object should not be built.

The target movement trajectory MT0 of each of the build unit areas BSA#1 and BSA#2 may be referred to as a processing path (in other words, a tool path) P. In this case, the control unit 7 may move at least one of the build head 21 and the stage 31 based on path information 700 indicating the target movement trajectory MT0 (namely, the processing path P) so that each of the build unit areas BSA#1 and BSA#2 moves along the target movement trajectory MT0 on the build surface MS.

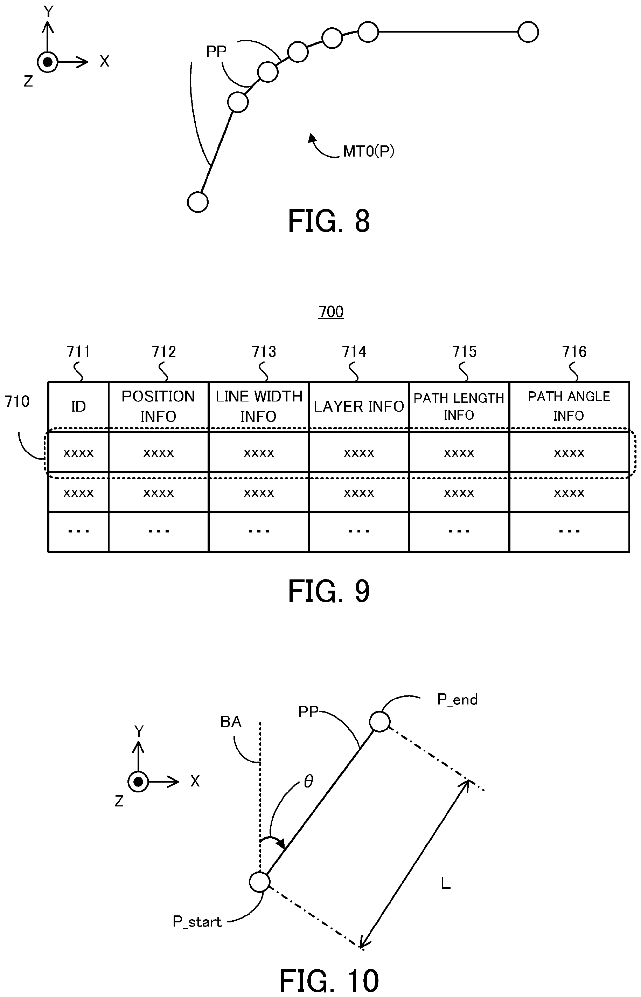

The path information 700 may indicate the target movement trajectory MT0 in a unit of a partial path PP that is obtained by dividing (in other words, segmentalizing) the target movement trajectory MT0 (the processing path P). Especially, the path information 700 may indicate the target movement trajectory MT0 in a unit of a linear partial path PP. For example, FIG. 8 schematically illustrates the target movement trajectory MT0 (the processing path PP) divided into a plurality of partial paths PP. In this case, the path information 700 may include partial path information 710 that is information related to the partial path PP and whose number is the same as the number of the patrial paths PP. Namely, the path information 700 may include a plurality of pieces of partial path information 710. Incidentally, the processing path P may be the movement trajectory of the target irradiation areas EA#1 and EA#2 in the XY plane, as illustrated in FIG. 8, or may be the movement trajectory of the target irradiation areas EA#1 and EA#2 in the XYZ space.

The path information 700 may be a single file that includes the plurality of pieces of partial path information 710. Alternatively, the path information 700 may be information that includes a plurality of files each of which includes a part of the plurality of pieces of partial path information 710.

FIG. 9 illustrates one example of the path information 700 that includes the partial path information 710. As illustrated in FIG. 9, the partial path information 710 may include ID information 711, position information 712, line width information 713, layer information 714, path length information 715, and path angle information 716. However, the partial path information 710 may not include at least one of the line width information 713, the layer information 714, the path length information 715, and the path angle information 716.

The ID information 711 is identification information for uniquely identifying the partial path PP.

The position information 712 indicates a position of the partial path PP. In the present example embodiment, as illustrated in FIG. 10 that schematically illustrates the partial path PP, the position information 712 may indicate a position of a start point P_start of the partial path PP and a position of an end point P_end of the partial path PP. Namely, the position information 712 indicates the position of the partial path PP by using the position of the start point P_start of the partial path PP and the position of the end point P_end of the partial path PP. Even in this case, since the partial path PP is linear as described above, the position information 712 can appropriately indicate the position of the partial path PP. Incidentally, in a case where the processing path P is the movement trajectory of the target irradiation areas EA#1 and EA#2 in the XYZ space as described above, the start point P_start and the end point P_end of the partial path PP position information 712 may be positions in the XYZ coordinate system.

Incidentally, a G-code for controlling a machine tool may be used as the path information 700 that includes the position information 712. In this case, the position information 712 may have a data format that conforms to the G-code. The path information 700 may have a data format that conforms to the G-code.

The line width information 713 indicates a target value of a width of the build object that is built along the partial path PP (in the below-described description, it is referred to as a "target line width"). Incidentally, the width of the build object may be referred to as a line width or a bead width. Specifically, as described above, the build object that has the width along the direction intersecting the target movement trajectory MT0 is built on the build surface MS due to the movement of each of the build unit areas BSA#1 and BSA#2 along the target movement trajectory MT0. For example, in a case where each of the build unit areas BSA#1 and BSA#2 moves along the Y-axis direction as illustrated in FIG. 11(a), the linear build object that has the width along the X-axis direction and that extends along the Y-axis direction is built on the build surface MS as illustrated in FIG. 11(b). Incidentally, the above-described structural layer SL corresponds to an aggregation of the linear build objects illustrated in FIG. 11(b). In this case, the line width information 713 may indicate the target value (namely, the target line width) of the width D of the linear build object, as illustrated in FIG. 11(b). Namely, the line width information 713 may include information related to the width of the linear build object (namely, a line) that should be built on the build surface MS.

Incidentally, the width D of the build object may mean a size of the build object along a direction intersecting the target movement trajectory MT0 of the build unit area BSA. Especially, the width D of the build object may mean a size of the build object along a direction that is orthogonal to the target movement trajectory MT0 of the build unit area BSA. The width D of the build object may mean a size of the build object along a direction that intersects a direction along which the build object extends. Especially, the width D of the build object may mean a size of the build object along a direction that is orthogonal to the direction along which the build object extends.

Incidentally, in a case where the G-code is used as the path information 700 that includes the position information 712, the control unit 7 (alternatively, an apparatus that is different from the control unit 7) may generate the line width information 713 based on the G-code. For example, the control unit 7 (alternatively, the apparatus that is different from the control unit 7) may generate the line width information 713 by calculating the target line width based on a ratio of an E value (for example, a parameter indicating the supplied amount of the build material M) of the G code and a below-described path length L. As a result, even in a case where the path information 700 does not include the line width information 713, the control unit 7 may acquire the line width information 713.

The layer information 714 indicates a layer position of the structural layer SL formed by the build object built along the partial path PP. Specifically, as described above, the three-dimensional structural object ST is an aggregation of the plurality of structural layers SL. The layer information 714 indicates the layer position of one structural layer SL, which is formed by the build object built along the partial path PP, of the plurality of structural layers SL. In other words, layer information 714 indicates which of the plurality of structural layers SL is the structural layer SL formed by the build object built along the partial path PP. For example, the layer information 714 may indicate the layer position of one structural layer SL by indicating a layer number of the one structural layer SL.

Incidentally, in a case where the G-code is used as the path information 700 that includes the position information 712, the control unit 7 (alternatively, the apparatus that is different from the control unit 7) may generate the layer information 714 based on the G-code. For example, the control unit 7 (alternatively, the apparatus that is different from the control unit 7) may generate the layer information 714 by dividing a Z value (for example, the movement distance in the Z-axis direction) of the G-code by a thickness of the structural layer SL. As a result, even in a case where the path information 700 does not include the layer information 714, the control unit 7 may acquire the layer information 714.

The path length information 715 indicates the path length L that is a length of the partial path PP. As illustrated in FIG. 10, the path length L means a size of the partial path PP along the direction along which the partial path PP extends. The size of the partial path PP along the direction along which the partial path PP extends may be a distance between the start point P_start of the partial path PP and the end point P_end of the partial path PP. Moreover, considering that the build object is built along the partial path PP, the path length L may be considered to indicate a length of the build object built along the partial path PP.

Incidentally, in a case where G-code is used as the path information 700 that includes the position information 712, the control unit 7 (alternatively, the apparatus that is different from the control unit 7) may generate the path length information 715 based on the G-code. For example, the control unit 7 (alternatively, the apparatus that is different from the control unit 7) may generate the path length information 715 by analyzing the G-code. For example, the control unit 7 (alternatively, the apparatus that is different from the control unit 7) may generate the path length information 715 by analyzing the G-code to calculate the distance between the start point P_start of the partial path PP and the end point P_end of the partial path PP. As a result, even in a case where the path information 700 does not include the path length information 715, the control unit 7 may acquire the path length information 715.

The path angle information 716 indicates a path angle θ of the partial path PP. The path angle θ of the partial path PP may mean an angle between the partial path PP and a base axis BA that extends from the start point P_start of the partial path PP along a base direction, as illustrated in FIG. 10. Namely, the path angle θ may be an angle (an intersection angle) at which the partial path PP intersects the base axis BA. In the below-described description, an example in which the path angle θ in a counterclockwise direction from the base axis BA(for example, in a direction along a right-hand screw around the Z-axis) is a positive angle and the path angle θ in a clockwise direction from the base axis BA (for example, a direction along a left-hand screw around the Z-axis) is a negative angle will be described.

The base direction along which the base axis BA extends may be fixed. For example, one direction along the XY plane may be used as the base direction. For example, the X-axis direction may be used as the base direction. For example, the Y-axis direction may be used as the base direction. Alternatively, the base direction along which the base axis BA extends may be changeable. For example, the base direction used to calculate the path angle θ of one partial path PP may be a direction along which another partial path PP, which precedes the one partial path PP, extends. For example, the base direction used to calculate the path angle θ of one partial path PP may be a direction along which at least one of a series of a plurality of partial paths PP, which extend from the start point P_start of the one partial path PP toward an opposite side of the one partial path PP, extends. For example, the base direction used to calculate the path angle θ of one partial path PP may be a direction along which another partial path PP, which precedes the partial path PP and whose path length L is equal to or longer than a predetermined length, extends. Incidentally, the base direction along which the base axis BA extends may be a direction in a plane in which the structural layer SL extends, and is not limited to the direction in the XY plane.

Incidentally, in a case where the G-code is used as the path information 700 that includes the position information 712, the control unit 7 (alternatively, the apparatus that is different from the control unit 7) may generate the path length information 715 based on the G-code. For example, the control unit 7 (alternatively, the apparatus that is different from the control unit 7) may generate the path angle information 716 by analyzing the G-code. As a result, even in a case where the path information 700 does not include the path angle information 716, the control unit 7 may acquire the path angle information 716.

The control unit 7 (alternatively, the apparatus different from the control unit 7) may generate the path angle information 716 and store the generated path angle information 716 in the file that includes the information indicating the G-code. Alternatively, the control unit 7 (alternatively, the apparatus different from the control unit 7) may generate a file including the path angle information 716 as the file including the information indicating the G-code, and associate the generated file including the path angle information 716 with the file including the information indicating the G-code.

Alternatively, the control unit 7 (alternatively, the apparatus that is different from the control unit 7, the same may apply to this paragraph) may generate the path angle information 716 based on the position of the start point P_start of the partial path PP and the position of the end point P_end of the partial path PP. For example, as illustrated in FIG. 12, the control unit 7 may calculate a movement direction vector d, which indicates a direction along which the partial path PP extends, based on a position coordinate Pstart indicating the position of the start point P_start and a position coordinates Pend indicating the position of the end point P_end. As one example, the control unit 7 may calculate the movement direction vector d by using an equation "d = (Pend - Pstart) / (∥Pend - Pstart∥). Then, the control unit 7 may calculate an absolute value |θ| of the path angle θ based on the movement direction vector d and a unit vector e along the base direction (in the example illustrated in FIG. 12, a unit vector ey along the Y-axis direction). As one example, the control unit 7 may calculate the absolute value of the path angle θ by using an equation "|θ| = arccos(d·ey). Incidentally, "d·ey" means an inner product of the movement direction vector d and the unit vector ey. Furthermore, the control unit 7 may calculate a sign of the path angle θ based on the movement direction vector d and the unit vector e along a direction intersecting the base direction (in the example illustrated in FIG. 12, a unit vector ex along the X-axis). As one example, the control unit 7 may calculate the sign of the path angle θ by using an equation "the sign of the path angle θ = -sgn(d·ex). Incidentally, "d·ex" means an inner product of the movement direction vector d and the unit vector ex. "sgn" is a function that returns a positive sign (for example, 1) in a case where an argument is a positive number, returns a negative sign (for example, -1) in a case where the argument is a negative number, and returns zero in a case where the argument is zero. Therefore, the path angle θ is a positive angle in a case where the function sgn returns the positive sign (for example, 1), the path angle θ is a negative angle in a case where the function sgn returns the negative sign (for example, -1), and the path angle θ is zero degree in a case where the function sgn returns zero.

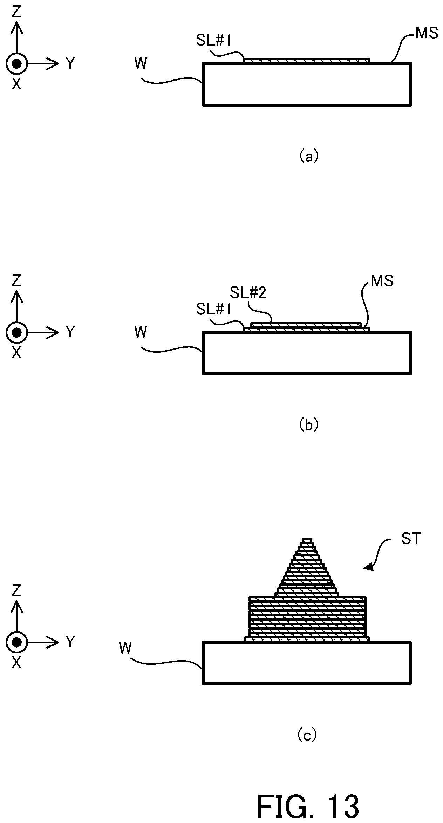

The build system SYS repeats the operation for building the structural layer SL based on the three-dimensional model data under the control of the control unit 7. Specifically, the control unit 7 first generates a plurality of slice data that correspond to the plurality of structural layers SL, respectively, by performing a slicing process on the three-dimensional model data by a layer pitch before performing the operation for building the structural layer SL. Then, the control unit 7 may generate the path information 700 based on the plurality of slice data. Alternatively, the apparatus that is different from the control unit 7 may generate the path information 700. Then, the build system SYS performs an operation for building a first structural layer SL#1 on the build surface MS that corresponds to the surface of the workpiece W based on the path information 700 (especially, at least one partial path information 710 corresponding to the structural layer SL#1). Then, the control unit 7 controls the build unit 2 and the stage unit 3 to build the first structural layer SL#1 based on the path information 700. As a result, as illustrated in FIG. 13(a), the structural layer SL#1 is built on the build surface MS. Then, the build system SYS sets a surface (namely, an upper surface) of the structural layer SL#1 to be a new build surface MS and builds a second structural layer SL#2 on the new build surface MS. In order to build the structural layer SL#2, first, the control unit 7 controls at least one of the head driving system 22 and the stage driving system 32 so that the build head 21 moves along the Z-axis direction relative to the stage 31. Specifically, the control unit 7 controls at least one of the head driving system 22 and the stage driving system 32 to move the build head 21 toward the +Z-axis side and / or to move the stage 31 toward the -Z-axis direction so that the build unit areas BSA#1 and BSA#2 are set on the surface of the structural layer SL#1 (namely, the new build surface MS). Then, the build system SYS builds the structural layer SL#2 on the structural layer SL#1 based on the path information 700 (especially, at least one partial information 710 corresponding to the structural layer SL#2), by performing an operation that is the same as the operation for building the structural layer SL#1 under the control of the control unit 7. As a result, as illustrated in FIG. 13(b), the structural layer SL#2 is built. Then, the same operation is repeated until all structural layers SL constituting the three-dimensional structural object ST that should be built on the workpiece W are built. As a result, the three-dimensional structural object ST is built by a layered structural object in which the plurality of structural layers SL are stacked, as illustrated in FIG. 13(c).

### (2-2) Rotation Control Operation

In the present example embodiment, the control unit 7 may perform a rotation control operation. The rotation control operation may include an operation for rotating the build unit area BSA (namely, at least one of the build unit areas BSA#1 and BSA#2). Specifically, the rotation control operation may include an operation for rotating the build unit area BSA around a desired rotational axis RX.

The rotational axis RX may be a rotational axis that intersects the build surface MS. The build surface MS is typically a surface that is along the XY plane. In this case, the rotational axis RX may be a rotational axis that intersects the XY plane. Especially , the rotational axis RX may be a rotational axis that is orthogonal to the XY plane. The rotational axis RX may be a rotational axis along the Z axis that intersects the XY plane. Especially, the rotational axis RX may be a rotational axis parallel to the Z axis that intersects the XY plane. The build surface MS is typically a surface that intersects the optical axis EX of the irradiation optical system 211. In this case, the rotational axis RX may be a rotational axis along the optical axis EX of the irradiation optical system 211. Especially, the rotational axis RX may be a rotational axis parallel to the optical axis EX of the irradiation optical system 211.

However, the rotational axis RX may not be the rotational axis that intersects the build surface MS. The rotational axis RX may not be the rotational axis that intersects the XY plane. Especially , the rotational axis RX may not be the rotational axis that is orthogonal to the XY plane. The rotational axis RX may not be the rotational axis along the Z axis that intersects the XY plane. Especially, the rotational axis RX may not be the rotational axis parallel to the Z axis that intersects the XY plane. The rotational axis RX may not be the rotational axis along the optical axis EX of the irradiation optical system 211. Especially , the rotational axis RX may not be the rotational axis parallel to the optical axis EX of the irradiation optical system 211.

The rotational axis RX of the build unit area BSA may be a rotational axis that passes through a center (for example, a center of mass) of the build unit area BSA. For example, the rotational axis RX of the build unit area BSA#1 may be a rotational axis that passes through a center (for example, a center of mass) of the build unit area BSA#1. For example, the rotational axis RX of the build unit area BSA#2 may be a rotational axis that passes through a center (for example, a center of mass) of the build unit area BSA#2. However, the rotational axis RX of the build unit area BSA may be a rotational axis that does not pass through the center (for example, the center of mass) of the build unit area BSA.

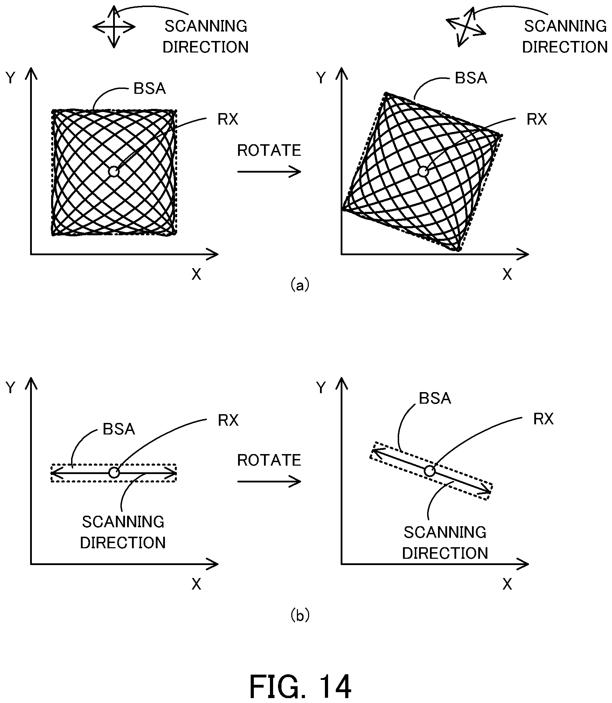

FIG. 14(a) and FIG. 14(b) illustrate one example of the build unit area BSAthat is rotated by the rotation control operation. FIG. 14(a) illustrates the rotation control operation that rotates the build unit area BSA illustrated in FIG. 6(b) around the rotational axis RX. Namely, FIG. 14(a) illustrates the rotation control operation that rotates the build unit area BSA, in which the target irradiation area EA moves along the plurality of scanning directions, around the rotational axis. On the other hand, FIG. 14(b) illustrates the rotation control operation that rotates the build unit area BSA illustrated in FIG. 5(a) around the rotational axis RX. Namely, FIG. 14(b) illustrates the rotation control operation that rotates the build unit area BSA, in which the target irradiation area EA moves along the single scanning direction, around the rotational axis.

As illustrated in FIG. 14(a) and FIG. 14(b), when the build unit area BSA rotates, the scanning direction of the target irradiation area EA in the build unit area BSA changes. Specifically, when the build unit area BSA rotates around the rotational axis RX, the scanning direction of the target irradiation area EA also rotates around the rotational axis RX. Therefore, the rotation control operation may be considered to be equivalent to an operation for changing (for example, rotating) the scanning direction of the target irradiation area EA in the build unit area BSA.

Moreover, as described above, the periodic movement of the target irradiation area EA may be regarded as the movement that includes the simple harmonic motion. In this case, as described above, the scanning direction along which the target irradiation area EA#1 periodically moves may be regarded as the direction of the simple harmonic motion. Therefore, the rotation control operation may be considered to be equivalent to an operation for changing (for example, rotating) the direction of the simple harmonic motion of the target irradiation area EA in the build unit area BSA.

Moreover, as described above, the emitting position (alternatively, the emitting angle, the same may apply to this paragraph) from / at which the fθ lens 2162 (especially, its emitting surface 2163) emits the build light EL is changed, and as a result, the target irradiation area EA moves on the build surface MS. In this case, as described above, the scanning direction along which the target irradiation area EA periodically moves may be considered to be equivalent to the movement direction along which the emitting position of the build light EL periodically moves on the emitting surface 2163 of the fθ lens 2162. Therefore, the rotation control operation may be considered to be equivalent to an operation for changing (for example, rotating) the movement direction along which the emitting position of the build light EL periodically moves on the emitting surface 2163 of the fθ lens 2162.

Moreover, as described above, the scanning direction of the target irradiation area EA in the build unit area BSA may intersect the target movement trajectory MT0 of the build unit area BSA. Therefore, the rotation control operation may be considered to be equivalent to an operation for changing (for example, rotating) the direction in which the target irradiation area EA intersects the target movement trajectory MT0 of the build unit area BSA. Namely, the rotation control operation may be considered to be equivalent to an operation for changing (for example, rotating) the direction in which the target irradiation area EA, which moves in the build unit area BSA by the Galvano mirror 2146 or 2156, intersects the target movement trajectory MT0 of the build unit area BSA. The rotation control operation may be considered to be equivalent to an operation for changing (for example, rotating) the movement direction along which the target irradiation area EA moves to intersect the target movement trajectory MT0 of the build unit area BSA in the build unit area BSA by the Galvano mirror 2146 or 2156. The rotation control operation may be considered to be equivalent to an operation for changing a pattern in which the target irradiation area EA moves in the build unit area BSA along a direction intersecting the target movement trajectory MT0 of the build unit area BSA by the Galvano mirror 2146 or 2156.

As illustrated in FIG. 14(a) and FIG. 14(b), when the build unit area BSA rotates, the scanning trajectory of the target irradiation area EA in the build unit area BSA also rotates. Specifically, when the build unit area BSA rotates around the rotational axis RX, the scanning trajectory of the target irradiation area EA also rotates around the rotational axis RX. Therefore, the rotation control operation may be considered to be equivalent to an operation for rotating the scanning trajectory of the target irradiation area EA in the build unit area BSA.

As described above, the virtual area in which the Galvano mirror 2146 moves the target irradiation area EA#1 on the build surface MS is the build unit area BSA#1. Therefore, the control unit 7 may rotate the build unit area BSA#1 by controlling the Galvano mirror 2146. Namely, the control unit 7 may control the Galvano mirror 2146 so as to rotate the build unit area BSA#1.

As described above, the virtual area in which the Galvano mirror 2156 moves the target irradiation area EA#2 on the build surface MS is the build unit area BSA#2. Therefore, the control unit 7 may rotate the build unit area BSA#2 by controlling the Galvano mirror 2156. Namely, the control unit 7 may control the Galvano mirror 2156 so as to rotate the build unit area BSA#1.

The control unit 7 may change (in other words, control or adjust) a rotational amount of the build unit area BSA. Namely, the rotational amount of the build unit area BSA may be variable.

The rotational amount of the build unit area BSA may be considered to be equivalent to a rotational angle of the build unit area BSA. The rotational angle of the build unit area BSA may mean the rotational angle of the build unit area BSA from the build unit area BSA having a reference pose. In this case, the rotational angle of the build unit area BSA having the reference pose may be defined as 0 degrees. The build unit area BSA in which the scanning direction of the target irradiation area EA in the build unit area BSA is the X-axis direction or the Y-axis direction may be used as the build unit area BSA having the reference pose, as illustrated in left figures of FIG. 14(a) and FIG. 14(b).

An operation for changing the rotational amount of the build unit area BSA may be considered to be equivalent to an operation for changing the scanning direction of the target irradiation area EA in the build unit area BSA. For example, the operation for changing the rotational amount of the build unit area BSA from one rotational amount to another rotational amount, which is different from the one rotational amount, may be considered to be equivalent to the operation for changing the scanning direction of the target irradiation area EA in the build unit area BSA from one direction to another direction, which is different from the one direction. The operation for changing the rotational amount of the build unit area BSA may be considered to be equivalent to an operation for changing the direction of the simple harmonic motion of the target irradiation area EA in the build unit area BSA. For example, the operation for changing the rotational amount of the build unit area BSA from one rotational amount to another rotational amount may be considered to be equivalent to the operation for changing the direction of the simple harmonic motion of the target irradiation area EA in the build unit area BSA from one direction to another direction that is different from the one direction. The operation for changing the rotational amount of the build unit area BSA may be considered equivalent to an operation for changing the movement direction along which the emitting position (alternatively, the emitting angle) of the build light EL periodically moves on the emitting surface 2163 of the fθ lens 2162. For example, the operation for changing the rotational amount of the build unit area BSA from one rotational amount to another rotational amount may be considered to be equivalent to the operation for changing the movement direction along which the emitting position of the build light EL periodically moves on the emitting surface 2163 of the fθ lens 2162 from one direction to another direction that is different from the one direction. The operation for changing the rotational amount of the build unit area BSA may be considered to be equivalent to an operation for changing the direction along which the target irradiation area EA intersects the target movement trajectory MT0 of the build unit area BSA. For example, the operation for changing the rotational amount of the build unit area BSA from one rotational amount to another may be considered to be equivalent to the operation for changing the direction along which the target irradiation area EA intersects the target movement trajectory MT0 of the build unit area BSA from one direction to another direction that is different from the one direction. The operation for changing the rotational amount of the build unit area BSA may be considered to be equivalent to an operation for changing the pattern in which the target irradiation area EA moves along the direction intersecting the target movement trajectory MT0 of the build unit area BSA. For example, the operation for changing the rotational amount of the build unit area BSA from one rotational amount to another rotational amount may be considered to be equivalent to the operation for changing the pattern in which the target irradiation area EA moves along the direction intersecting the target movement trajectory MT0 of the build unit area BSA from one pattern to another pattern that is different from the one pattern.

Especially in the present example embodiment, the control unit 7 may perform the rotation control operation so that a difference between the scanning direction of the target irradiation area EA in the build unit area BSA and a width direction of the build object is reduced compared to a case where the rotation control operation is not performed.

For example, FIG. 15(a) illustrates the build unit area BSA and the build object in a case where the rotation control operation for rotating the build unit area BSA, in which the target irradiation area EA periodically moves along the single scanning direction, is performed. FIG. 15(b) illustrates the build unit area BSA and the build object in a case where the rotation control operation for rotating the build unit area BSA, in which the target irradiation area EA periodically moves along the single scanning direction, is not performed. As illustrated in FIG. 15(a) and FIG. 15(b), the control unit 7 may perform the rotation control operation so that the difference between the scanning direction of the target irradiation area EA and the width direction of the build object in a case where the rotation control operation is performed as illustrated in FIG. 15(a) is smaller than the difference between the scanning direction of the target irradiation area EA and the width direction of the build object in a case where the rotation control operation is not performed as illustrated in FIG. 15(b).

Incidentally, the width direction of the build object may mean a direction that intersects the target movement trajectory MT0 of the build unit area BSA. Especially, the width direction of the build object may mean a direction that is orthogonal to the target movement trajectory MT0 of the build unit area BSA. The width direction of the build object may mean a direction that intersects the direction along which the build object extends. Especially , the width direction of the build object may mean a direction that is orthogonal to the direction along which the build object extends.

For example, FIG. 15(c) illustrates the build unit area BSA and the build object in a case where the rotation control operation for rotating the build unit area BSA, in which the target irradiation area EA periodically moves along the plurality of scanning directions, is performed. FIG. 15(d) illustrates the build unit area BSA and the build object in a case where the rotation control operation for rotating the build unit area BSA, in which the target irradiation area EA periodically moves along the plurality of scanning directions, is not performed. As illustrated in FIG. 15(c) and FIG. 15(d), the control unit 7 may perform the rotation control operation so that the difference between the scanning direction of the target irradiation area EA and the width direction of the build object in a case where the rotation control operation is performed as illustrated in FIG. 15(c) is smaller than the difference between the scanning direction of the target irradiation area EA and the width direction of the build object in a case where the rotation control operation is not performed as illustrated in FIG. 15(d). Especially, the control unit 7 may perform the rotation control operation so that the difference between one scanning direction of the target irradiation area EA and the width direction of the build object in a case where the rotation control operation is performed is smaller than the difference between the same one scanning direction of the target irradiation area EA and the width direction of the build object in a case where the rotation control operation is not performed. In other words, the control unit 7 may perform the rotation control operation so that the difference between the direction of one simple harmonic motion and the width direction of the build object in a case where the rotation control operation is performed is smaller than the difference between the direction of the same one simple harmonic motion and the width direction of the build object in a case where the rotation control operation is not performed.

The difference between the scanning direction of the target irradiation area EA and the width direction of the build object may mean an angle between an axis that extends along the scanning direction of the target irradiation area EA and an axis that extends along the width direction of the build object. In this case, the control unit 7 may perform the rotation control operation so that the angle between the axis that extends along the scanning direction of the target irradiation area EA and the axis that extends along the width direction of the build object in a case where the rotation control operation is performed is smaller than the angle between the axis that extends along the scanning direction of the target irradiation area EA and the axis that extends along the width direction of the build object in a case where the rotation control operation is not performed.

Incidentally, the scanning direction of the target irradiation area EA in the build unit area BSA may be considered to be equivalent to the width direction of the build unit area BSA (namely, the width direction that intersects the target movement trajectory MT0). In this case, performing the rotation control operation so that the difference between the scanning direction of the target irradiation area EA in the build unit area BSA and the width direction of the build object is smaller than that in a case where the rotation control operation is not performed may be considered to be equivalent to performing the rotation control operation so that the difference between the width direction of the build unit area BSA and the width direction of the build object in the build unit area BSA is smaller than that in a case where the rotation control operation is not performed. Namely, the control unit 7 may perform the rotation control operation so that the difference between the scanning direction of the target irradiation area EA in the build unit area BSA and the width direction of the build object is smaller than that in a case where the rotation control operation is not performed.

In a case where the rotation control operation for reducing the difference between the scanning direction of the target irradiation area EA and the width direction of the build object is not performed, there is a possibility that the difference between the scanning direction of the target irradiation area EA in the build unit area BSA and the width direction of the build object is larger than an allowable amount as illustrated in FIG. 15(b) and FIG. 15(d). Especially, in a case where the build system SYS builds the linear build object whose extending direction changes(for example, a curved-shaped build object), there is a possibility that the difference between the scanning direction of the target irradiation area EA in the build unit area BSA and the width direction of the build object is larger than the allowable amount as the building of the build object progresses. As a result, there is a possibility that the build system SYS cannot build the linear build object whose width D is equal to the target line width indicated by the line width information 713. On the other hand, in a case where the rotation control operation for reducing the difference between the scanning direction of the target irradiation area EA and the width direction of the build object, there is a low possibility that the difference between the scanning direction of the target irradiation area EA in the build unit area BSA and the width direction of the build object is larger than the allowable amount as illustrated in FIG. 15(a) and FIG. 15(c). Especially, even in a case where the build system SYS builds the linear build object whose extending direction changes(for example, the curved-shaped build object), there is a low possibility that the difference between the scanning direction of the target irradiation area EA in the build unit area BSA and the width direction of the build object is larger than the allowable, because the rotational amount of the build unit area BSA is changed as the building of the build object progresses. As a result, the build system SYS can build the linear build object whose width D is equal to the target line width indicated by the line width information 713. Therefore, in a case where the rotation control operation is performed, the build accuracy of the build system SYS is improved, compared to case where the rotation control operation is not performed.

Incidentally, considering an effects achieved by the rotation control operation, the control unit 7 may perform the rotation control operation so that the difference between the scanning direction of the target irradiation area EA in the build unit area BSA and the width direction of the build object is smaller than the allowable amount. The control unit 7 may perform the rotation control operation so that the difference between the scanning direction of the target irradiation area EA in the build unit area BSA and the width direction of the build object is zero. The control unit 7 may perform the rotation control operation so that the scanning direction of the target irradiation area EA in the build unit area BSA is the same as the width direction of the build object.

As described above, the control unit 7 builds the build object that has the width along the direction intersecting the target movement trajectory MT0 and that extends along the target movement trajectory MT0 based on the path information 700 that indicates the target movement trajectory MT0 of the build unit area BSA. Therefore, it can be said that the path information 700 indicates information related to the width direction of the build object. Therefore, in the present example embodiment, the control unit 7 may change the rotational amount of the build unit area BSA based on the path information 700.

For example, the control unit 7 may calculate the rotational amount of the build unit area BSA positioned at one position on the build surface MS based on the path information 700. Then, the control unit 7 may change the rotational amount of the build unit area BSA so that the rotational amount of the build unit area BSA is equal to the calculated rotational amount when the build unit area BSA is positioned at the one position on the build surface MS. Namely, the control unit 7 may control the rotational amount of the build unit area BSA based on the path information 700.

For example, the control unit 7 may calculate a timing for changing the rotational amount of the build unit area BSA based on the path information 700, and change the rotational amount of the build unit area BSA at the calculated timing. Namely, the control unit 7 may control the timing for changing the rotational amount of the build unit area BSA based on the path information 700. The control unit 7 may control the timing for changing the rotational amount of the build unit area BSA from one rotational amount to another rotational amount based on the path information 700.

In the present example embodiment, the control unit 7 may perform at least one of a first rotation control operation, a second rotation control operation, and a third rotation control operation as the rotation control operation for changing the rotational amount of the build unit area BSA based on the path information 700. Next, the first rotation control operation, the second rotation control operation, and the third rotation control operation will be described in sequence.

### (2-2-1) First Rotation Control Operation

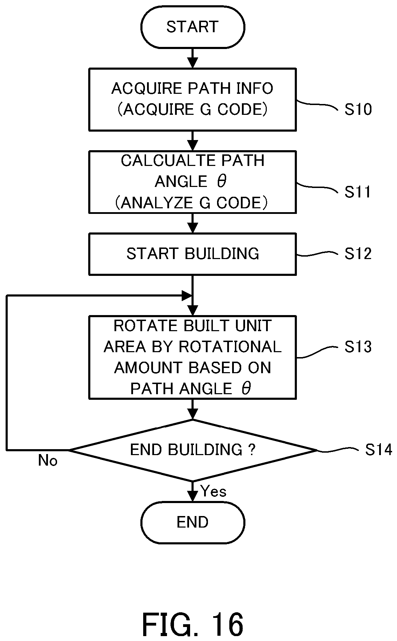

First, with reference to FIG. 16, the first rotation control operation will be described. FIG. 16 is a flowchart that illustrates a flow of the first rotation control operation.

As illustrated in FIG. 16, the control unit 7 acquires the path information 700 (a step S10). For example, the control unit 7 may acquire the path information 700 by generating the path information 700 by itself. For example, the control unit 7 may acquire the path information 700 generated by a path generation apparatus that is configured to generate the path information 700. Incidentally, in a case where the G-code is used as the path information 700 as described above, the control unit 7 may acquire the G-code as the path information 700.

Then, the control unit 7 calculates the path angle θ based on the path information 700 acquired at the step S10 (a step S11). For example, in a case where the G-code is used as the path information 700 as described above, the control unit 7 may calculate the path angle θ by analyzing the G-code. Specifically, the control unit 7 may identify the processing path P (namely, the target movement trajectory MT0 of the build unit area BSA) used by the build system SYS to build the build object from the path information 700, and calculate the path angle θ of each of the plurality of partial paths PP that are obtained by dividing the identified processing path P. Incidentally, since the method for calculating the path angle θ has already been described, its description is omitted. However, in a case where the path angle information 716 indicating the path angle θ is already included in the path information 700 as described above, the control unit 7 may not calculate the path angle θ at the step S11.

Then, the build system SYS starts building the build object (a step S12). After the building of the build object is started, the control unit 7 rotates the build unit area BSA based on the path angle θ calculated at the step S11 (a step S13). Specifically, the control unit 7 rotates the build unit area BSA, which moves along one partial path PP, by the target rotational amount determined based on the path angle θ of the one partial path PP (the step S13).

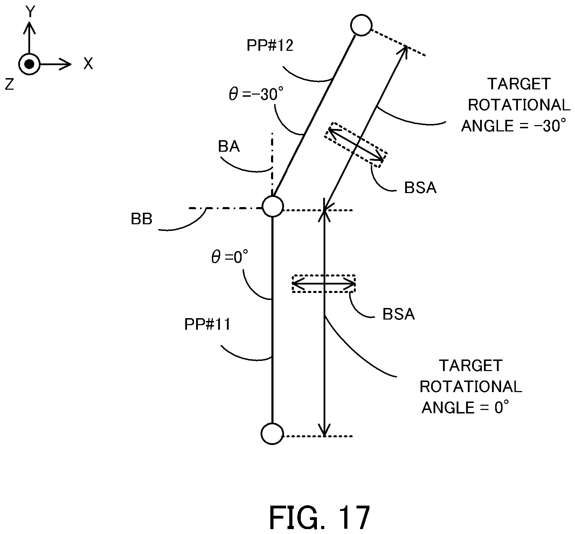

For example, FIG. 17 illustrates the build unit area BSA rotated by the first rotation control operation in a situation where the build unit area BSA moves along a partial path PP#11 whose path angle θ is 0 degrees, and then moves along a partial path PP#12 whose path angle θ is -30 degrees. Incidentally, FIG. 17 illustrates an example in which the angle at which the base axis BA, which extends along the base direction along the Y-axis, intersects the partial path PP is used as the path angle θ. Moreover, FIG. 17 illustrates an example in which the angle at which a base axis BB, which is orthogonal to the base axis BA, intersects an axis along the scanning direction of the target irradiation area EA in the build unit area BSA is used as the rotational angle indicating the rotational amount of the build unit area BSA. Incidentally, in the below-described description, an example in which the rotational angle in a counterclockwise direction from the base axis BB (for example, in a direction along a right-hand screw around the Z-axis) is a positive angle and the rotational angle in a clockwise direction from the base axis BB (for example, a direction along a left-hand screw around the Z-axis) is a negative angle will be described.

As illustrated in FIG. 17, the control unit 7 may rotate the build unit area BSA moving along the partial path PP#11 so that the scanning direction of the target irradiation area EA in the build unit area BSA moving along the partial path PP#11 intersects (in some cases, is orthogonal to) the partial path PP#11. In this case, the control unit 7 may rotate the build unit area BSA moving along the partial path PP#11 by the target rotational amount determined based on the path angle θ of the partial path PP#11. For example, the control unit 7 may calculate, based on the path angle θ of the partial path PP#11, the target rotational amount (for example, a target rotational angle) of the build unit area BSA moving along the partial path PP#11, and rotate the build unit area BSA moving along partial path PP#11 so that the rotational amount (for example, the rotational angle) of the build unit area BSA moving along partial path PP#11 is equal to the calculated target rotational amount (for example, the calculated target rotational angle). As one example, the control unit 7 may calculate an angle that is equal to the path angle θ of the partial path PP#11 as the target rotational angle of the build unit area BSA moving along the partial path PP#11. In this case, the control unit 7 may rotate the build unit area BSA moving along the partial path PP#11 so that the rotational angle of the build unit area BSA moving along the partial path PP#11 is equal to 0 degrees that is the path angle θ of the partial path PP#11. As a result, as illustrated in FIG. 17, the scanning direction of the target irradiation area EA in the build unit area BSA moving along the partial path PP#11 intersects (in some cases, is orthogonal to) the partial path PP#11.

Then, a state of the build unit area BSA changes from a first state in which the build unit area BSA moves along partial path PP#11 to a second state in which the build unit area BSA moves along partial path PP#12. Incidentally, the first state may be referred to as a first movement aspect of the build unit area BSA, and the second state may be referred to as a second movement aspect of the build unit area BSA. In this case, the control unit 7 may rotate the build unit area BSA moving along the partial path PP#12 so that the scanning direction of the target irradiation area EA in the build unit area BSA moving along the partial path PP#12 intersects (in some cases, is orthogonal to) the partial path PP#12. Namely, the control unit 7 may change the rotational amount of the build unit area BSA at a timing at which the state of the build unit area BSA changes from the first state to the second state. In this case, the control unit 7 may rotate the build unit area BSA moving along the partial path PP#12 by the target rotational amount determined based on the path angle θ of the partial path PP#12. For example, the control unit 7 may calculate, based on the path angle θ of the partial path PP#12, the target rotational amount (for example, the target rotational angle) of the build unit area BSA moving along the partial path PP#12, and rotate the build unit area BSA moving along partial path PP#12 so that the rotational amount (for example, the rotational angle) of the build unit area BSA moving along partial path PP#12 is equal to the calculated target rotational amount (for example, the calculated target rotational angle). As one example, the control unit 7 may calculate an angle that is equal to the path angle θ of the partial path PP#12 as the target rotational angle of the build unit area BSA moving along the partial path PP#12. In this case, the control unit 7 may rotate the build unit area BSA moving along the partial path PP#12 so that the rotational angle of the build unit area BSA moving along the partial path PP#12 is equal to -30 degrees that is the path angle θ of the partial path PP#12. As a result, as illustrated in FIG. 17, the scanning direction of the target irradiation area EA in the build unit area BSA moving along the partial path PP#12 intersects (in some cases, is orthogonal to) the partial path PP#12.

Then, the control unit 7 repeats the same operation until the build system SYS finish building the build object (a step S15). Namely, the control unit 7 may change the rotational amount of the build unit area BSA each time the path angle θ of the partial path PP changes. Specifically, the control unit 7 may change the rotational amount of the build unit area BSA from a first target rotational amount corresponding to a first angle to a second target rotational amount corresponding to a second angle at the timing at which the path angle θ of the partial path PP along which the build unit area BSA moves changes from the first angle to the second angle.

In this manner, the control unit 7 can change the rotational amount of the build unit area BSA in real time based on the path angle θ of the partial path PP along which the build unit area BSA moves by performing the first rotation control operation. Therefore, there is a low possibility that the difference between the scanning direction of the target irradiation area EA in the build unit area BSA and the width direction of the build object is larger than the allowable amount. As a result, the build accuracy of the build system SYS is improved.

Incidentally, in the example illustrated in FIG. 16, the control unit 7 calculates, based on the path angle θ of each partial path PP, the target rotational amount of the build unit area BSA moving along each partial path PP after the build system SYS starts building the build object. However, the control unit 7 may calculate in advance, based on the path angle θ of each partial path PP, the target rotational amount of the build unit area BSA moving along each partial path PP before the build system SYS starts building the build object. In this case, the control unit 7 may rotate the build unit area BSA moving along each partial path PP so that the rotational amount of the build unit area BSA moving along each partial path PP is equal to the target rotational amount, which corresponds to each partial path PP and which is calculated in advance, after the build system SYS starts building the build object. The same may apply to the second and third rotation control operations described below.

### (2-2-2) Second Rotation Control Operation

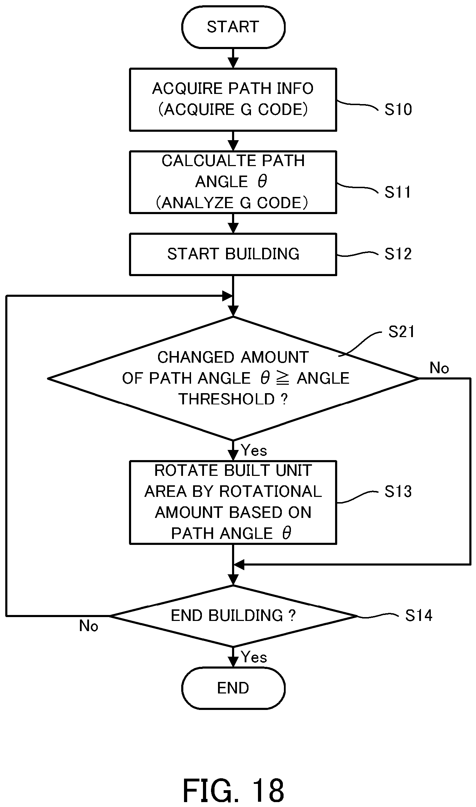

Next, with reference to FIG. 18, the second rotation control operation will be described. FIG. 18 is a flowchart that illustrates a flow of the second rotation control operation. Incidentally, a detailed description of a processing that is the same as the processing already described in the first rotation control operation will be omitted by assigning the same step number thereto.

As illustrated in FIG. 18, even in a case where the second rotation control operation is performed, the control unit 7 acquires the path information 700 (the step S10) and calculates the path angle θ (the step S11), as in a case where the first rotation control operation is performed. Then, the build system SYS starts building the build object (the step S12).

After the building of the build object is started, the control unit 7 rotates the build unit area BSA based on the path angle θ calculated at the step S11 (the step S13), even in a case where the second rotation control operation is performed, as in a case where the first rotation control operation is performed. However, in the second rotation control operation, the control unit 7 may not rotate the build unit area BSA in a case where the path angle θ of the partial path PP along which the build unit area BSA moves changes but a changed amount thereof is smaller than a predetermined angle threshold. Namely, the control unit 7 may maintain the rotational amount of the build unit area BSA at a current rotational amount in a case where the path angle θ of the partial path PP along which the build unit area BSA moves changes but the changed amount thereof is smaller than a predetermined angle threshold.

Specifically, the control unit 7 may not rotate the build unit area BSA in a case where the changed amount of the path angle θ is smaller than the predetermined angle threshold value in a state where the rotational amount of the build unit area BSA is fixed. Namely, the control unit 7 may not rotate the build unit area BSA in a case where the changed amount of the path angle θ since the last rotation of the build unit area BSA is smaller than the predetermined angle threshold value. On the other hand, the control unit 7 may rotate the build unit area BSA in a case where the changed amount of the path angle θ is equal to or larger than the predetermined angle threshold value in a state where the rotational amount of the build unit area BSA is fixed. Namely, the control unit 7 may rotate the build unit area BSA in a case where the changed amount of the path angle θ since the last rotation of the build unit area BSA is equal to or larger than the predetermined angle threshold value. In this manner, in the second rotation control operation, the control unit 7 rotates the build unit area BSA each time the path angle θ changes by the predetermined angle threshold value or more. Namely, in the second rotation control operation, the control unit 7 rotates the build unit area BSA each time the changed amount of the path angle θ is equal to or larger than the predetermined angle threshold value.

Therefore, in the second rotation control operation, the control unit 7 determines whether or not the changed amount of the path angle θ is equal to or larger than the predetermined angle threshold value (a step S21). Especially, the control unit 7 determines whether or not the changed amount of the path angle θ since the last change in the rotational amount of the build unit area BSA is equal to or larger than the predetermined angle threshold value (the step S21). In a case where it is determined as a result of the determination at the step S21 that the changed amount of the path angle θ is equal to or larger than the predetermined angle threshold value (the step S21: Yes), the control unit 7 rotates the build unit area BSA based on the path angle θ of the partial path PP along which the build unit area BSA moves at that time (the step S13). Namely, the control unit 7 rotates the rotational amount of the build unit area BSA by the target rotational amount determined based on the path angle θ of the partial path PP along which the build unit area BSA moves at that time (the step S13). On the other hand, in a case where it is determined as a result of the determination at the step S21 that the changed amount of the path angle θ is not equal to and larger than the predetermined angle threshold value (the step S21: No), the control unit 7 may not rotate the build unit area BSA. Namely, the control unit 7 maintains the rotational amount of the build unit area BSA at the current rotational amount.

Then, the control unit 7 repeats the same operation until the build system SYS finishes building the build object (a step S14). Namely, the control unit 7 may change the rotational amount of the build unit area BSA each time the changed amount of the path angle θ of the partial path PP, along which the build unit area BSA moves, is equal to or larger than the predetermined angle threshold value.

In this manner, the control unit 7 can change the rotational amount of the build unit area BSA based on the path angle θ of the partial path PP along which the build unit area BSA moves by performing the second rotation control operation. Especially, the control unit 7 can reduce a frequency of changing the rotational amount of the build unit area BSA by performing the second rotation control operation, compared to a case where the first rotation control operation is performed. As a result, a processing load of the control unit 7 is reducible.

Incidentally, the fact remains that there is a low possibility that the difference between the scanning direction of the target irradiation area EA in the build unit area BSA and the width direction of the build object is larger than the allowable amount even in a case where the second rotation control operation is performed, compared to a case where the rotation control operation is not performed. Therefore, the fact remains that the build accuracy of the build system SYS is improved even in a case where the second rotation control operation is performed, compared to a case where the rotation control operation is not performed. Incidentally, considering this effect, the above-described angle threshold value may be set to an appropriate value that can prevent the difference between the scanning direction of the target irradiation area EA in the build unit area BSA and the width direction of the build object from being larger than the allowable amount.

Incidentally, in the above-described description, the control unit 7 determines whether or not the changed amount of the pass angle θ is equal to or larger than the predetermined angle threshold value after the building of the build object is started (the step S21 in FIG. 18). However, the control unit 7 may determine in advance whether or not the changed amount of the pass angle θ is equal to or larger than the predetermined angle threshold value before the building of the build object is started. For example, the control unit 7 may determine in advance whether or not the changed amount of the path angle θ is equal to or larger than the predetermined angle threshold value by simulating the operation for building the build object before the building of the build object is started. In this case, information related to a determined result of whether or not the changed amount of the path angle θ is equal to or larger than the predetermined angle threshold value may be recorded in association with the path information 700. For example, information related to the determined result of whether or not the changed amount of the path angle θ of one partial path PP is equal to or larger than the predetermined angle threshold value may be recorded in association with the partial path information 710 of the one partial path PP included in the path information 700. In this case, the information related to the determined result of whether or not the changed amount of the path angle θ of the partial path PP is equal to or larger than the predetermined angle threshold value may be recorded in the file that includes the path information 700. Alternatively, the information related to the determined result of whether or not the changed amount of the path angle θ of the partial path PP is equal to or larger than the predetermined angle threshold value may be recorded as a file separated from the path information 700. Even in a case where the information related to the determined result of whether or not the changed amount of the path angle θ is equal to or larger than the predetermined angle threshold value is recorded as the file separated from the path information 700, the file including the information related to the determined result of whether or not the changed amount of the path angle θ of the partial path PP is equal to or larger than the predetermined angle threshold value may be associated with the file including the path information 700.

### (2-2-3) Third Rotation Control Operation

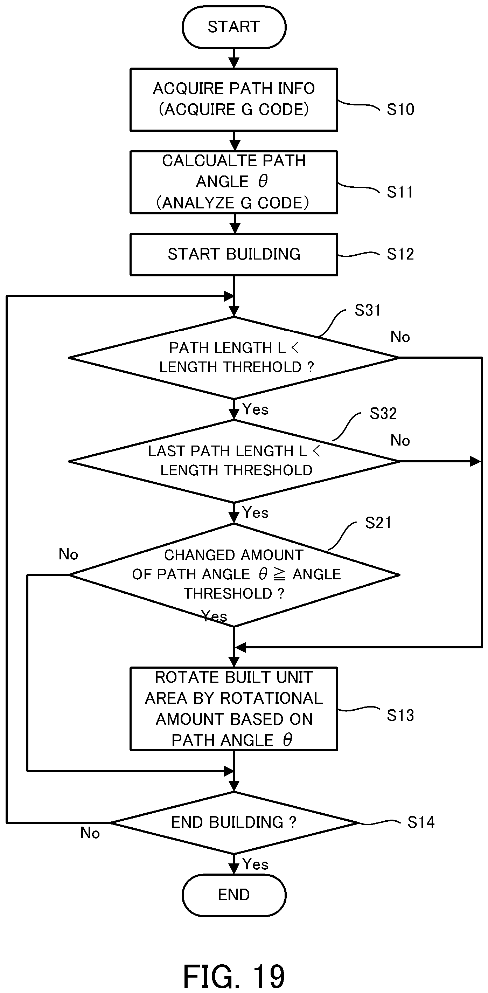

Next, with reference to FIG. 19, the third rotation control operation will be described. FIG. 19 is a flowchart that illustrates a flow of the third rotation control operation.

As illustrated in FIG. 19, even in a case where the third rotation control operation is performed, the control unit 7 acquires the path information 700 (the step S10) and calculates the path angle θ (the step S11), as in a case where the second rotation control operation is performed. Then, the build system SYS starts building the build object (the step S12).

After the building of the build object is started, the control unit 7 rotates the build unit area BSA each time the changed amount of the path angle θ is equal to or larger than the predetermined angle threshold value (the steps S21 and S13), even in a case where the third rotation control operation is performed, as in a case where the second rotation control operation is performed. However, in the third rotation control operation, the control unit 7 rotates the build unit area BSA each time the path angle θ changes by the predetermined angle threshold value or more in a case where the build unit area BSA moves along a series of the plurality of partial paths PP whose path length L is shorter than a predetermined length threshold value. On the other hand, in a case where the build unit area BSA moves along a series of the plurality of partial paths PP whose path length L is longer that the predetermined length threshold value, the control unit 7 may rotate the build unit area BSA even in a case the changed amount of the path angle θ is smaller than the predetermined angle threshold value.

Specifically, as illustrated in FIG. 19, the control unit 7 determines whether or not the path length L of one partial path PP is shorter than the predetermined length threshold value (a step S31).

In a case where it is determined as a result of the determination at the step S31 that the path length L of the one partial path PP is longer than the predetermined length threshold value (the step S31: No), the control unit 7 rotates the build unit area BSA moving the one partial path PP based on the path angle θ of the one partial path PP calculated at the step S11 (the step S13). Namely, the control unit 7 rotates the rotational amount of the build unit area BSA moving along the one partial path PP by the target rotational amount determined based on the path angle θ of the one partial path PP (the step S13).

On the other hand, in a case where it is determined as a result of the determination at the step S31 that the path length L of the one partial path PP is shorter than the predetermined length threshold value (the step S31: Yes), the control unit 7 determines whether or not the path length L of another partial path PP, which is positioned immediately before the one partial path PP, is shorter than the predetermined length threshold value (a step S32).

In a case where it is determined as a result of the determination at the step S32 that that the path length L of the another partial path PP is longer than the predetermined length threshold value (the step S32: No), it is estimated that the state of the build unit area BSA is changed from a state in which the build unit area BSA moves along the another partial path PP that is longer than the predetermined length threshold value to a state in which the build unit area BSA moves along a first partial path PP of a series of the plurality of partial paths PP that are shorter than the predetermined length threshold value. In this case, the control unit 7 rotates the build unit area BSA moving along the one partial path PP based on the path angle θ of the one partial path PP calculated at the step S11 (the step S13). Namely, the control unit 7 rotates the rotational amount of the build unit area BSA moving along the one partial path PP by the target rotational amount determined based on the path angle θ of the one partial path PP (the step S13).

On the other hand, in a case where it is determined as a result of the determination at the step S32 that the path length L of the another partial path PP is shorter than the predetermined length threshold value (the step S32: Yes), it is estimated that the build unit area BSA has already moved along a series of the plurality of partial paths PP that are shorter than the predetermined length threshold value. In this case, the control unit 7 determines whether or not the changed amount of the path angle θ is equal to or larger than the predetermined angle threshold value (the step S21). Especially, the control unit 7 determines whether or not the changed amount of the path angle θ since the last change of the rotational amount of the build unit area BSA is equal to or larger than the predetermined angle threshold value (the step S21).

In a case where it is determined as a result of the determination at the step S21that the changed amount of the path angle θ is equal to or larger than the predetermined angle threshold value (the step S21: Yes), the control unit 7 rotates the build unit area BSA based on the path angle θ of the partial path PP along which the build unit area BSA moves at that time (the step S13). Namely, the control unit 7 rotates the rotational amount of the build unit area BSA by the target rotational amount determined based on the path angle θ of the partial path PP along which the build unit area BSA moves at that time (the step S13). On the other hand, in a case where it is determined as a result of the determination at the step S21 that the changed amount of the path angle θ is not equal to and larger than the predetermined angle threshold value (the step S21: No), the control unit 7 may not rotate the build unit area BSA. Namely, the control unit 7 maintains the rotational amount of the build unit area BSA at the current rotational amount.

Then, the control unit 7 repeats the same operation until the build system SYS finishes building the build object (the step S14).

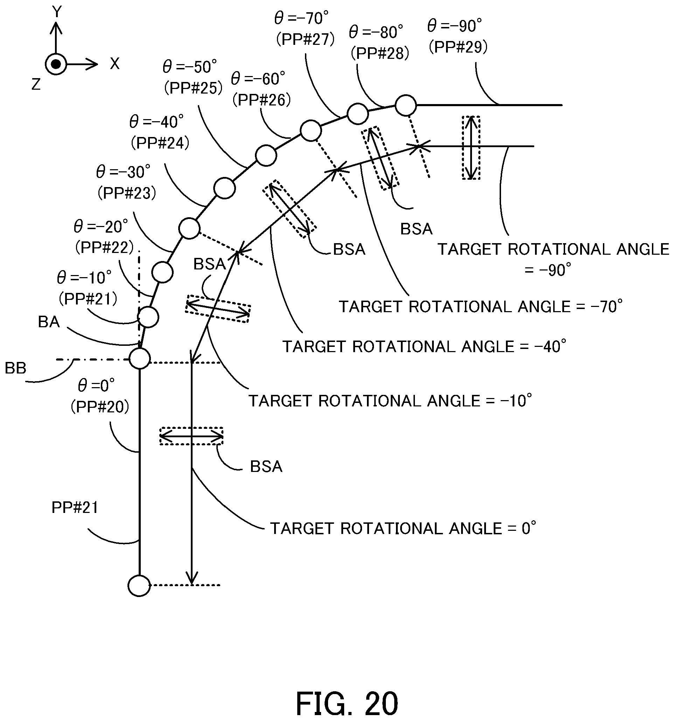

Here, a specific example of the third rotation control operation will be described with reference to FIG. 20. FIG. 20 illustrates the build unit area BSA rotated by the third rotation control operation in a situation where the build unit area BSA moves along a partial path PP#20 whose path angle θ is 0 degrees and which is longer than the predetermined length threshold value, then moves along a partial path PP#21 whose path angle θ is -10 degrees and which is shorter than the predetermined length threshold value, then moves along a partial path PP#22 whose path angle θ is -20 degrees and which is shorter than the predetermined length threshold value, then moves along a partial path PP#23 whose path angle θ is -30 degrees and which is shorter than the predetermined length threshold value, then moves along a partial path PP#24 whose path angle θ is -40 degrees and which is shorter than the predetermined length threshold value, then moves along a partial path PP#25 whose path angle θ is -50 degrees and which is shorter than the predetermined length threshold value, then moves along a partial path PP#26 whose path angle θ is -60 degrees and which is shorter than the predetermined length threshold value, then moves along a partial path PP#27 whose path angle θ is -70 degrees and which is shorter than the predetermined length threshold value, then moves along a partial path PP#28 whose path angle θ is -80 degrees and which is shorter than the predetermined length threshold value, and then moves along a partial path PP#29 whose path angle θ is -90 degrees and which is longer than the predetermined length threshold value. Namely, FIG. 20 illustrates the build unit area BSA rotated by the third rotation control operation in a situation where the build unit area BSA moves along the partial path PP#20 that is longer than the predetermined length threshold value, then moves along a series of the partial paths PP#21 to PP#28 that are shorter than the predetermined length threshold value, and then moves along the partial path PP#29 that is longer than the predetermined length threshold value.

The definitions of the path angle θ and the rotational angle of the build unit area BSA in FIG. 20 are the same as the definitions of the path angle θ and the rotational angle of the build unit area BSA in FIG. 17. Incidentally, in FIG. 20, the path angle θ of each of a series of the partial paths PP#21 to PP#28, which are shorter than the predetermined length threshold value, may be considered to be equivalent to an angle between the partial path PP#20, which is longer than the predetermined length threshold value and which is positioned immediately before a series of the partial paths PP#21 to PP#28 that are shorter than the predetermined length threshold value, and each of the partial paths PP#21 to PP#28. Moreover, in the below-described description, an example in which the predetermined angle threshold value is 30 degrees will be described.

As illustrated in FIG. 20, the path length L of the partial path PP#20 is longer than the predetermined length threshold value (the step S31 in FIG. 19: No). Therefore, the control unit 7 may rotate the build unit area BSA moving along the partial path PP#20 by the target rotational amount determined based on the path angle θ of the partial path PP#20, regardless of the changed amount of the path angle θ. As one example, the control unit 7 may calculate an angle that is equal to the path angle θ of the partial path PP#20 as the target rotational angle of the build unit area BSA moving along the partial path PP#20. In this case, the control unit 7 may rotate the build unit area BSA moving along the partial path PP#20 so that the rotational angle of the build unit area BSA moving along the partial path PP#20 is equal to 0 degrees that is the path angle θ of the partial path PP#20. As a result, as illustrated in FIG. 20, the scanning direction of the target irradiation area EA in the build unit area BSA moving along the partial path PP#20 intersects (in some cases, it is orthogonal to) the partial path PP#20.

Then, the state of the build unit area BSA changes from a state in which the build unit area BSA moves along the partial path PP#20 to a state in which the build unit area BSA moves along the partial path PP#21. In this case, the path length L of the partial path PP#21 is shorter than the predetermined length threshold value (the step S31 in FIG. 19: Yes), and the path length L of the partial path PP#20 immediately before the partial path PP#21 is longer than the predetermined length threshold value (the step S32 in FIG. 19: No). Therefore, the control unit 7 may rotate the build unit area BSA moving along the partial path PP#21 by the target rotational amount determined based on the path angle θ of the partial path PP#21, regardless of the changed amount of the path angle θ. As one example, the control unit 7 may calculate an angle that is equal to the path angle θ of the partial path PP#21 as the target rotational angle of the build unit area BSA moving along the partial path PP#21. In this case, the control unit 7 may rotate the build unit area BSA moving along the partial path PP#21 so that the rotational angle of the build unit area BSA moving along the partial path PP#21 is equal to -10 degrees that is the path angle θ of the partial path PP#21. As a result, as illustrated in FIG. 20, the scanning direction of the target irradiation area EA in the build unit area BSA moving along the partial path PP#21 intersects (in some cases, it is orthogonal to) the partial path PP#21.

Then, the state of the build unit area BSA changes from a state in which the build unit area BSA moves along the partial path PP#21 to a state in which the build unit area BSA moves along the partial path PP#22. In this case, the path length L of the partial path PP#22 is shorter than the predetermined length threshold value (the step S31 in FIG. 19: Yes), and the path length L of the partial path P#21 immediately before the partial path PP#22 is shorter than the predetermined length threshold value (the step S32 in FIG. 19: Yes). Therefore, the control unit 7 determines whether or not the changed amount of the path angle θ since the last change of the rotational amount of the build unit area BSA is larger than the predetermined angle threshold value (the step S21 in FIG. 19). Since the rotational amount of the build unit area BSA is changed last when the build unit area BSA moves along the partial path PP#21 whose path angle θ is -10 degrees, the changed amount of the path angle θ when the build unit area BSA moves along the partial path PP#21, whose path angle θ is -20 degrees, is 10 degrees Therefore, the changed amount of the path angle θ (10 degrees) is not equal to and larger than the predetermined angle threshold value (30 degrees) (the step S21: No). Therefore, the control unit 7 may not rotate the build unit area BSA moving along the partial path PP#22. In this case, the rotational amount of the build unit area BSA moving along the partial path PP#22 is maintained at the rotational amount of the build unit area BSA moving along the partial path PP#21. Incidentally, as illustrated in FIG. 20, even in a case where the rotational amount is not changed in this way, there is a low possibility that the difference between the scanning direction of the target irradiation area EA in the build unit area BSA and the width direction of the build object is larger than the allowable amount.

Then, the state of the build unit area BSA changes from a state in which the build unit area BSA moves along the partial path PP#22 to a state in which the build unit area BSA moves along the partial path PP#23. In this case, the path length L of the partial path PP#23 is shorter than the predetermined length threshold value (the step S31 in FIG. 19: Yes), and the path length L of the partial path PP#22 immediately before the partial path PP#23 is shorter than the predetermined length threshold value (the step S32 in FIG. 19: Yes). Furthermore, the changed amount of the path angle θ when the build unit area BSA moves along the partial path PP#21 whose path angle θ (20 degrees) is not equal to and larger than the predetermined angle threshold value (30 degrees) (the step S21: No). Therefore, the control unit 7 may not rotate the build unit area BSA moving along the partial path PP#23. In this case, the rotational amount of the build unit area BSA moving along the partial path PP#23 is maintained at the rotational amount of the build unit area BSA moving along the partial path PP#21. Incidentally, as illustrated in FIG. 20, even in a case where the rotational amount is not changed in this way, there is a low possibility that the difference between the scanning direction of the target irradiation area EA in the build unit area BSA and the width direction of the build object is larger than the allowable amount.

Then, the state of the build unit area BSA changes from a state in which the build unit area BSA moves along the partial path PP#23 to a state in which the build unit area BSA moves along the partial path PP#24. In this case, the path length L of the partial path PP#24 is shorter than the predetermined length threshold value (the step S31 in FIG. 19: Yes), and the path length L of the partial path PP#23 immediately before the partial path PP#24 is shorter than the predetermined length threshold value (the step S32 in FIG. 19: Yes). On the other hand, the changed amount of the path angle θ when the build unit area BSA moves along the partial path PP#21 whose path angle θ (30 degrees) is equal to or larger than the predetermined angle threshold value (30 degrees) (the step S21: Yes). Therefore, the control unit 7 may rotate the build unit area BSA moving along the partial path PP#24 by the target rotational amount determined based on the path angle θ of the partial path PP#24. As one example, the control unit 7 may calculate an angle that is equal to the path angle θ of the partial path PP#24 as the target rotational angle of the build unit area BSA moving along the partial path PP#24. In this case, the control unit 7 may rotate the build unit area BSA moving along the partial path PP#21 so that the rotational angle of the build unit area BSA moving along the partial path PP#24 is equal to -40 degrees that is the path angle θ of the partial path PP#24. As a result, as illustrated in FIG. 20, the scanning direction of the target irradiation area EA in the build unit area BSA moving along the partial path PP#24 intersects (in some cases, it is orthogonal to) the partial path PP#24.

Then, the state of the build unit area BSA changes from a state in which the build unit area BSA moves along the partial path PP#24 to a state in which the build unit area BSA moves along the partial path PP#25. In this case, the path length L of the partial path PP#25 is shorter than the predetermined length threshold value (the step S31 in FIG. 19: Yes), and the path length L of the partial path P#24 immediately before the partial path PP#25 is shorter than the predetermined length threshold value (the step S32 in FIG. 19: Yes). Therefore, the control unit 7 determines whether or not the changed amount of the path angle θ since the last change of the rotational amount of the build unit area BSA is larger than the predetermined angle threshold value (the step S21 in FIG. 19). Since the rotational amount of the build unit area BSA is changed last when the build unit area BSA moves along the partial path PP#24 whose path angle θ is -40 degrees, the changed amount of the path angle θ when the build unit area BSA moves along the partial path PP#25, whose path angle θ is -50 degrees, is 10 degrees Therefore, the changed amount of the path angle θ (10 degrees) is not equal to and larger than the predetermined angle threshold value (30 degrees) (the step S21: No). Therefore, the control unit 7 may not rotate the build unit area BSA moving along the partial path PP#25. In this case, the rotational amount of the build unit area BSA moving along the partial path PP#25 is maintained at the rotational amount of the build unit area BSA moving along the partial path PP#24. Incidentally, as illustrated in FIG. 20, even in a case where the rotational amount is not changed in this way, there is a low possibility that the difference between the scanning direction of the target irradiation area EA in the build unit area BSA and the width direction of the build object is larger than the allowable amount.

Then, the control unit 7 repeats the same operation. As a result, as illustrated in FIG. 20, the rotational amount of the build unit area BSA moving along the partial path PP#26 is maintained at the rotational amount of the build unit area BSA moving along the partial path PP#24. The rotational amount of the build unit area BSA moving along the partial path PP#27 is changed to the target rotational amount determined based on the path angle θ of the partial path PP#27. The rotational amount of the build unit area BSA moving along the partial path PP#28 is maintained as the rotational amount of the build unit area BSA moving along the partial path PP#27. The rotational amount of the build unit area BSA moving along the partial path PP#29 is changed to the target rotational amount determined based on the path angle θ of the partial path PP#29.

Incidentally, in the above-described description, the control unit 7 determines whether or not the path length L of one partial path PP is longer than the predetermined length threshold value (the step S31 in FIG. 19), determines whether or not the path length L of another partial path PP positioned immediately before the one partial path PP is shorter than the predetermined length threshold value (the step S32 in FIG. 19), and determines whether or not the changed amount of the path angle θ is equal to or larger than the predetermined angle threshold value (the step S21 in FIG. 19) after the building of the build object is started. However, the control unit 7 may determine in advance whether or not the path length L of one partial path PP is longer than the predetermined length threshold value (the step S31 in FIG. 19), determine in advance whether or not the path length L of another partial path PP positioned immediately before the one partial path PP is shorter than the predetermined length threshold value (the step S32 in FIG. 19), and determine in advance whether or not the changed amount of the path angle θ is equal to or larger than the predetermined angle threshold value (the step S21 in FIG. 19) before the building of the build object is started. For example, the control unit 7 may perform the above-described determination by simulating the operation for building the build object before the building of the build object is started. In this case, information related to a determined result may be recorded in association with the path information 700. For example, information related to the determined result related to one partial path PP may be recorded in association with the partial path information 710 of the one partial path PP included in the path information 700. In this case, the information related to the determined result may be recorded in the file that includes the path information 700. Alternatively, the information related to the determined result may be recorded as a file separated from the path information 700. Even in a case where the information related to the determined result is recorded as the file separated from the path information 700, the file including the information related to the determined result may be associated with the file including the path information 700.

### (2-3) Irradiation Condition Change Operation

In the present example embodiment, the control unit 7 may perform an irradiation condition change operation in addition to the above-described rotation control operation. The irradiation condition change operation may include an operation for changing an irradiation condition of the build light EL based on a build condition for building the build object.

In this case, in a case where the build condition is one build condition, the control unit 7 may build the build object by using one irradiation condition as the irradiation condition of the build light EL. On the other hand, in a case where the build condition is another build condition that is different from the one build condition, the control unit 7 may build the build object by using another irradiation condition that is different from the one irradiation condition as the irradiation condition of the build light EL. The another irradiation condition may be set based on the another build condition. The another irradiation condition is typically different from the one irradiation condition. However, the another irradiation condition may be the same as the one irradiation condition.

In this case, the build system SYS can build the build object by using appropriate irradiation condition based on the build condition, compared to a case where the irradiation condition of the build light EL is not changed based on the build condition.

The control unit 7 may change the irradiation condition of the build light EL#1 and the irradiation condition of the build light EL#2 independently. Alternatively, the control unit 7 may change the irradiation condition of the build light EL#1 and the irradiation condition of the build light EL#2 together. The control unit 7 may change at least one of the irradiation condition of the build light EL#1 and the irradiation condition of the build light EL#2 so that the irradiation condition of the build light EL#1 is the same as the irradiation condition of the build light EL#2. Alternatively, the control unit 7 may change at least one of the irradiation condition of the build light EL#1 and the irradiation condition of the build light EL#2 so that the irradiation condition of the build light EL#1 is different from the irradiation condition of the build light EL#2.

The control unit 7 may change the irradiation condition based on the build condition in a unit of the partial path PP. Specifically, the control unit 7 may change the irradiation condition of the build light EL for building the build object built along each partial path PP based on the build condition for building the build object built along each partial path PP. However, the control unit 7 may change the irradiation condition based on the build condition for a unit of a path group including at least two partial paths PP.

### (2-3-1) Specific Example of Build Condition

### (2-3-1-1) First Specific Example of Build Condition

The build condition may include a condition related to the path angle θ of the partial path PP. In this case, the control unit 7 may change the irradiation condition of the build light EL for building the build object along each partial path PP based on the path angle θ of each partial path PP.

For example, in a case where the build object is built along a first partial path PP whose path angle θ is a first path angle, the control unit 7 may use a first irradiation condition as the irradiation condition of the build light EL for building the build object along the first partial path PP. The first irradiation condition may be set based on the first path angle.

For example, in a case where the build object is built along a second partial path PP whose path angle θ is a second path angle that is different from the first path angle, the control unit 7 may use a second irradiation condition that is different from the first irradiation condition as the irradiation condition of the build light EL for building the build object along the second partial path PP. The second irradiation condition may be set based on the second path angle. The second irradiation condition is typically different from the first irradiation condition. However, the second irradiation condition may be the same as the first irradiation condition.

For example, in a case where the build object is built along a third partial path PP whose path angle θ is a third path angle that is different from the first and second path angles, the control unit 7 may use a third irradiation condition that is different from the first and second irradiation conditions as the irradiation condition of the build light EL for building the build object along the third partial path PP. The third irradiation condition may be set based on the third path angle. The third irradiation condition is typically different from the first and second irradiation conditions. However, the third irradiation condition may be the same as at least one of the first and second irradiation conditions.

In this manner, in a case where the build condition includes the condition related to the path angle θ of the partial path PP, the build system SYS can build the build object by using the irradiation condition that is appropriately selected based on the path angle θ. As a result, the build system SYS can build the build object appropriately, compared to a case where the irradiation condition is not selected based on the path angle θ.

Incidentally, the first pass angle may be a positive angle. Namely, the first pass angle may be an angle included in the range from +0 degrees to +180 degrees. The second pass angle may be a negative angle. Namely, the second pass angle may be an angle included in the range from -0 degrees to -180 degrees. The third pass angle may be 0 degrees.

### (2-3-1-2) Second Specific Example of Build Condition

The build condition may include a condition related to the target line width of the build object built along the partial path PP. In this case, the control unit 7 may change the irradiation condition of the build light EL for building the build object along each partial path PP based on the target line width of the build object built along each partial path PP.

For example, in a case where the build object having a first width (namely, the build object whose target line width is the first width) is built along a fourth partial path PP, the control unit 7 may use a fourth irradiation condition as the irradiation condition of the build light EL for building the build object along the fourth partial path PP. The fourth irradiation condition may be set based on the first width.

For example, in a case where the build object having a second width that is different from the first width (namely, the build object whose target line width is the second width) is built along a fifth partial path PP, the control unit 7 may use a fifth irradiation condition as the irradiation condition of the build light EL for building the build object along the fifth partial path PP. The fifth irradiation condition may be set based on the second width. The fifth irradiation condition is typically different from the fourth irradiation condition. However, the fifth irradiation condition may be the same as the fourth irradiation condition.

In this manner, in a case where the build condition includes the condition related to the target line width of the build object, the build system SYS can build the build object by using the irradiation condition that is appropriately selected based on the target line width. As a result, there is a higher possibility that the build system SYS can build the build object whose width is equal to the target line width, compared to a case where the irradiation condition is not selected based on the target line width.

### (2-3-1-3) Third Specific Example of Build Condition

The build condition may include a condition related to the layer position of the structural layer SL formed by the build object built along the partial path PP. In this case, the control unit 7 may change the irradiation condition of the build light EL for building the build object along each partial path PP based on the layer position of the structural layer SL formed by the build object built along each partial path PP.

For example, in a case where the build object, which forms a first structural layer SL stacked at a first stacking position, is built along a sixth partial path PP, the control unit 7 may use a sixth irradiation condition as the irradiation condition of the build light EL for building the build object along the sixth partial path PP. The sixth irradiation condition may be set based on the stacking position of the first structural layer SL (namely, the first stacking position).

For example, in a case where the build object, which forms a second structural layer SL that is stacked at a second stacking position different from the first stacking position, is built along a seventh partial path PP, the control unit 7 may use a seventh irradiation condition as the irradiation condition of the build light EL for building the build object along the seventh partial path PP. The seventh irradiation condition may be set based on the stacking position of the second structural layer SL (namely, the second stacking position). The seventh irradiation condition is typically different from the sixth irradiation condition. However, the seventh irradiation condition may be the same as the sixth irradiation condition.

In this manner, in a case where the build condition includes the condition related to the layer position of the structural layer SL formed by the build object, the build system SYS can build the build object by using the irradiation condition that is appropriately selected based on the layer position of the structural layers SL. As a result, there is a higher possibility that the build system SYS can build the build object for forming the structural layer SL stacked in a desired stacking position, compared to a case where the irradiation condition is not selected based on the stacking position of the structural layer SL.

As one example, each of an uppermost structural layer SL and a lowermost structural layer SL of the plurality of structural layers SL is not positioned between two structural layers SL. On the other hand, the structural layer SL that is different from the uppermost structural layer SL and the lowermost structural layer SL (in the below-described description, it is referred to as a middle structural layer SL) is positioned between two structural layers SL. Therefore, there is a possibility that a characteristic of a heat transferred to the uppermost structural layer SL and the lowermost structural layer SL is different from a characteristic of a heat transferred to the middle structural layer SL in a period during which the additive manufacturing is performed. In this case, the control unit 7 may set the irradiation condition so that the irradiation condition of the build light EL for build the uppermost structural layer SL and the lowermost structural layer SL is different from the irradiation condition of the build light EL for building the middle structural layer SL. Namely, the first structural layer SL stacked at the first stacking position may include at least one of the uppermost structural layer SL and the lowermost structural layer SL. Namely, the first stacking position may include at least one of a uppermost stacking position and a lowermost stacking position. The second structural layer SL stacked at the second stacking position may include the middle structural layer SL. Namely, the second stacking position may include a middle stacking position. As a result, the build system SYS can appropriately build the uppermost structural layer SL, the middle structural layer SL, and the lowermost structural layer SL.

### (2-3-1-4) Fourth Specific Example of Build Condition

The build condition may include a condition related to the path length L of the partial path PP. In this case, the control unit 7 may change the irradiation condition of the build light EL for building the build object along each partial path PP based on the path length L of each partial path PP.

For example, in a case where the build object is built along an eighth partial path PP whose path length L is a first length, the control unit 7 may use an eighth irradiation condition as the irradiation condition of the build light EL for building the build object along the eighth partial path PP. The eighth irradiation condition may be set based on the first length.

For example, in a case where the build object is built along a ninth partial path PP whose path length L is a second length different from the first length, the control unit 7 may use a ninth irradiation condition as the irradiation condition of the build light EL for building the build object along the ninth partial path PP. The ninth irradiation condition may be set based on the second length. The ninth irradiation condition is typically different from the eighth irradiation condition. However, the ninth irradiation condition may be the same as the eighth irradiation condition.

In this manner, in a case where the build condition includes the condition related to the path length L, the build system SYS can build the build object by using the irradiation condition that is appropriately selected based on the path length L. As a result, there is a higher possibility that the build system SYS can build the build object whose length is equal to the path length L, compared to a case where the irradiation condition is not selected based on the path length L.

### (2-3-2) Specific Example of Irradiation Condition

### (2-3-2-1) First Specific Example of Irradiation Condition

The irradiation condition may include a condition related to the scanning trajectory of the target irradiation area EA in the build unit area BSA. The condition related to the scanning trajectory may be referred to as a condition related to the wobble shape. In this case, the control unit 7 may change the scanning trajectory of the target irradiation area EA for building the build object built along each partial path PP based on the build condition for building the build object along each partial path PP. Namely, the control unit 7 may change the scanning trajectory of the target irradiation area EA in the build unit area BSA that moves along each partial path PP based on the build condition for building the build object built along each partial path PP.

For example, in a case where the build condition is a first build condition, the control unit 7 may build the build object by controlling at least one of the Galvano mirrors 2146 and 2156 so that the target irradiation area EA moves along a first scanning trajectory in the build unit area BSA. The first scanning trajectory may be set based on the first build condition. On the other hand, in a case where the build condition is a second build condition that is different from first build condition, the control unit 7 may build the build object by controlling at least one of the Galvano mirrors 2146 and 2156 so that the target irradiation area EA moves along a second scanning trajectory that is different from the first scanning trajectory in the build unit area BSA. The second scanning trajectory may be set based on the second build condition. The second scanning trajectory is typically different from the first scanning trajectory. However, the second scanning trajectory may be the same as the first scanning trajectory.

The condition related to the scanning trajectory of the target irradiation area EA may include a condition related to a type of the shape of the scanning trajectory. The "sinusoidal wave" type illustrated in FIG. 5(a) is one example of the type of the shape of the scanning trajectory. The "circle" type illustrated in FIG. 6(a) is another example of the type of the shape of the scanning trajectory. The "rectangle" type illustrated in FIG. 6(b) is another example of the type of the shape of the scanning trajectory.

The condition related to the scanning trajectory of the target irradiation area EA may include a condition related to the waveform of the scanning trajectory. For example, as described above, the scanning trajectory of the target irradiation area EA may be expressed by the equation 1 "X = Ax × sin (2π × fx × t + αx)" and the equation 3 "Y = Ay × sin (2π × fy × t + αy)", for example . In this case, the condition related to the waveform of the scanning trajectory may include at least one of a condition related to the amplitude Ax, a condition related to the amplitude Ay, a condition related to the frequency fx, a condition related to the frequency fy, a condition related to the phase amount αx, and a condition related to the phase amount αy.

Incidentally, the amplitude Ax may be considered to be substantially equivalent to the size of the build unit area BSA in the X-axis direction. In this case, the condition related to the amplitude Ax may be considered to be equivalent to a condition related to the size (a pattern size) of the build unit area BSA in the X-axis direction. Similarly, the amplitude Ay may be considered to be substantially equivalent to the size of the build unit area BSA in the Y-axis direction. In this case, the condition related to the amplitude Ay may be considered to be equivalent to a condition related to the size (a pattern size) of the build unit area BSA in the Y-axis direction.

Moreover, each of the frequencies fx and fy may be considered to be equivalent to a driving frequency of at least one of the Galvano mirrors 2146 and 2156. Specifically, the frequency fx that represents the scanning trajectory of the target irradiation area EA#1 may be considered to be equivalent to the driving frequency of the X scanning mirror 2146MX of the Galvano mirror 2146. The frequency fy that represents the scanning trajectory of the target irradiation area EA#1 may be considered to be equivalent to the driving frequency of the Y scanning mirror 2146MY of the Galvano mirror 2146. The frequency fx that represents the scanning trajectory of the target irradiation area EA#2 may be considered to be equivalent to the driving frequency of the X scanning mirror 2156MX of the Galvano mirror 2156. The frequency fy that represents the scanning trajectory of the target irradiation area EA#2 may be considered to be equivalent to the driving frequency of the Y scanning mirror 2156MY of the Galvano mirror 2156. In this case, the condition related to the frequency fx that represents the scanning trajectory of the target irradiation area EA#1 may be considered to be equivalent to a condition related to the driving frequency of the X scanning mirror 2146MX. The condition related to the frequency fy that represents the scanning trajectory of the target irradiation area EA#1 may be considered to be equivalent to a condition related to the driving frequency of the Y scanning mirror 2146MY. The condition related to the frequency fx that represents the scanning trajectory of the target irradiation area EA#2 may be considered to be equivalent to a condition related to the driving frequency of the X scanning mirror 2156MX. The condition related to the frequency fy that represents the scanning trajectory of the target irradiation area EA#2 may be considered to be equivalent to a condition related to the driving frequency of the Y scanning mirror 2156MY.

### (2-3-2-2) Second Specific Example of Irradiation Condition

The irradiation condition may include a condition related to the characteristic of the build light EL. In this case, the control unit 7 may change the characteristic of the build light EL for building the build object along each partial path PP based on the build condition for building the build object along each partial path PP.

For example, in a case where the build condition is a first build condition, the control unit 7 may build the build object by irradiating the build surface MS with the build light EL having a first characteristic. The first characteristics may be set based on the first build condition. On the other hand, in a case where the build condition is a second build condition that is different from the first build condition, the control unit 7 may build the build object by irradiating the build surface MS with the build light EL having a second characteristic. The second characteristic may be set based on the second build condition. The second characteristic is typically different from the first characteristic. However, the second characteristic may be the same as the first characteristic.

The characteristic of the build light EL may include the intensity of the build light EL. The characteristic of the build light EL may include an intensity distribution of the build light EL on the build surface MS. In a case where the build light EL includes the pulsed light, the characteristic of the build light EL may include at least one of the ON time of the pulsed light, the emission cycle of the pulsed light, and the ratio (what we call the duty ratio) of the length of the ON time of the pulsed light and the length of the emission cycle of the pulsed light. In a case where the build light EL includes the pulsed light, the characteristic of the build light EL may include a modulation mode of the intensity of the pulsed light (for example, a DC modulation, which periodically changes a DC component of the intensity of the pulsed light is used or not).

### (2-3-2-3) Third Specific Example of Irradiation Condition

The irradiation condition may include a condition related to a target size of the melt pool MP formed on the build surface MS by the build light EL. In this case, the control unit 7 may change the target size of the melt pool MP that should be formed to build the build object along each partial path PP based on the build condition for building the build object along each partial path PP.

For example, in a case where the build condition is a first build condition, the control unit 7 may build the build object by forming the melt pool MP whose size is equal to a first target size on the build surface MS. The first target size may be set based on the first build condition. On the other hand, in a case where the build condition is a second build condition that is different from the first build condition, the control unit 7 may build the build object by forming the melt pool MP whose size is equal to a second target size on the build surface MS. The second target size may be set based on the second build condition. The second target size is typically different from the first target size. However, the second target size may be the same as the first target size.

### (2-3-3) Flow of Irradiation Condition Change Operation

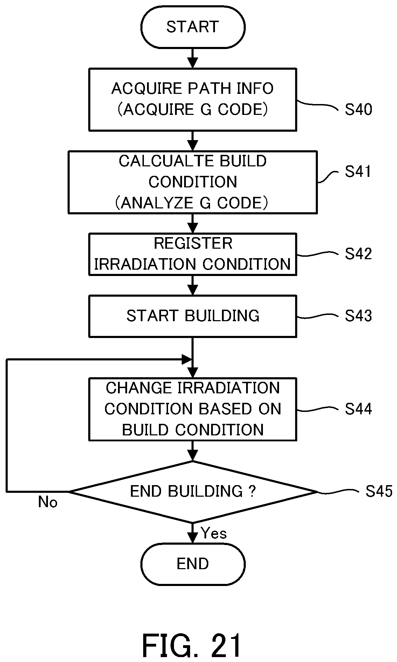

Next, with reference to FIG. 21, a flow of the irradiation condition change operation will be described. FIG. 21 is a flowchart that illustrates the flow of the irradiation condition change operation.

As illustrated in FIG. 21, the control unit 7 acquires the path information 700 (a step S40). Incidentally, the operation at the step S40 may be the same as the operation at the step S10 in FIG. 16 described above.

Then, the control unit 7 calculates, based on the path information acquired at the step S40, the build condition for building the build object based on the path information 700 (a step S41). For example, in a case where the G-code is used as the path information 700 as described above, the control unit 7 may calculate the build condition by analyzing the G-code. Specifically, the control unit 7 may identify the processing path P (namely, the target movement trajectory MT0 of the build unit area BSA) used by the build system SYS to build the build object from the path information 700, and calculate the build condition for building the build object along each of the plurality of partial paths PP that are obtained by dividing the identified processing path P.

In a case where the build condition includes the condition related to the path angle θ of the partial path PP, the control unit 7 may calculate the path angle θ of each partial path PP based on the path information 700. Incidentally, a description of the method for calculating the path angle θ is omitted, because it has already been described. However, in a case where the path information 700 includes the path angle information 716 indicating the path angle θ as described above, the control unit 7 may not calculate the path angle θ at the step S41.

In a case where the build condition includes the condition related to the target line width of the build object built along the partial path PP, the control unit 7 may calculate the target line width of each partial path PP based on the path information 700. Incidentally, a description of the method for calculating the target line width is omitted, because it has already been described. However, in a case where the path information 700 includes the line width information 713 indicating the target line width as described above, the control unit 7 may not calculate the target line width at the step S41.

In a case where the build condition includes the condition related to the layer position of the structural layer SL formed by the build object built along the partial path PP, the control unit 7 may calculate the layer position of the structural layer SL formed by the build object built along each partial path PP based on the path information 700. Incidentally, a description of the method for calculating the layer position of the structural layer SL is omitted, because it has already been described. However, in a case where the path information 700 includes the layer information 714 indicating the layer position of the structural layer SL as described above, the control unit 7 may not calculate the layer position of the structural layer SL at the step S41.

In a case where the build condition includes the condition related to the path length L of the partial path PP, the control unit 7 may calculate the path length L of each partial path PP based on the path information 700. Incidentally, a description of the method for calculating the path length L is omitted, because it has already been described. However, in a case where the path information 700 includes the path length information 715 indicating the path length L as described above, the control unit 7 may not calculate the path length L at the step S41.

In parallel with, before, or after the operation from the step S40 to the step S41, the control unit 7 registers the irradiation condition of the build light EL (a step S42). Especially, the control unit 7 registers a plurality of irradiation conditions of the build light EL (the step S42). **In** this case, the control unit 7 selects, from among the plurality of irradiation conditions registered at the step S42, one irradiation condition that corresponds to the build condition calculated at the step S41 as the irradiation condition actually used by the build system SYS.

The control unit 7 may register the irradiation condition of the build light EL based on an instruction of the user of the build system SYS. Namely, the control unit 7 may register the irradiation condition of the build light EL designated by the user of the build system SYS. Alternatively, the control unit 7 may register the irradiation condition of the build light EL independently of the instruction of the user of the build system SYS. For example, the control unit 7 may register a default irradiation condition. For example, the control unit 7 may register the irradiation condition that is an initial condition.

In a case where the irradiation condition of the build light EL is registered based on the instruction of the user of the build system SYS, the control unit 7 may control the display unit 9 to display a registration GUI (Graphical User Interface) 90 that is operable by the user in order to register the irradiation condition. In this case, the user may use the registration GUI 90 to register the irradiation condition of the build light EL. Specifically, the user may register the irradiation condition of the build light EL of the user by operating the input unit 8, which includes the operating apparatus (for example, at least one of the keyboard, the mouse, and the touch panel), while viewing the registration GUI 90.

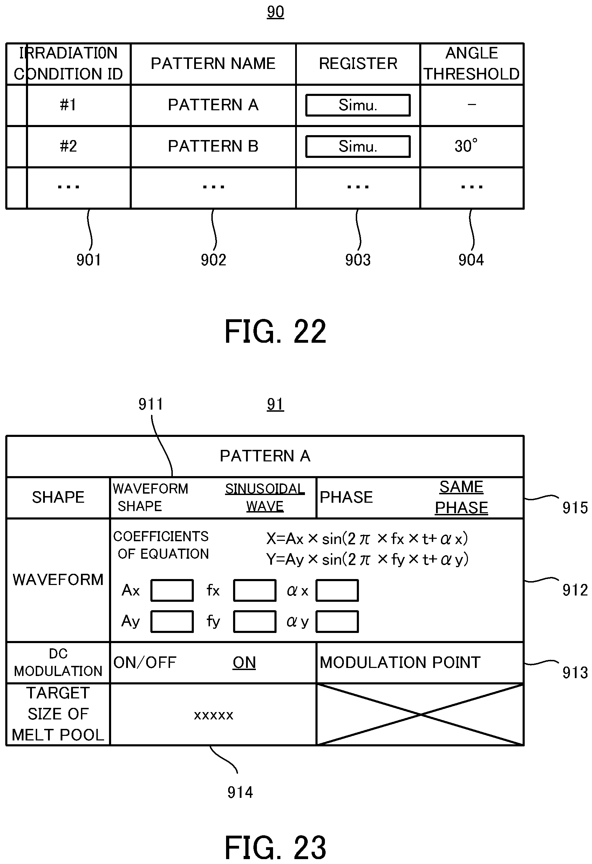

FIG. 22 illustrates one example of the registration GUI 90. The registration GUI 90 may include: an ID label 901 that indicates an ID for uniquely identifying the registered irradiation condition; a name label 902 that indicates a name (a pattern name) of the registered irradiation condition; a registration button 903 that should be pressed by the user to actually register each irradiation condition; and a text box 904 for inputting the angle threshold value used in the second and third rotation control operations described above. Incidentally, in a case where the irradiation condition in which the angle threshold value is not input is used, the build system SYS may not perform the second and third rotation control operations.

In a case where the registration button 903 is pressed by the user, the control unit 7 may control the display unit 9 to display a condition input GUI 91 that is operable by the user to input a detail of the irradiation condition. FIG. 23 illustrates one example of the condition input GUI 91. As illustrated in FIG. 23, the condition input GUI 91 may include: a text box 911 for inputting the condition related to the type of the shape of the scanning trajectory of the target irradiation area EA in the build unit area BSA; a text box 912 for inputting the condition related to the waveform of the scanning trajectory of the target irradiation area EA in the build unit area BSA; a text box 913 for inputting the condition related to the characteristic of the build light EL (in the example illustrated in FIG. 23, the condition related to whether or not the DC modulation is used and a modulation point in the DC modulation); a text box 914 for inputting the condition related to the target size of the melt pool MP; and a text box 915 for inputting a condition related to a relationship between the phase of the movement of the target irradiation area EA#1 in the build unit area BSA#1 and the phase of the movement of the target irradiation area EA#2 in the build unit area BSA#2.

Again in FIG. 21, then, the build system SYS starts building the build object (a step S43). After starting building the build object, the control unit 7 changes the irradiation condition based on the build condition (a step S44). Specifically, the control unit 7 may change the irradiation condition of the build light EL for building the build object along one partial path PP based on the build condition for building the build object built along the one partial path PP. For example, the control unit 7 may select, from among the plurality of irradiation conditions registered at the step S42, the irradiation condition of the build light EL for building the build object along one partial path PP based on the build condition for building the build object built along the one partial path PP. Then, the control unit 7 may change the irradiation condition so that the irradiation condition of the build light EL for building the build object along the one partial path PP becomes the selected irradiation condition.

At the step S44, the control unit 7 may classify the build condition for building the build object built along the one partial path PP into one of a plurality of build condition patterns. Then, the control unit 7 may select the irradiation condition of the build light EL for building the build object along the one partial path PP based on the one build condition pattern into which the build condition has been classified. In this case, the control unit 7 may not change the irradiation condition even in a case where the build condition is slightly changed. Therefore, it is possible to reduce a processing load for performing the irradiation condition change operation.

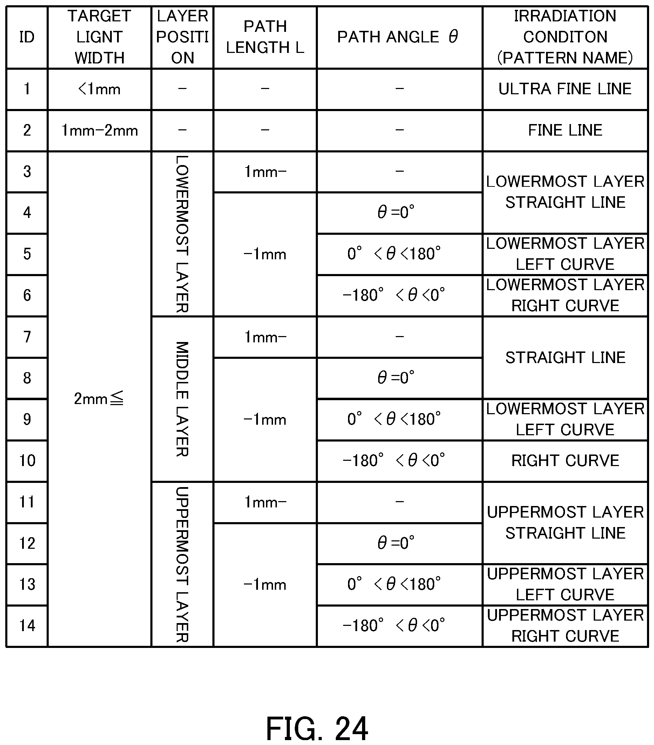

FIG. 24 illustrates one example of the plurality of build condition patterns. FIG. 24 illustrates fourteen types of build condition patterns. Namely, FIG. 24 illustrates an example in which the build condition is classified into one of the fourteen build condition patterns. As illustrated in FIG. 24, the plurality of build condition patterns may include a first build condition pattern into which the build condition that the target line width is shorter than 1 mm is classified. The plurality of build condition patterns may include a second build condition pattern into which the build condition that the target line width is equal to or longer than 1 mm and is shorter than 2mm is classified. The plurality of build condition patterns may include a third build condition pattern into which the build condition that the target line width is equal to or longer than 2 mm, the layer position of the structural layer SL is the lowermost layer, and the path length L is equal to or longer than 1 mm is classified. The plurality of build condition patterns may include a fourth build condition pattern into which the build condition that the target line width is equal to or longer than 2 mm, the layer position of the structural layer SL is the lowermost layer, the path length L is shorter than 1 mm, and the path angle θ is 0 degrees is classified. The plurality of build condition patterns may include a fifth build condition pattern into which the build condition that the target line width is equal to or longer than 2 mm, the layer position of the structural layer SL is the lowermost layer, the path length L is shorter than 1 mm, and the path angle θ is the positive angle (namely, is larger than 0 degrees and is smaller than 180 degrees) is classified. The plurality of build condition patterns may include a sixth build condition pattern into which the build condition that the target line width is equal to or longer than 2 mm, the layer position of the structural layer SL is the lowermost layer, the path length L is shorter than 1 mm, and the path angle θ is the negative angle (namely, is smaller than -0 degrees and is larger than -180 degrees) is classified. The plurality of build condition patterns may include a seventh build condition pattern into which the build condition that the target line width is equal to or longer than 2 mm, the layer position of the structural layer SL is the middle layer, and the path length L is equal to or longer than 1 mm is classified. The plurality of build condition patterns may include an eighth build condition pattern into which the build condition that the target line width is equal to or longer than 2 mm, the layer position of the structural layer SL is the middle layer, the path length L is shorter than 1 mm, and the path angle θ is 0 degrees is classified. The plurality of build condition patterns may include a ninth build condition pattern into which the build condition that the target line width is equal to or longer than 2 mm, the layer position of the structural layer SL is the middle layer, the path length L is shorter than 1 mm, and the path angle θ is the positive angle (namely, is larger than 0 degrees and is smaller than 180 degrees) is classified. The plurality of build condition patterns may include a tenth build condition pattern into which the build condition that the target line width is equal to or longer than 2 mm, the layer position of the structural layer SL is the middle layer, the path length L is shorter than 1 mm, and the path angle θ is the negative angle (namely, is smaller than -0 degrees and is larger than -180 degrees) is classified. The plurality of build condition patterns may include an eleventh build condition pattern into which the build condition that the target line width is equal to or longer than 2 mm, the layer position of the structural layer SL is the uppermost layer, and the path length L is equal to or longer than 1 mm is classified. The plurality of build condition patterns may include a twelfth build condition pattern into which the build condition that the target line width is equal to or longer than 2 mm, the layer position of the structural layer SL is the uppermost layer, the path length L is shorter than 1 mm, and the path angle θ is 0 degrees is classified. The plurality of build condition patterns may include a thirteenth build condition pattern into which the build condition that the target line width is equal to or longer than 2 mm, the layer position of the structural layer SL is the uppermost layer, the path length L is shorter than 1 mm, and the path angle θ is the positive angle (namely, is larger than 0 degrees and is smaller than 180 degrees) is classified. The plurality of build condition patterns may include a fourteenth build condition pattern into which the build condition that the target line width is equal to or longer than 2 mm, the layer position of the structural layer SL is the uppermost layer, the path length L is shorter than 1 mm, and the path angle θ is the negative angle (namely, is smaller than -0 degrees and is larger than -180 degrees) is classified.

Each build condition pattern may be associated with the irradiation condition that should be used in a case where the build condition is classified into each build condition pattern.

For example, as illustrated in FIG. 24, the first build condition pattern may be associated with the irradiation condition whose name is "Ultra Fine Line" as the irradiation condition that should be used in a case where the build condition is classified into the first build condition pattern. The irradiation condition whose name is "Ultra Fine Line" may be the irradiation condition in which the type of the shape of the scanning trajectory of the target irradiation area EA in the build unit area BSA is the circle type, each of the amplitude Ax (namely, the size (the pattern size) of the build unit area BSA in the X-axis direction) and the amplitude Ay (namely, the size (the pattern size) of the build unit area BSA in the Y-axis direction) is a first size, the phase amounts αx and αy are set to phase amounts that can realize a state in which the phase of the movement of the target irradiation area EA#1 in the build unit area BSA#1 is opposite to the phase of the movement of the target irradiation area EA#2 in the build unit area BSA#2, and the frequencies fx and fy (namely, the driving frequency of at least one of the Galvano mirrors 2146 and 2156) is 1 kHz, the DC modulation is performed, the angle threshold value is not set, and the target size of the melt pool MP is a first target size.

For example, as illustrated in FIG. 24, the second build condition pattern may be associated with the irradiation condition whose name is "Fine Line" as the irradiation condition that should be used in a case where the build condition is classified into the second build condition pattern. The irradiation condition whose name is "Fine Line" may be different from the irradiation condition whose name is "Ultra Fine Line" in that each of the amplitudes Ax and Ay is a second size that is larger than the first size.

For example, as illustrated in FIG. 24, the third build condition pattern may be associated with the irradiation condition whose name is "Lowermost Layer Straight Line" as the irradiation condition that should be used in a case where the build condition is classified into the third build condition pattern. The irradiation condition whose name is "Lowermost Layer Straight Line" may be different from the irradiation condition whose name is "Fine Line" in that each of the amplitudes Ax and Ay is a third size that is larger than the second size and the target size of the melt pool MP is a second target size that is different from the first target size.

For example, as illustrated in FIG. 24, the fourth build condition pattern may be associated with the irradiation condition whose name is "Lowermost Layer Straight Line" as the irradiation condition that should be used in a case where the build condition is classified into the fourth build condition pattern.

For example, as illustrated in FIG. 24, the fifth build condition pattern may be associated with the irradiation condition whose name is "Lowermost Layer Left Curve" as the irradiation condition that should be used in a case where the build condition is classified into the fifth build condition pattern. The irradiation condition whose name is "Lowermost Layer Left Curve" may be different from the irradiation condition whose name is "Lowermost Layer Straight Line" in that the angle threshold value is set to a predetermined first angle (for example, 45 degrees).

For example, as illustrated in FIG. 24, the sixth build condition pattern may be associated with the irradiation condition whose name is "Lowermost Layer Right Curve" as the irradiation condition that should be used in a case where the build condition is classified into the sixth build condition pattern. The irradiation condition whose name is "Lowermost Layer Right Curve" may be the same as the irradiation condition whose name is "Lowermost Layer Left Curve".

For example, as illustrated in FIG. 24, the seventh build condition pattern may be associated with the irradiation condition whose name is "Straight Line" as the irradiation condition that should be used in a case where the build condition is classified into the seventh build condition pattern. The irradiation condition whose name is "Straight Line" may be different from the irradiation condition whose name is "Fine Line" in that the type of the shape of the scanning trajectory of the target irradiation area EA in the build unit area BSA is the sinusoidal wave type, each of the amplitudes Ax and Ay is a fourth first size that is larger than the second size, and the target size of the melt pool MP is a third target size that is different from the first target size. The irradiation condition whose name is "Straight Line" may be different from the irradiation condition whose name is "Lowermost Layer Straight Line" in that the type of the shape of the scanning trajectory of the target irradiation area EA in the build unit area BSA is the sinusoidal wave type, each of the amplitudes Ax and Ay is the fourth first size that is smaller than the third size, and the target size of the melt pool MP is a third target size that is different from the second target size.

For example, as illustrated in FIG. 24, the eighth build condition pattern may be associated with the irradiation condition whose name is "Straight Line" as the irradiation condition that should be used in a case where the build condition is classified into the eighth build condition pattern.

For example, as illustrated in FIG. 24, the ninth build condition pattern may be associated with the irradiation condition whose name is "Left Curve" as the irradiation condition that should be used in a case where the build condition is classified into the ninth build condition pattern. The irradiation condition whose name is "Left Curve" may be different from the irradiation condition whose name is "Straight Line" in that the type of the shape of the scanning trajectory of the target irradiation area EA in the build unit area BSA is the circle type, the angle threshold value is set to a predetermined second angle (for example, 30 degrees), and the target size of the melt pool MP is a fourth target size that is different from the third target size.

For example, as illustrated in FIG. 24, the tenth build condition pattern may be associated with the irradiation condition whose name is "Right Curve" as the irradiation condition that should be used in a case where the build condition is classified into the tenth build condition pattern. The irradiation condition whose name is "Right Curve" may be the same as the irradiation condition whose name is "Left Curve".

For example, as illustrated in FIG. 24, the eleventh build condition pattern may be associated with the irradiation condition whose name is "Uppermost Layer Straight Line" as the irradiation condition that should be used in a case where the build condition is classified into the eleventh build condition pattern. The irradiation condition whose name is "Uppermost Layer Straight Line" may be different from the irradiation condition whose name is "Straight Line" in that the target size of the melt pool MP is a fifth target size that is different from the third target size.

For example, as illustrated in FIG. 24, the twelfth build condition pattern may be associated with the irradiation condition whose name is "Uppermost Layer Straight Line" as the irradiation condition that should be used in a case where the build condition is classified into the twelfth build condition pattern.

For example, as illustrated in FIG. 24, the thirteenth build condition pattern may be associated with the irradiation condition whose name is "Uppermost Layer Left Curve" as the irradiation condition that should be used in a case where the build condition is classified into the thirteenth build condition pattern. The irradiation condition whose name is "Uppermost Layer Left Curve" may be different from the irradiation condition whose name is "Uppermost Layer Straight Line" in that the type of the shape of the scanning trajectory of the target irradiation area EA in the build unit area BSA is the sinusoidal wave type, and the angle threshold value is set to a predetermined third angle (for example, 15 degrees).

For example, as illustrated in FIG. 24, the fourteenth build condition pattern may be associated with the irradiation condition whose name is "Uppermost Layer Right Curve" as the irradiation condition that should be used in a case where the build condition is classified into the fourteenth build condition pattern. The irradiation condition whose name is "Uppermost Layer Right Curve" may be the same as the irradiation condition whose name is "Uppermost Layer Left Curve".

### (3) Technical Effect of Build System

As described above, in the present example embodiment, the build system SYS may perform the rotation control operation for rotating the build unit area BSA. As a result, as described above, the build system SYS can appropriately build the linear build object whose width is equal to the target line width. Therefore, in a case where the rotation control operation is performed, the build accuracy of the build system SYS is improved, compared to a case where the rotation control operation is not performed.

In addition, the build system SYS may perform the irradiation condition change operation for changing the irradiation condition of the build light EL based on the build condition for building the build object. Therefore, the build system SYS can build the build object by using the appropriate irradiation condition based on the build condition, compared to a case where the irradiation condition of the build light EL is not changed based on the build condition.

### (4) Modified Example

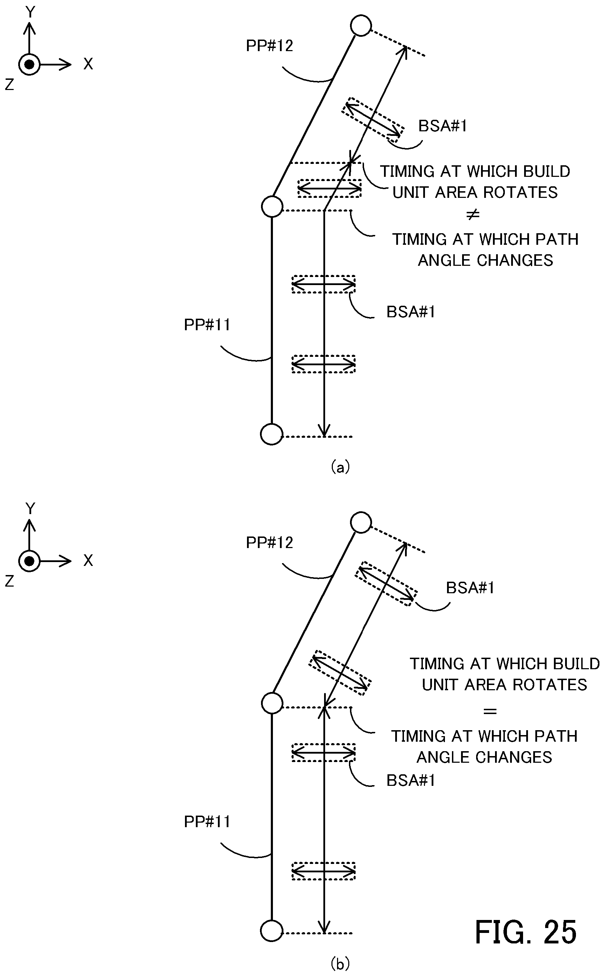

In a case where the first rotation control operation is performed as described above, the control unit 7 changes the rotational amount of the build unit area BSA#1 each time the path angle θ of the partial path PP changes. In this case, the control unit 7 typically changes the rotational amount of the build unit area BSA#1 by inputting, into the Galvano mirror 2146, a Galvano control signal that changes the rotational amount of the build unit area BSA#1. Here, in a case where the control unit 7 inputs the Galvano control signal into the Galvano mirror 2146 at a timing at which the path angle θ of the partial path PP changes, there is a possibility that the rotational amount of the build unit area BSA#1 cannot be changed at the timing at which the path angle θ of the partial path PP changes, depending on responsiveness of the Galvano mirror 2146. Typically, as illustrated in FIG. 25(a), there is a possibility that the control unit 7 cannot change the rotational amount of the build unit area BSA#1 after some time has passed since the path angle θ of the partial path PP changed, due to a control delay between a timing at which the Galvano control signal is input into the Galvano mirror 2146 and a timing at which the Galvano mirror 2146 starts operating based on the Galvano control signal. Therefore, the control unit 7 may input the Galvano control signal for changing the rotational amount of the build unit area BSA#1 into the Galvano mirror 2146 at a timing that is earlier by a delay time corresponding to the control delay. Specifically, the control unit 7 may input the Galvano control signal for changing the rotational amount of the build unit area BSA#1 into the Galvano mirror 2146 at a second timing that is earlier than a first timing at which the path angle θ of the partial path PP changes by the delay time. Namely, the control unit 7 may input the Galvano control signal for changing the rotational amount of the build unit area BSA#1 into the Galvano mirror 2146 at the second timing that is earlier than the first timing at which the rotational amount of the build unit area BSA#1 is changed by the delay time. As a result, as illustrated in FIG. 25(b), the control unit 7 can change the rotational amount of the build unit area BSA#1 at the first timing at which the path angle θ of the partial path PP changes, even in a case where there is the control delay of the Galvano mirror 2146. Incidentally, the control unit 7 may perform the same operation even in a case where the rotational amount of the build unit area BSA#2 is changed. The control unit 7 may perform the same operation even in a case where the second and third rotation control operations are performed.

In the above-described description, the build system SYS rotates the build unit area BSA by performing the rotation control operations. However, in a case where the shape of the build unit area BSA is circular shape (especially, a perfect circular shape) as illustrated in FIG. 6 (a), an orientation of the build unit area BSA does not change even in a case where the build unit area BSA is rotated. In a case where the shape of the build unit area BSA is the circular shape (especially, the perfect circular shape), the build system SYS may not rotate the build unit area BSA. In this case, the build system SYS may determine whether or not the shape of the build unit area BSA is the circular shape (especially, the perfect circular shape). In a case where it is determined that the shape of the build unit area BSA is the circular shape (especially, the perfect circular shape), the build system SYS may not rotate the build unit area BSA. On the other hand, in a case where it is determined that the shape of the build unit area BSA is not the circular shape (especially, the perfect circular shape), the build system SYS may rotate the build unit area BSA.

In the above-described description, the build system SYS rotates the build unit area BSA by performing the rotation control operations. Here, the build system SYS may perform a shape change operations for changing a shape of the build unit area BSA, in addition to the rotation control operations for rotating the build unit area BSA. Incidentally, the build system SYS may perform the shape change operation instead of the rotation control operation.

In the above-described description, the build unit 2 melts the build material M by irradiating the build material M with the build light EL. However, the build unit 2 may melt the build material M by irradiating the build material M with any energy beam. At least one of a charged particle beam, an electromagnetic wave and the like is one example of any energy beam. A least one of an electron beam, an ion beam and the like is one example of the charged particle beam.

In the above-described description, the build unit 2 builds the three-dimensional structural object ST by performing the additive manufacturing based on the Laser Metal Deposition. However, the build unit 2 may build the three-dimensional structural object ST by performing the additive manufacturing based on another method for building the three-dimensional structural object. At least one of a PBF (Powder Bed Fusion) such as a SLS (Selective Laser Sintering), a Binder Jetting, a Material Jetting, a SLA (Stereolithography), and a LMF (Laser Metal Fusion) is one example of another method for building the three-dimensional structural object. Alternatively, the build unit 2 may build the three-dimensional structural object ST by performing a subtractive manufacturing in addition to or instead of performing the additive manufacturing. The build unit 2 may build the three-dimensional structural object ST by performing a machining-processing in addition to or instead of performing at least one of the additive manufacturing and the subtractive manufacturing.

The build system SYS may perform both of the additive manufacturing and a subtracting manufacturing. For example, the build system SYS may perform the additive manufacturing by using either one of the build lights EL#1 and EL#2, and may perform the subtracting manufacturing by using the other one of the build lights EL#1 and EL#2. In this case, the build system SYS may perform the additive manufacturing and the subtracting manufacturing simultaneously. Incidentally, in a case where the build system SYS may not perform the additive manufacturing and the subtracting manufacturing simultaneously, the build system SYS may perform the additive manufacturing and the subtracting manufacturing by using the same build light EL.

The build system SYS may perform a remelt processing for reducing a flatness of the surface (namely, for reducing a surface roughness, for making the surface closer to a flat surface) of the workpiece W (alternatively, the build object built on the workpiece W) processed by the additive manufacturing or the subtractive manufacturing, in addition to or instead of at least one of the additive manufacturing and the subtractive manufacturing. For example, the build system SYS may perform at least one of the additive manufacturing and the subtractive manufacturing by using either one of the build lights EL#1 and EL#2, and may perform the remelt processing by using the other one of the build lights EL#1 and EL#2. In this case, the build system SYS may perform the remelt processing and at least one of the additive manufacturing and the subtractive manufacturing simultaneously. Incidentally, in a case where the build system SYS may not perform the remelt processing and at least one of the additive manufacturing and the subtracting manufacturing simultaneously, the build system SYS may perform the remelt processing and at least one of the additive manufacturing and the subtracting manufacturing by using the same build light EL.

The above-described build unit 2 (especially, the build head 21) may be attached to a robot. The robot may be an articulated robot, typically. For example, the build unit 2 (especially, the build head 21) may be attached to a welding robot for performing a welding. For example, the build unit 2 (especially, the build head 21) may be attached to a self-propelled mobile robot.

### (5) Supplementary Note

Regarding the above-described example embodiment, below described Supplementary notes are further disclosed.

### [Supplementary Note 1]

A build system including:
a build apparatus that is configured to build a build object on an object by irradiating a surface of the object with a build beam and supplying a build material to a melt pool that is formed on the object by the build beam; and
a control apparatus that is configured to control the build apparatus,
wherein
the control apparatus controls the build apparatus so that an irradiation position of the build beam on the surface of the object periodically moves in a build unit area that is set on the surface of the object and the build unit area moves on the surface of the object based on path information that indicates a movement trajectory of the build unit area, and
the control apparatus changes, based on the path information, a rotational amount of the build unit area around a rotational axis that intersects the surface of the object.

### [Supplementary Note 2]

The build system according to the Supplementary Note 1, wherein
the control apparatus sets the rotational amount of the build unit area moving along one movement trajectory to a rotational amount that is determined based on an intersection angle at which an axis along the one movement trajectory intersects a predetermined base axis.

### [Supplementary Note 3]

The build system according to the Supplementary Note 2, wherein
the control apparatus changes the rotational amount of the build unit area moving along the one movement trajectory each time the intersection angle changes by a predetermined angle.

### [Supplementary Note 4]

The build system according to the Supplementary Note 2 or 3, wherein
the build apparatus builds the build object by using a first irradiation condition as an irradiation condition of the build beam in a case where the intersection angle is a first angle, and
the build apparatus builds the build object by using a second irradiation condition as the irradiation condition of the build beam in a case where the intersection angle is a second angle that is different from the first angle.

### [Supplementary Note 5]

The build system according to the Supplementary Note 4, wherein
the build apparatus builds the build object by using a third irradiation condition as the irradiation condition of the build beam in a case where the intersection angle is a third angle that is different from the first and second angles.

### [Supplementary Note 6]

The build system according to the Supplementary Note 5, wherein
the first angle is 0 degrees,
the second angle is a positive angle, and
the third angle is a negative angle.

### [Supplementary Note 7]

The build system according to any one of the Supplementary Notes 1 to 6, wherein
the control apparatus controls the build apparatus to build, as the build object, a linear structural object, which extends along the movement trajectory of the build unit area, by moving the build unit area based on the path information,
the build apparatus builds the linear structural object whose width is a first width in a direction intersecting the movement trajectory by using a fourth irradiation condition as an irradiation condition of the build beam, and
the build apparatus builds the linear structural object whose width is a second width different from the first width in the direction intersecting the movement trajectory by using a fifth irradiation condition different from the fourth irradiation condition as the irradiation condition of the build beam.

### [Supplementary Note 8]

The build system according to any one of the Supplementary Notes 1 to 7, wherein
the control apparatus controls the build apparatus to build, as the build object, a three-dimensional structural object in which a plurality of structural layers are stacked,
the build apparatus builds a first structural layer of the plurality of structural layers by using a sixth irradiation condition as an irradiation condition of the build beam, and
the build apparatus builds a second structural layer, which is different from the first structural layer, of the plurality of structural layers by using a seventh irradiation condition different from the sixth irradiation condition as the irradiation condition of the build beam.

### [Supplementary Note 9]

The build system according to the Supplementary Note 8, wherein
the first structural layer includes at least one of an uppermost structural layer and a lowermost structural layer of the plurality of structural layers, and
the second structural layer includes another structural layer of the plurality of structural layers that is different from the uppermost structural layer and the lowermost structural layer.

### [Supplementary Note 10]

The build system according to any one of the Supplementary Notes 1 to 9, wherein
the build apparatus builds the build object by using an eighth irradiation condition as an irradiation condition of the build beam in a case where the build unit area moves along the movement trajectory whose length is a first length, and
the build apparatus builds the build object by using a ninth irradiation condition different from the eighth irradiation condition as the irradiation condition of the build beam in a case where the build unit area moves along the movement trajectory whose length is a second length different from the first length.

### [Supplementary Note 11]

The build system according to any one of the Supplementary Notes 1 to 10, wherein
the build apparatus includes: an irradiation optical system that is configured to emit the build beam; and a position change apparatus that is configured to change a positional relationship between the object and the irradiation optical system.

### [Supplementary Note 12]

The build system according to the Supplementary Note 11, wherein
the control apparatus controls the position change apparatus based on the path information so that the build object is formed on the object along the movement trajectory.

### [Supplementary Note 13]

The build system according to any one of the Supplementary Notes 1 to 12, wherein
a periodic movement of the irradiation position on the surface of the object includes a spatially periodic movement.

### [Supplementary Note 14]

The build system according to any one of the Supplementary Notes 1 to 12, wherein
a periodic movement of the irradiation position on the surface of the object includes a periodic movement along a time axis.

### [Supplementary Note 15]

The build system according to any one of the Supplementary Notes 1 to 14, wherein
the build apparatus includes a deflection optical system that is configured to move, on the surface of the object, the irradiation position of the build beam on the surface of the object by deflecting the build beam, and
the control apparatus controls the deflection optical system to change the rotational amount of the build unit area around the rotational axis at a first timing by inputting a control signal, which is for controlling the deflection optical system to change the rotational amount of the build unit area around the rotational axis, into the deflection optical system at a second timing that is earlier than the first timing at which the rotational amount of the build unit area around the rotational axis should be changed.

### [Supplementary Note 16]

A build system including:
a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and
a control apparatus that is configured to control the build apparatus,
wherein
the irradiation optical system includes a deflection optical system that is configured to move, on the surface of the object, an irradiation position of the build beam on the surface of the object by deflecting the build beam,
the position change apparatus is configured to move the irradiation position on the surface of the object by changing the positional relationship between the object and the irradiation optical system,
the control apparatus controls the position change apparatus so that the build object is formed on the object along a movement trajectory and controls the deflection optical system so that the irradiation position periodically moves on the surface of the object along a scanning direction that intersects the movement trajectory based on path information, and
the control apparatus controls the deflection optical system based on the path information to change the scanning direction around an rotational axis that intersects the surface of the object.

### [Supplementary Note 17]

The build system according to the Supplementary Note 16, wherein
the control apparatus controls the deflection optical system based on scanning control information, which indicates a scanning trajectory that is a trajectory of a periodic movement of the irradiation position by the deflection optical system, so that the irradiation position periodically moves along the scanning direction, and
the control apparatus rotates the scanning direction around the rotational axis by rotating the scanning trajectory around the rotational axis based on the path information.

### [Supplementary Note 18]

The build system according to the Supplementary Note 16 or 17, wherein
the control apparatus sets a rotational amount of the scanning direction in a period during which the irradiation position moves along one movement trajectory by the position change apparatus to a rotational amount that is determined based on an intersection angle at which an axis along the one movement trajectory intersects a predetermined base axis.

### [Supplementary Note 19]

The build system according to the Supplementary Note 18, wherein
the control apparatus changes the rotational amount of the scanning direction each time the intersection angle changes by a predetermined angle.

### [Supplementary Note 20]

The build system according to the Supplementary Note 18 or 19, wherein
the build apparatus builds the build object by using a first irradiation condition as an irradiation condition of the build beam in a case where the intersection angle is a first angle, and
the build apparatus builds the build object by using a second irradiation condition as the irradiation condition of the build beam in a case where the intersection angle is a second angle that is different from the first angle.

### [Supplementary Note 21]

The build system according to the Supplementary Note 20, wherein
the build apparatus builds the build object by using a third irradiation condition as the irradiation condition of the build beam in a case where the intersection angle is a third angle that is different from the first and second angles.

### [Supplementary Note 22]

The build system according to the Supplementary Note 21, wherein
the first angle is 0 degrees,
the second angle is a positive angle, and
the third angle is a negative angle.

### [Supplementary Note 23]

The build system according to any one of the Supplementary Notes 16 to 22, wherein
the control apparatus controls the build apparatus to build, as the build object, a linear structural object, which extends along the movement trajectory, by controlling the position change apparatus to move the irradiation position based on the path information,
the build apparatus builds the linear structural object whose width is a first width in a direction intersecting the movement trajectory by using a fourth irradiation condition as an irradiation condition of the build beam, and
the build apparatus builds the linear structural object whose width is a second width different from the first width in the direction intersecting the movement trajectory by using a fifth irradiation condition different from the fourth irradiation condition as the irradiation condition of the build beam.

### [Supplementary Note 24]

The build system according to any one of the Supplementary Notes 16 to 23, wherein
the control apparatus controls the build apparatus to build, as the build object, a three-dimensional structural object in which a plurality of structural layers are stacked,
the build apparatus builds a first structural layer of the plurality of structural layers by using a sixth irradiation condition as an irradiation condition of the build beam, and
the build apparatus builds a second structural layer, which is different from the first structural layer, of the plurality of structural layers by using a seventh irradiation condition different from the sixth irradiation condition as the irradiation condition of the build beam.

### [Supplementary Note 25]

The build system according to the Supplementary Note 24, wherein
the first structural layer includes at least one of an uppermost structural layer and a lowermost structural layer of the plurality of structural layers, and
the second structural layer includes another structural layer of the plurality of structural layers that is different from the uppermost structural layer and the lowermost structural layer.

### [Supplementary Note 26]

The build system according to any one of the Supplementary Notes 16 to 25, wherein
the build apparatus builds the build object by using an eighth irradiation condition as an irradiation condition of the build beam in a case where the irradiation position moves along the movement trajectory whose length is a first length by the position change apparatus, and
the build apparatus builds the build object by using a ninth irradiation condition different from the eighth irradiation condition as the irradiation condition of the build beam in a case where the irradiation position moves along the movement trajectory whose length is a second length different from the first length by the position change apparatus.

### [Supplementary Note 27]

The build system according to any one of the Supplementary Notes 16 to 16, wherein
a periodic movement of the irradiation position along the scanning direction includes a spatially periodic movement.

### [Supplementary Note 28]

The build system according to any one of the Supplementary Notes 16 to 26, wherein
a periodic movement of the irradiation position along the scanning direction includes a periodic movement along a time axis.

### [Supplementary Note 29]

The build system according to any one of the Supplementary Notes 16 to 28, wherein
the control apparatus controls the deflection optical system to change the scanning direction around the rotational axis at a first timing by inputting a control signal, which is for controlling the deflection optical system to change the scanning direction around the rotational axis, into the deflection optical system at a second timing that is earlier than the first timing at which the scanning direction should be changed around the rotational axis.

### [Supplementary Note 30]

A build system including:
a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and
a control apparatus that is configured to control the build apparatus,
wherein
the irradiation optical system includes: a terminal optical system including an emitting surface; and a deflection optical system that is configured to move at least one of an emitting position and an emitting angle from / at which the terminal optical element emits the build beam by deflecting the build beam,
the position change apparatus is configured to move the irradiation position on the surface of the object by changing the positional relationship between the object and the irradiation optical system,
the control apparatus controls the position change apparatus based on path information so that the build object is formed on the object along a movement trajectory and controls the deflection optical system to change a movement direction, along which the emitting position periodically moves on the emitting surface, based on the path information.

### [Supplementary Note 31]

The build system according to the Supplementary Note 30, wherein
a periodic movement of the emitting position on the surface of the object includes a spatially periodic movement.

### [Supplementary Note 32]

The build system according to the Supplementary Note 30, wherein
a periodic movement of the emitting position on the surface of the object includes a periodic movement along a time axis.

### [Supplementary Note 33]

A build system including:
a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and
a control apparatus that is configured to control the build apparatus,
wherein
the irradiation optical system includes a deflection optical system that is configured to move an irradiation position of the build beam by deflecting the build beam,
the position change apparatus is configured to move the irradiation position by changing the positional relationship between the object and the irradiation optical system,
the control apparatus controls the position change apparatus so that the build object is formed on the object along a movement trajectory and controls the deflection optical system so that the irradiation position periodically moves on the surface of the object along a scanning direction that intersects the movement trajectory based on path information, and
the control apparatus controls the position change apparatus so that the irradiation position moves along the movement trajectory based on the path information and controls a change of a movement of a direction along which the irradiation position intersects the movement trajectory based on the path information.

### [Supplementary Note 34]

The build system according to the Supplementary Note 33, wherein
the control apparatus controls, based on the path information, a timing at which the direction along which the irradiation position intersects the movement trajectory is changed.

### [Supplementary Note 35]

The build system according to the Supplementary Note 33 or 34, wherein
the control apparatus controls, based on the path information, a timing at which the direction along which the irradiation position intersects the movement trajectory is changed from a first direction to a second direction.

### [Supplementary Note 36]

The build system according to any one of the Supplementary Notes 33 to 35, wherein
the control apparatus changes, based on the path information, from a state where the irradiation position is controlled to move in a first pattern along a first direction that intersects the movement trajectory to a state where the irradiation position is controlled to move in the first pattern along a second direction that intersects the movement trajectory and that is different form the first direction.

### [Supplementary Note 37]

The build system according to any one of the Supplementary Notes 33 to 35, wherein
the control apparatus changes, based on the path information, from a state where the irradiation position is controlled to move in a first pattern along a direction intersecting the movement trajectory to a state where the irradiation position is controlled to move in a second pattern that is different from the first pattern.

### [Supplementary Note 38]

The build system according to any one of the Supplementary Notes 33 to 37, wherein
a periodic movement of the irradiation position along the direction intersecting the movement trajectory includes a spatially periodic movement.

### [Supplementary Note 39]

A build system including:
a build apparatus that includes: an irradiation optical system that is configured to irradiate a surface of an object with a build beam; and a position change apparatus that is configured to change an emitting position from which a terminal optical element of the irradiation optical system emits the build beam, and that is configured to build a build object on the object by supplying a build material to a melt pool formed on the object by the build beam; and
a control apparatus that is configured to control the build apparatus,
wherein
the irradiation optical system includes a deflection optical system,
the deflection optical system is configured to change an emitting angle of the build beam,
the position change apparatus is configured to move the irradiation position by changing the positional relationship between the object and the irradiation optical system,
the control apparatus controls the position change apparatus based on the path information so that the build object is formed on the object along a movement trajectory and controls a periodic change of the emitting angle based on the path information.

### [Supplementary Note 40]

A build method for building a build object by using a build apparatus that is configured to build the build object on an object by irradiating a surface of the object with a build beam and supplying a build material to a melt pool that is formed on the object by the build beam,
wherein
the build method includes:
controlling the build apparatus so that an irradiation position of the build beam on the surface of the object periodically moves in a build unit area that is set on the surface of the object and the build unit area moves on the surface of the object based on path information that indicates a movement trajectory of the build unit area; and
changing, based on the path information, a rotational amount of the build unit area around a rotational axis that intersects the surface of the object.

### [Supplementary Note 41]

A build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam,
wherein
the irradiation optical system includes a deflection optical system that is configured to move, on the surface of the object, an irradiation position of the build beam on the surface of the object by deflecting the build beam,
the position change apparatus is configured to move the irradiation position on the surface of the object by changing the positional relationship between the object and the irradiation optical system,
the build method includes:
   controlling the position change apparatus so that the build object is formed on the object along a movement trajectory and controlling the deflection optical system so that the irradiation position periodically moves on the surface of the object along a scanning direction that intersects the movement trajectory based on path information; and
   controlling the deflection optical system based on the path information to change the scanning direction around an rotational axis that intersects the surface of the object.

### [Supplementary Note 42]

A build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam,
wherein
the irradiation optical system includes: a terminal optical system including an emitting surface; and a deflection optical system that is configured to move at least one of an emitting position and an emitting angle from / at which the terminal optical element emits the build beam by deflecting the build beam,
the position change apparatus is configured to move the irradiation position on the surface of the object by changing the positional relationship between the object and the irradiation optical system,
the build method includes:
   controls the position change apparatus based on path information so that the build object is formed on the object along a movement trajectory; and
   controlling the deflection optical system to change a movement direction, along which the emitting position periodically moves on the emitting surface, based on the path information.

### [Supplementary Note 43]

A build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam,
wherein
the irradiation optical system includes a deflection optical system that is configured to move an irradiation position of the build beam by deflecting the build beam,
the position change apparatus is configured to move the irradiation position by changing the positional relationship between the object and the irradiation optical system,
the build method includes:
   controlling the position change apparatus so that the build object is formed on the object along a movement trajectory and controlling the deflection optical system so that the irradiation position periodically moves on the surface of the object along a scanning direction that intersects the movement trajectory based on path information; and
   controlling the position change apparatus so that the irradiation position moves along the movement trajectory based on the path information and controlling a change of a movement of a direction along which the irradiation position intersects the movement trajectory based on the path information.

### [Supplementary Note 44]

A build method for building a build object by using a build apparatus that includes: an irradiation optical system that is configured to irradiate a surface of an object with a build beam; and a position change apparatus that is configured to change an emitting position from which a terminal optical element of the irradiation optical system emits the build beam, and that is configured to build the build object on the object by supplying a build material to a melt pool formed on the object by the build beam,
wherein
the irradiation optical system includes a deflection optical system,
the deflection optical system is configured to change an emitting angle of the build beam,
the position change apparatus is configured to move the irradiation position by changing the positional relationship between the object and the irradiation optical system,
the build method includes:
   controlling the position change apparatus based on the path information so that the build object is formed on the object along a movement trajectory; and
   controlling a periodic change of the emitting angle based on the path information.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a build system, which involves such changes, is also intended to be within the technical scope of the present invention.

### Description of Reference Codes

- SYS: build system
- 2: build unit
- 21: build head
- 211: irradiation optical system
- 2146, 2156: Galvano mirror
- 2162: fθ lens
- 212: material nozzle
- 7: control unit
- 700: path information
- W: workpiece
- MS: build surface
- EL: build light
- MP: melt pool
- BSA: build unit area
- P: processing path
- PP: partial path

## Claims

1. A build system comprising:
a build apparatus that is configured to build a build object on an object by irradiating a surface of the object with a build beam and supplying a build material to a melt pool that is formed on the object by the build beam; and
a control apparatus that is configured to control the build apparatus,
wherein
the control apparatus controls the build apparatus so that an irradiation position of the build beam on the surface of the object periodically moves in a build unit area that is set on the surface of the object and the build unit area moves on the surface of the object based on path information that indicates a movement trajectory of the build unit area, and
the control apparatus changes, based on the path information, a rotational amount of the build unit area around a rotational axis that intersects the surface of the object.

2. The build system according to claim 1, wherein
the control apparatus sets the rotational amount of the build unit area moving along one movement trajectory to a rotational amount that is determined based on an intersection angle at which an axis along the one movement trajectory intersects a predetermined base axis.

3. The build system according to claim 2, wherein
the control apparatus changes the rotational amount of the build unit area moving along the one movement trajectory each time the intersection angle changes by a predetermined angle.

4. The build system according to claim 2 or 3, wherein
the build apparatus builds the build object by using a first irradiation condition as an irradiation condition of the build beam in a case where the intersection angle is a first angle, and
the build apparatus builds the build object by using a second irradiation condition as the irradiation condition of the build beam in a case where the intersection angle is a second angle that is different from the first angle.

5. The build system according to claim 4, wherein
the build apparatus builds the build object by using a third irradiation condition as the irradiation condition of the build beam in a case where the intersection angle is a third angle that is different from the first and second angles.

6. The build system according to claim 5, wherein
the first angle is 0 degrees,
the second angle is a positive angle, and
the third angle is a negative angle.

7. The build system according to any one of claims 1 to 6, wherein
the control apparatus controls the build apparatus to build, as the build object, a linear structural object, which extends along the movement trajectory of the build unit area, by moving the build unit area based on the path information,
the build apparatus builds the linear structural object whose width is a first width in a direction intersecting the movement trajectory by using a fourth irradiation condition as an irradiation condition of the build beam, and
the build apparatus builds the linear structural object whose width is a second width different from the first width in the direction intersecting the movement trajectory by using a fifth irradiation condition different from the fourth irradiation condition as the irradiation condition of the build beam.

8. The build system according to any one of claims 1 to 7, wherein
the control apparatus controls the build apparatus to build, as the build object, a three-dimensional structural object in which a plurality of structural layers are stacked,
the build apparatus builds a first structural layer of the plurality of structural layers by using a sixth irradiation condition as an irradiation condition of the build beam, and
the build apparatus builds a second structural layer, which is different from the first structural layer, of the plurality of structural layers by using a seventh irradiation condition different from the sixth irradiation condition as the irradiation condition of the build beam.

9. The build system according to claim 8, wherein
the first structural layer includes at least one of an uppermost structural layer and a lowermost structural layer of the plurality of structural layers, and
the second structural layer includes another structural layer of the plurality of structural layers that is different from the uppermost structural layer and the lowermost structural layer.

10. The build system according to any one of claims 1 to 9, wherein
the build apparatus builds the build object by using an eighth irradiation condition as an irradiation condition of the build beam in a case where the build unit area moves along the movement trajectory whose length is a first length, and
the build apparatus builds the build object by using a ninth irradiation condition different from the eighth irradiation condition as the irradiation condition of the build beam in a case where the build unit area moves along the movement trajectory whose length is a second length different from the first length.

11. The build system according to any one of claims 1 to 10, wherein
the build apparatus includes: an irradiation optical system that is configured to emit the build beam; and a position change apparatus that is configured to change a positional relationship between the object and the irradiation optical system.

12. The build system according to claim 11, wherein
the control apparatus controls the position change apparatus based on the path information so that the build object is formed on the object along the movement trajectory.

13. The build system according to any one of claims 1 to 12, wherein
a periodic movement of the irradiation position on the surface of the object includes a spatially periodic movement.

14. The build system according to any one of claims 1 to 12, wherein
a periodic movement of the irradiation position on the surface of the object includes a periodic movement along a time axis.

15. The build system according to any one of claims 1 to 14, wherein
the build apparatus includes a deflection optical system that is configured to move, on the surface of the object, the irradiation position of the build beam on the surface of the object by deflecting the build beam, and
the control apparatus controls the deflection optical system to change the rotational amount of the build unit area around the rotational axis at a first timing by inputting a control signal, which is for controlling the deflection optical system to change the rotational amount of the build unit area around the rotational axis, into the deflection optical system at a second timing that is earlier than the first timing at which the rotational amount of the build unit area around the rotational axis should be changed.

16. A build system comprising:
a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and
a control apparatus that is configured to control the build apparatus,
wherein
the irradiation optical system includes a deflection optical system that is configured to move, on the surface of the object, an irradiation position of the build beam on the surface of the object by deflecting the build beam,
the position change apparatus is configured to move the irradiation position on the surface of the object by changing the positional relationship between the object and the irradiation optical system,
the control apparatus controls the position change apparatus so that the build object is formed on the object along a movement trajectory and controls the deflection optical system so that the irradiation position periodically moves on the surface of the object along a scanning direction that intersects the movement trajectory based on path information, and
the control apparatus controls the deflection optical system based on the path information to change the scanning direction around an rotational axis that intersects the surface of the object.

17. The build system according to claim 16, wherein
the control apparatus controls the deflection optical system based on scanning control information, which indicates a scanning trajectory that is a trajectory of a periodic movement of the irradiation position by the deflection optical system, so that the irradiation position periodically moves along the scanning direction, and
the control apparatus rotates the scanning direction around the rotational axis by rotating the scanning trajectory around the rotational axis based on the path information.

18. The build system according to claim 16 or 17, wherein
the control apparatus sets a rotational amount of the scanning direction in a period during which the irradiation position moves along one movement trajectory by the position change apparatus to a rotational amount that is determined based on an intersection angle at which an axis along the one movement trajectory intersects a predetermined base axis.

19. The build system according to claim 18, wherein
the control apparatus changes the rotational amount of the scanning direction each time the intersection angle changes by a predetermined angle.

20. The build system according to claim 18 or 19, wherein
the build apparatus builds the build object by using a first irradiation condition as an irradiation condition of the build beam in a case where the intersection angle is a first angle, and
the build apparatus builds the build object by using a second irradiation condition as the irradiation condition of the build beam in a case where the intersection angle is a second angle that is different from the first angle.

21. The build system according to claim 20, wherein
the build apparatus builds the build object by using a third irradiation condition as the irradiation condition of the build beam in a case where the intersection angle is a third angle that is different from the first and second angles.

22. The build system according to claim 21, wherein
the first angle is 0 degrees,
the second angle is a positive angle, and
the third angle is a negative angle.

23. The build system according to any one of claims 16 to 22, wherein
the control apparatus controls the build apparatus to build, as the build object, a linear structural object, which extends along the movement trajectory, by controlling the position change apparatus to move the irradiation position based on the path information,
the build apparatus builds the linear structural object whose width is a first width in a direction intersecting the movement trajectory by using a fourth irradiation condition as an irradiation condition of the build beam, and
the build apparatus builds the linear structural object whose width is a second width different from the first width in the direction intersecting the movement trajectory by using a fifth irradiation condition different from the fourth irradiation condition as the irradiation condition of the build beam.

24. The build system according to any one of claims 16 to 23, wherein
the control apparatus controls the build apparatus to build, as the build object, a three-dimensional structural object in which a plurality of structural layers are stacked,
the build apparatus builds a first structural layer of the plurality of structural layers by using a sixth irradiation condition as an irradiation condition of the build beam, and
the build apparatus builds a second structural layer, which is different from the first structural layer, of the plurality of structural layers by using a seventh irradiation condition different from the sixth irradiation condition as the irradiation condition of the build beam.

25. The build system according to claim 24, wherein
the first structural layer includes at least one of an uppermost structural layer and a lowermost structural layer of the plurality of structural layers, and
the second structural layer includes another structural layer of the plurality of structural layers that is different from the uppermost structural layer and the lowermost structural layer.

26. The build system according to any one of claims 16 to 25, wherein
the build apparatus builds the build object by using an eighth irradiation condition as an irradiation condition of the build beam in a case where the irradiation position moves along the movement trajectory whose length is a first length by the position change apparatus, and
the build apparatus builds the build object by using a ninth irradiation condition different from the eighth irradiation condition as the irradiation condition of the build beam in a case where the irradiation position moves along the movement trajectory whose length is a second length different from the first length by the position change apparatus.

27. The build system according to any one of claims 16 to 16, wherein
a periodic movement of the irradiation position along the scanning direction includes a spatially periodic movement.

28. The build system according to any one of claims 16 to 26, wherein
a periodic movement of the irradiation position along the scanning direction includes a periodic movement along a time axis.

29. The build system according to any one of claims 16 to 28, wherein
the control apparatus controls the deflection optical system to change the scanning direction around the rotational axis at a first timing by inputting a control signal, which is for controlling the deflection optical system to change the scanning direction around the rotational axis, into the deflection optical system at a second timing that is earlier than the first timing at which the scanning direction should be changed around the rotational axis.

30. A build system comprising:
a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and
a control apparatus that is configured to control the build apparatus,
wherein
the irradiation optical system includes: a terminal optical system including an emitting surface; and a deflection optical system that is configured to move at least one of an emitting position and an emitting angle from / at which the terminal optical element emits the build beam by deflecting the build beam,
the position change apparatus is configured to move the irradiation position on the surface of the object by changing the positional relationship between the object and the irradiation optical system,
the control apparatus controls the position change apparatus based on path information so that the build object is formed on the object along a movement trajectory and controls the deflection optical system to change a movement direction, along which the emitting position periodically moves on the emitting surface, based on the path information.

31. The build system according to claim 30, wherein
a periodic movement of the emitting position on the surface of the object includes a spatially periodic movement.

32. The build system according to claim 30, wherein
a periodic movement of the emitting position on the surface of the object includes a periodic movement along a time axis.

33. A build system comprising:
a build apparatus that includes: an irradiation optical system that is configured to irradiate a surface of an object with a build beam; and a position change apparatus that is configured to change a positional relationship between the object and the irradiation optical system, and that is configured to build a build object on the object by supplying a build material to a melt pool formed on the object by the build beam; and
a control apparatus that is configured to control the build apparatus,
wherein
the irradiation optical system includes a deflection optical system that is configured to move an irradiation position of the build beam by deflecting the build beam,
the position change apparatus is configured to move the irradiation position by changing the positional relationship between the object and the irradiation optical system,
the control apparatus controls the position change apparatus so that the build object is formed on the object along a movement trajectory and controls the deflection optical system so that the irradiation position periodically moves on the surface of the object along a scanning direction that intersects the movement trajectory based on path information, and
the control apparatus controls the position change apparatus so that the irradiation position moves along the movement trajectory based on the path information and controls a change of a movement of a direction along which the irradiation position intersects the movement trajectory based on the path information.

34. The build system according to claim 33, wherein
the control apparatus controls, based on the path information, a timing at which the direction along which the irradiation position intersects the movement trajectory is changed.

35. The build system according to claim 33 or 34, wherein
the control apparatus controls, based on the path information, a timing at which the direction along which the irradiation position intersects the movement trajectory is changed from a first direction to a second direction.

36. The build system according to any one of claims 33 to 35, wherein
the control apparatus changes, based on the path information, from a state where the irradiation position is controlled to move in a first pattern along a first direction that intersects the movement trajectory to a state where the irradiation position is controlled to move in the first pattern along a second direction that intersects the movement trajectory and that is different form the first direction.

37. The build system according to any one of claims 33 to 35, wherein
the control apparatus changes, based on the path information, from a state where the irradiation position is controlled to move in a first pattern along a direction intersecting the movement trajectory to a state where the irradiation position is controlled to move in a second pattern that is different from the first pattern.

38. The build system according to any one of claims 33 to 37, wherein
a periodic movement of the irradiation position along the direction intersecting the movement trajectory includes a spatially periodic movement.

39. A build system comprising:
a build apparatus that includes: an irradiation optical system that is configured to irradiate a surface of an object with a build beam; and a position change apparatus that is configured to change an emitting position from which a terminal optical element of the irradiation optical system emits the build beam, and that is configured to build a build object on the object by supplying a build material to a melt pool formed on the object by the build beam; and
a control apparatus that is configured to control the build apparatus,
wherein
the irradiation optical system includes a deflection optical system,
the deflection optical system is configured to change an emitting angle of the build beam,
the position change apparatus is configured to move the irradiation position by changing the positional relationship between the object and the irradiation optical system,
the control apparatus controls the position change apparatus based on the path information so that the build object is formed on the object along a movement trajectory and controls a periodic change of the emitting angle based on the path information.

40. A build method for building a build object by using a build apparatus that is configured to build the build object on an object by irradiating a surface of the object with a build beam and supplying a build material to a melt pool that is formed on the object by the build beam,
wherein
the build method comprises:
controlling the build apparatus so that an irradiation position of the build beam on the surface of the object periodically moves in a build unit area that is set on the surface of the object and the build unit area moves on the surface of the object based on path information that indicates a movement trajectory of the build unit area; and
changing, based on the path information, a rotational amount of the build unit area around a rotational axis that intersects the surface of the object.

41. A build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam,
wherein
the irradiation optical system includes a deflection optical system that is configured to move, on the surface of the object, an irradiation position of the build beam on the surface of the object by deflecting the build beam,
the position change apparatus is configured to move the irradiation position on the surface of the object by changing the positional relationship between the object and the irradiation optical system,
the build method comprises:
controlling the position change apparatus so that the build object is formed on the object along a movement trajectory and controlling the deflection optical system so that the irradiation position periodically moves on the surface of the object along a scanning direction that intersects the movement trajectory based on path information; and
controlling the deflection optical system based on the path information to change the scanning direction around an rotational axis that intersects the surface of the object.

42. A build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam,
wherein
the irradiation optical system includes: a terminal optical system including an emitting surface; and a deflection optical system that is configured to move at least one of an emitting position and an emitting angle from / at which the terminal optical element emits the build beam by deflecting the build beam,
the position change apparatus is configured to move the irradiation position on the surface of the object by changing the positional relationship between the object and the irradiation optical system,
the build method comprises:
controls the position change apparatus based on path information so that the build object is formed on the object along a movement trajectory; and
controlling the deflection optical system to change a movement direction, along which the emitting position periodically moves on the emitting surface, based on the path information.

43. A build method for building a build object by using a build apparatus that includes: an irradiation optical system that is configured to irradiate a surface of an object with a build beam; and a position change apparatus that is configured to change a positional relationship between the object and the irradiation optical system, and that is configured to build the build object on the object by supplying a build material to a melt pool formed on the object by the build beam,
wherein
the irradiation optical system includes a deflection optical system that is configured to move an irradiation position of the build beam by deflecting the build beam,
the position change apparatus is configured to move the irradiation position by changing the positional relationship between the object and the irradiation optical system,
the build method comprises:
controlling the position change apparatus so that the build object is formed on the object along a movement trajectory and controlling the deflection optical system so that the irradiation position periodically moves on the surface of the object along a scanning direction that intersects the movement trajectory based on path information; and
controlling the position change apparatus so that the irradiation position moves along the movement trajectory based on the path information and controlling a change of a movement of a direction along which the irradiation position intersects the movement trajectory based on the path information.

44. A build method for building a build object by using a build apparatus that includes: an irradiation optical system that is configured to irradiate a surface of an object with a build beam; and a position change apparatus that is configured to change an emitting position from which a terminal optical element of the irradiation optical system emits the build beam, and that is configured to build the build object on the object by supplying a build material to a melt pool formed on the object by the build beam,
wherein
the irradiation optical system includes a deflection optical system,
the deflection optical system is configured to change an emitting angle of the build beam, the position change apparatus is configured to move the irradiation position by changing the positional relationship between the object and the irradiation optical system,
the build method comprises:
controlling the position change apparatus based on the path information so that the build object is formed on the object along a movement trajectory; and
controlling a periodic change of the emitting angle based on the path information.
